# EUROPEAN PATENT SPECIFICATION

(11) **EP 4 654 917 B1**
(45) Date of publication and mention of the grant of the patent: **19.08.2026**
(21) Application number: 24702078.7
(22) Date of filing: 24.01.2024
(51) Int. Cl.: A61C 7/00, A61C 13/00

(54) **DETERMINING PARAMETERS OF ORTHO-RESTORATIVE MEASURES**
BESTIMMUNG VON PARAMETERN ORTHO-RESTORATIVER MASSNAHMEN
DÉTERMINATION DE PARAMÈTRES DE MESURES ORTHO-RESTAURATIVES

(30) Priority: 26.01.2023 US 202318101831
(43) Date of publication of application: 03.12.2025
(73) Proprietor: Exocad GmbH, 64295 Darmstadt (DE)
(72) Inventor: MOLL, Esther, 88447 Warthausen (DE); GERTH, Maik, 64342 Seeheim-Jugenheim (DE); STEINBRECHER, Tillmann, 64342 Seeheim-Jugenheim (DE); ANNUCCI, Marco, 00138 Rome (IT)
(74) Representative: Richardt Patentanwälte PartG mbB
(86) International application number: PCT/EP2024/051604
(87) International publication number: WO 2024/156729

(56) References cited:
- WO-A1-2009/048475
- US-A1- 2022 392 645

## Description

### FIELD OF THE INVENTION

The invention relates to the field of dental technology, in particular to a computer-based determining of parameters of orthodontic measures as well as restorative measures.

### BACKGROUND

In modern dental technology, computer-based approaches are used for determining parameters of measures to be applied to a tooth. Such measures may, e.g., comprise orthodontic measures to be used for adjusting a position and/or orientation of the tooth. Furthermore, such measures may comprise restorative measures to be used for restoring and/or adjusting function, integrity, and/or morphology of the tooth, e.g., of a missing structure of the tooth.
WO 2009/048475 A1 describes a system and a method for developing a treatment plan for achieving a treatment goal including creating a virtual model of a dental patient's dentition, transforming the virtual model of the dentition using virtual prosthodontics to facilitate achievement of the treatment goal, transforming the virtual model of the dentition using virtual orthodontics to facilitate achievement of the treatment goal, iterating on the transforming steps until substantially achieving the treatment goal, and generating an orthodontic treatment plan and a prosthodontic treatment plan based upon the substantially achieved treatment goal.
US 2022/392645 A1 describes a computer system for providing a treatment proposal for a dentition of a patient. The computer system is configured to provide an current state model of the dentition and a target state model of the dentition, to provide a set of treatment options for treating the dentition, to check the provided treatment options, wherein the checking comprises determining whether the dentition of the patient is meeting the feasibility requirements assigned to the treatment option being checked, in case the dentition is determined to meet the feasibility requirements assigned to the treatment option being checked, to provide the treatment proposal identifying the respective treatment option and implementation parameters determined for the measures of the identified treatment option for modifying the current state model such that one or more discrepancies of the current state model relative to the target state model are compensated.

It is an objective to provide for a method for determining one or more parameters of one or more ortho-restorative measures to be applied to a tooth, a computer program product for determining one or more parameters of one or more ortho-restorative measures to be applied to a tooth, a computer device for determining one or more parameters of one or more ortho-restorative measures to be applied to a tooth, and a system comprising such a computer device.

### SUMMARY

The invention is as defined in the appended claims.

In one aspect, the invention relates to a computer-implemented method for determining one or more parameters of one or more ortho-restorative measures to be applied to a tooth. The one or more ortho-restorative measures comprising an orthodontic adjustment of a position of the tooth within a dentition.

The method comprises a receiving of a three-dimensional digital tooth model descriptive of a current form and a current position of the tooth within the dentition, a receiving of a three-dimensional digital restorative tooth model defining a target form and a target position of the tooth to be achieved by the one or more ortho-restorative measures, a determining of a three-dimensional digital reduced restorative tooth model using the three-dimensional digital restorative tooth model, which is reduced by a predefined minimum volume required for receiving a dental restoration element for obtaining the target form of the tooth, a determining of a core section of the three-dimensional digital tooth model to be excluded from preparation, a determining of one or more orthodontic parameters descriptive of the orthodontic adjustment of the position of the three-dimensional digital tooth model with at least a part of the core section of the orthodontically adjusted three-dimensional digital tooth model fitting into the three-dimensional digital reduced restorative tooth model, and an outputting of the one or more orthodontic parameters.

Examples may have the beneficial effect, that using a three-dimensional digital reduced restorative tooth model and a core section of the three-dimensional digital tooth model for determining the orthodontic adjustment described by the orthodontic parameters may provide a direct check, whether a conflict occurs between two basic requirements, i.e., the requirement of providing sufficient free space, e.g., by preparation, for the dental restoration element at the one hand and protecting a core of the tooth from preparation at the other hand. A sufficient predefined minimum of free space required for being able to arrange the dental restoration element is defined by the predefined minimum volume. Thus, the three-dimensional digital reduced restorative tooth model defines a volume that does not conflict with the requirement of providing sufficient free space for the dental restoration element. The respective free space is taken into account by reducing the three-dimensional digital restorative tooth model resulting in the three-dimensional digital reduced restorative tooth model. For example, the predefined minimum volume is subtracted from the three-dimensional digital restorative tooth model. For example, an outer layer or layer segment of the three-dimensional digital restorative tooth model with a predefined thickness may be determined and subtracted from the three-dimensional digital restorative tooth model. This outer layer or layer segment with the predefined thickness may define the predefined minimum volume.

For parts of the three-dimensional digital tooth model being moved into the three-dimensional digital reduced restorative tooth model by the orthodontic adjustment as well as parts of the three-dimensional digital tooth model remaining within the three-dimensional digital reduced restorative tooth model despite of the orthodontic adjustment, there may be no requirement to prepare these parts, i.e., remove tooth material from these parts, in order to provide space for the dental restoration element. Parts of the three-dimensional digital tooth model extending beyond the limit defined by the three-dimensional digital reduced restorative tooth model after the orthodontic adjustment may have to be removed, e.g., grinded down when preparing the tooth, in order to provide at least a sufficient minimum of free space for arranging the dental restoration element.

If the complete core section of the orthodontically adjusted three-dimensional digital tooth model fits into the three-dimensional digital reduced restorative tooth model, i.e., the complete core section is arranged within the three-dimensional digital reduced restorative tooth model, there is no conflict between being able to provide a sufficient minimum of free space for the dental restoration element and being able to protect the core section from preparation.

If the core section of the orthodontically adjusted three-dimensional digital tooth model does not completely fit into the three-dimensional digital reduced restorative tooth model, i.e., not the complete core section is arranged within the three-dimensional digital reduced restorative tooth model, a conflict occurs between being able to provide a sufficient minimum of free space for the dental restoration element and being able to protect the core section from preparation. In order to resolve this conflict and being able to protect the core section from preparation, the three-dimensional digital reduced restorative tooth model may be adjusted, e.g., extended and/or moved, to comprise the complete core section of the orthodontically adjusted three-dimensional digital tooth model. Adjusting the three-dimensional digital reduced restorative tooth model results in an adjustment of the three-dimensional digital restorative tooth model.

Such an adjustment of the three-dimensional digital reduced restorative tooth model and the three-dimensional digital restorative tooth model may, e.g., only be taken into account, when the core section of the orthodontically adjusted three-dimensional digital tooth model does not completely fit into the three-dimensional digital reduced restorative tooth model. A reason may e.g., be that a limit for the orthodontic adjustment is reached. Thus, compromises of adjusting the three-dimensional digital restorative tooth model, i.e., the target form and/or a target position of the tooth to be achieved, may, e.g., only be required in case of an insufficient orthodontic adjustment, i.e., insufficient orthodontic measures at hand.

The orthodontic parameters descriptive of the orthodontic adjustment under consideration, i.e., the adjustment of the position of the tooth, are output. These parameters may be used for designing, generating and/or adjusting one or more orthodontic appliances, e.g., fixed or removable appliances, to be used for orthodontically adjusting the tooth as defined by the orthodontic parameters. For example, the orthodontic parameters may be used for providing a treatment plan descriptive of the orthodontic measures to be applied for orthodontically adjusting the tooth as defined by the respective orthodontic parameters. The orthodontic parameter may, e.g., be used to illustrate effects, advantages and/or requirements of the orthodontic measures for a dentist and/or a patient. These orthodontic measures may be applied in preparation of one or more restorative measures.

The orthodontic adjustment may comprise an adjustment of a position and/or an alignment of the tooth within the patient's dentition. For example, a limit may be defined for the orthodontic adjustment and thus for the orthodontic parameters. This limit may, e.g., depend on the orthodontic measures under consideration. The limit may be descriptive of a maximum range for a lateral movement of the tooth comprised by the orthodontic adjustment. The limit may be descriptive of a maximum range of a rotation of the tooth comprised by the orthodontic adjustment. The maximum range of rotation may, e.g., comprise a maximum range of rotation for one axis of rotation, two axes of rotation or three axes of rotation. The axes of rotation may be perpendicular to each other. The axes of rotation may, e.g., comprise an axis extending in occlusal direction, an axis extending in approximal direction and/or an axis extending in vestibular/oral direction.

The orthodontic measures may comprise a use of one or more orthodontic appliances, e.g., fixed or removable appliances. Fixed appliances may, e.g., be fixed in place with braces that are adhesively bonded to the teeth. Removable appliances comprise, e.g., removable retainers and clear removable aligners. For example, a set of clear removable aligners may be used to move a tooth stepwise to a target position. A treatment plan may define a set of clear removable aligners to be used successively to move a tooth stepwise to the target position.

Using the three-dimensional digital reduced restorative tooth model, it may be assessed, where the core section of the three-dimensional digital tooth model, i.e., a core section of the natural tooth resembled by the respective model, will be located after the tooth is moved orthodontically using orthodontic measures as defined by the orthodontic parameters. This core section is excluded from preparation, i.e., defines a section of the tooth protected from preparation. For example, the core section may comprise a pulp chamber of the tooth. Through the orthodontic movement of the tooth, it may or it may not be possible to arrange the entire core section within the three-dimensional digital reduced restorative tooth model. The three-dimensional digital reduced restorative tooth model is reduced by a predefined minimum volume required for receiving a dental restoration element. This predefined minimum volume may, e.g., be defined using a predefined minimal thickness required for a predefined restoration material to be used for manufacturing the respective dental restoration model.

In case it may not be possible to arrange the entire core section within the three-dimensional digital reduced restorative tooth model, the software may avoid recommending the respective orthodontic movement of the tooth. Alternatively, the three-dimensional digital restorative tooth model, i.e., the target state to be achieved by the ortho-restorative measurements may be updated with an adjusted version of the three-dimensional digital restorative tooth model. For this purpose, the three-dimensional digital reduced restorative tooth model may be updated with an adjusted three-dimensional digital reduced restorative tooth model, which has been adjusted, e.g., extended and/or moved, such that it comprises the complete core section of the orthodontically adjusted three-dimensional digital tooth model. The adjusted three-dimensional digital reduced restorative tooth model may be used to determine an adjusted three-dimensional digital restorative tooth model such that a reduction of the adjusted three-dimensional digital restorative tooth model by an adjusted predefined minimum volume results in the adjusted three-dimensional digital restorative tooth model. The three-dimensional digital restorative tooth model may be updated with the resulting adjusted three-dimensional digital restorative tooth model. For example, an approach inverse to the determining of the three-dimensional digital reduced restorative tooth model using the three-dimensional digital restorative tooth model may be used to determine the adjusted three-dimensional digital restorative tooth model using the adjusted the three-dimensional digital reduced restorative tooth model. For example, an outer layer or layer segment with a predefined thickness may be added to the adjusted three-dimensional digital reduced restorative tooth model. This added outer layer or layer segment with the predefined thickness may define the adjusted predefined minimum volume.

Alternatively, the three-dimensional digital restorative tooth model may be adjusted and using the adjusted three-dimensional digital restorative tooth model, an adjusted three-dimensional digital reduced restorative tooth model may be determined, e.g., like the three-dimensional digital reduced restorative tooth model is determined using the three-dimensional digital restorative tooth model. It may be checked, whether the resulting three-dimensional digital reduced restorative tooth model indeed comprises the complete core section of the orthodontically adjusted three-dimensional digital tooth model. If this is not case, the adjusted three-dimensional digital restorative tooth model and consequently the adjusted three-dimensional digital reduced restorative tooth model may be further adjusted. If this is the case, the adjusted three-dimensional digital restorative tooth model may be used to update the three-dimensional digital restorative tooth model and the adjusted three-dimensional digital reduced restorative tooth model may be used to update the three-dimensional digital reduced restorative tooth model.

For example, the three-dimensional digital restorative tooth model may be updated with an adjusted three-dimensional digital restorative tooth model adjusted using an adjusted three-dimensional digital reduced restorative tooth model. For example, the three-dimensional digital reduced restorative tooth model may be updated with an adjusted three-dimensional digital reduced restorative tooth model adjusted using an adjusted three-dimensional digital restorative tooth model.

For example, an iterative approach may be used. It may be check, whether a resulting adjusted three-dimensional digital restorative tooth model satisfies a set of one or more criteria to be satisfied by the three-dimensional digital restorative tooth model. The criteria may, e.g., comprise geometric and/or aesthetic criteria. For example, the three-dimensional digital restorative tooth model may not overlap with a neighbor tooth or an antagonist. For example, the adjusted three-dimensional digital restorative tooth model may not extend to far into a vestibular direction, in particular relative to neighbor teeth. For example, the adjusted three-dimensional digital restorative tooth model may not extend to far into an oral direction, in particular relative to neighbor teeth. If all criteria are satisfied, the adjusted three-dimensional digital restorative tooth model may be used to update the three-dimensional digital restorative tooth model and the adjusted three-dimensional digital reduced restorative tooth model may be used to update the three-dimensional digital reduced restorative tooth model. In case one or more criteria are not satisfied, the adjusted three-dimensional digital reduced restorative tooth model may be further adjusted in order to satisfy the remaining criteria to be satisfied. The further adjusted three-dimensional digital reduced restorative tooth model may be used to further adjust the adjusted three-dimensional digital restorative tooth model, which is checked again using the respective criteria. If the respective criteria are satisfied, the iteration may be stop. Else, the iteration may be continued.

Alternatively, the adjusted three-dimensional digital restorative tooth model may be further adjusted in order to satisfy the remaining criteria to be satisfied. The further adjusted three-dimensional digital restorative tooth model may be used to further adjust the adjusted three-dimensional digital reduced restorative tooth model. It may be checked, whether the resulting further adjusted three-dimensional digital reduced restorative tooth model still comprises the complete core section of the orthodontically adjusted three-dimensional digital tooth model. If the core section is still comprised, the iteration may be stop. Else, the iteration may be continued.

The predefined minimum volume by which the three-dimensional digital restorative tooth model is reduced resulting in the three-dimensional digital reduced restorative tooth model defines a minimum preparation section of the tooth based on the form of the three-dimensional digital restorative tooth model, which is necessary for realizing a planned restoration, e.g., using a crown or veneer. This three-dimensional digital restorative tooth model as a model of the target state of the tooth to be achieved by the ortho-restorative measurements defines a form the dental restoration element, i.e., the planned restoration. For determining this minimum preparation section various factor may be taken into account such as minimum material thickness required for the dental restoration element, a desired aesthetic result of applying the dental restoration element, parameters of the dental restoration element fixed by the production process of the dental restoration element.

The core section of the three-dimensional digital tooth model defines a section of the tooth excluded from preparation. The remaining section of the tooth defines a possible preparation section of the tooth, i.e., a section, which is not excluded from preparation and may be prepared as required for achieving the target state of the tooth as defined by the three-dimensional digital reduced restorative tooth model.

The parameter of the orthodontic adjustment of the position of the three-dimensional digital tooth model may be determined such that the core section is moved into three-dimensional digital reduced restorative tooth model and at least partly comprised by the three-dimensional digital reduced restorative tooth model. For example, the core section is moved into the three-dimensional digital reduced restorative tooth model, such that it is completely comprised by the three-dimensional digital reduced restorative tooth model. The position of the core section within the three-dimensional digital reduced restorative tooth model may be further adjusted in order to reduce and/or minimize the preparation of the tooth. The position of the core section within the three-dimensional digital reduced restorative tooth model may be further adjusted, e.g., taking into account predefined sections of the tooth, i.e., of the three-dimensional digital tooth model, which necessarily have to be comprised by the preparation. Such predefined sections necessarily having to be comprised by the preparation are, e.g., sections comprising defects of the tooth to be repaired by the one or more ortho-restorative measures, such as caries. Sections of the tooth comprising defects like caries may, e.g., be determined using X-ray or NIRI scan data of the tooth.

The method may, e.g., comprise generating the three-dimensional digital restorative tooth model being received. Generating the three-dimensional digital restorative tooth model may comprise generating a three-dimensional digital model representing a target form of the tooth, e.g., using a three-dimensional digital tooth model from a three-dimensional digital dental tooth library. In order to generate the three-dimensional digital restorative tooth model, the respective three-dimensional digital model representing the target form may further be arranged a target position within the patient's dentition, i.e., a three-dimensional digital dentition model of the patient's dentition. A movement of the three-dimensional digital model representing the target form from the current position of the tooth defined by the three-dimensional digital tooth model to the target position of the tooth defined by the three-dimensional digital restorative tooth model may virtually simulate an orthodontic treatment of the patient's tooth resulting in an adjustment of the position of the respective tooth. The orthodontic parameter defining the orthodontic measures may be used to illustrate the respective orthodontic treatment for a dentist and/or a patient. The movement may be adjusted such that a tooth mass loss resulting from a required preparation of the tooth, e.g., a grinding down the tooth in preparation of a restorative treatment, is reduced, e.g., minimized, and/or such that a pulp chamber of the tooth and/or dentin is in less danger to be damaged. For example, the movement may be adjusted such that the danger of damaging the pulp chamber of the tooth and/or dentin is minimized or may even be excluded.

The three-dimensional digital tooth model is descriptive of a current form and a current position, i.e., a current state, of the tooth within the dentition of the patient. The three-dimensional digital tooth model may be provided using scan data of the respective tooth of the patient acquired using a scanner, e.g., an optical scanner. The scan may be a direct scan of the patient's tooth, e.g., an intraoral scan. Alternatively or additionally, an indirect scan of the patient's tooth may be used to acquire the scan data. For example, a dental impression of the patient's tooth or a dental model of the respective tooth dentition, like a plaster model, may be scanned.

For example, the scan data of the tooth may be comprised by scan data of the patient's dentition. The scan data of the dentition may be acquired using a scanner, e.g., an optical scanner. The scan may be a direct scan of the patient's dentition, e.g., an intraoral scan. Alternatively or additionally, an indirect scan of the patient's dentition may be used to acquire the scan data. For example, a dental impression of the patient's dentition or a dental model of the dentition, like a plaster model, may be scanned.

The three-dimensional digital tooth model may, e.g., be provided as part of a three-dimensional digital dentition model of the dentition of the patient. The three-dimensional digital dentition model of the dentition of the patient may be provided using scan data of the patient's dentition. The three-dimensional digital tooth model may be identified within the three-dimensional digital dentition model of the dentition of the patient using segmentation.

The three-dimensional digital tooth model may be a three-dimensional digital model of a current state of the tooth. This three-dimensional digital tooth model as a current state model of the respective tooth may resemble an actual state of the patient's tooth, i.e., it may be a digital replica of the physical tooth. The three-dimensional digital tooth model may in particular resemble the geometric form of the tooth. The three-dimensional digital tooth model may further resemble the current position of the physical tooth within the physical dentition. The three-dimensional digital tooth model may, e.g., be generated by a computer system executing the method for determining the parameters of the ortho-restorative measures or it may be received from an external source. The external source may, e.g., be a server, like a cloud server, providing the three-dimensional digital tooth model via a network. The external source may, e.g., be a removable storage device providing the three-dimensional digital tooth model via a direct communication connection, e.g., wireless or via a wire.

The three-dimensional digital tooth model may be provided as part of a three-dimensional digital dentition model of the dentition of the patient. The three-dimensional digital dentition model may be a three-dimensional digital model of a current state the dentition. This three-dimensional digital dentition model may be generated using the scan data of a direct and/or indirect scan of the dentition. The three-dimensional digital dentition model as a current state model of the respective dentition may resemble an actual state of the patient's dentition, i.e., it may be a digital replica of the physical dentition. The three-dimensional digital dentition model of the respective tooth may in particular resemble the geometric form of the physical dentition as well as the relative positions of the teeth comprised by the dentition. The three-dimensional digital dentition model may be generated by the computer system or it may be received from an external source. The external source may, e.g., be a server, like a cloud server, providing the three-dimensional digital dentition model via a network. The external source may, e.g., be a removable storage device providing the three-dimensional digital dentition model via a direct communication connection, e.g., wireless or via a wire.

The three-dimensional digital restorative tooth model may be a three-dimensional digital model of a target state of the tooth to be achieved by the one or more ortho-restorative measures. The three-dimensional digital restorative tooth model may, e.g., define a target form of the tooth and a target position of the tooth within the dentition of the patient. This three-dimensional digital restorative tooth model as a target state model of the respective tooth may resemble a state of the patient's tooth to be achieved using ortho-restorative measures, i.e., it may be a digital template. The three-dimensional digital restorative tooth model may, e.g., be generated by a computer system executing the method for determining the parameters of the ortho-restorative measures or it may be received from an external source. The external source may, e.g., be a server, like a cloud server, providing the three-dimensional digital restorative tooth model via a network. The external source may, e.g., be a removable storage device providing the three-dimensional digital restorative tooth model via a direct communication connection, e.g., wireless or via a wire.

For generating the three-dimensional digital restorative tooth model, e.g., a three-dimensional digital library tooth model from a digital tooth library may be used. For example, the three-dimensional digital library tooth model may in addition be adjusted to the dentition of the patient. For example, a three-dimensional digital model of another tooth of the patient's dentition, e.g., an opposite tooth within the same dental arch or an antagonist, may be used for generating the three-dimensional digital restorative tooth model. The three-dimensional digital model of the other tooth may be generated using scan data of the respective other tooth. For example, the three-dimensional digital model of the other tooth may in addition be adjusted to the dentition of the patient. For example, the three-dimensional digital tooth model descriptive of a current form and a current position of the tooth within the dentition may be used for generating the generating the three-dimensional digital restorative tooth model. For example, the three-dimensional digital tooth model may be adjusted to resemble a target form and a target position of the tooth to be achieved by the one or more ortho-restorative measures. For example, the three-dimensional digital restorative tooth model may be generated from scratch.

For example, a trained machine learning module may be used for generating the three-dimensional digital restorative tooth model. For generating the three-dimensional digital restorative tooth model, the trained machine learning module may, e.g., use the three-dimensional digital tooth model. The three-dimensional digital restorative tooth model may be received as output from the trained machine learning module in response to providing the three-dimensional digital tooth model as input. For example, the three-dimensional digital tooth model may be provided as part of a three-dimensional digital dentition model as input to the trained machine learning module.

The trained machine learning module may be trained to provide the three-dimensional digital restorative tooth model as output in response to receiving the three-dimensional digital tooth model as input. The trained machine learning module may be trained to provide the three-dimensional digital restorative tooth model as output in response to receiving a three-dimensional digital dentition model comprising the three-dimensional digital tooth model as input.

For example, a providing of the trained machine learning module may comprise providing a machine learning module to be trained. A set of training datasets may be provided for training the machine learning module to be trained. For example, each training dataset may comprise a three-dimensional digital training tooth model as well as a three-dimensional digital training restorative tooth model. The machine learning module to be trained may be trained to provide the three-dimensional digital training restorative tooth models of the training datasets as an output in response to receiving the three-dimensional digital training tooth models of the respective training datasets as input.

For example, each training dataset may comprise a three-dimensional digital training dentition model as well as a three-dimensional digital training restorative tooth model. The three-dimensional digital training dentition models may comprise three-dimensional digital training tooth models, for which the three-dimensional digital training restorative tooth model are to be provided. The machine learning module to be trained may be trained to provide the three-dimensional digital training restorative tooth models of the training datasets as an output in response to receiving the three-dimensional digital training dentition models of the respective training datasets as input. The three-dimensional digital training restorative tooth models may, e.g., be provided in form of three-dimensional digital training restorative dentition models comprising the three-dimensional digital training restorative tooth models. The three-dimensional digital training restorative dentition models may correspond to the comprising the three-dimensional digital training dentition models with the three-dimensional digital training tooth models replaced by the three-dimensional digital training restorative tooth models.

The machine learning module to be trained may, e.g., be an untrained machine learning module, a pre-trained machine learning module or a partially trained machine learning module. The machine learning module being trained may be an untrained machine learning module, which is trained from scratch. Alternatively, the machine learning module being trained may be a pre-trained or partially trained machine learning module. In general, it may not be necessary to start with an untrained machine learning module, e.g., in deep learning. For example, one may start with a pre-trained or partially trained machine learning module. The pre-trained or partially trained machine learning module may have been pre-trained or partially trained for the same or a similar task. Using a pre-trained or partially trained machine learning may, e.g., enable a faster training of the trained machine learning module to be trained, i.e., the training may converge faster. For example, transfer learning may be used for training a pre-trained or partially trained machine learning module. Transfer learning refers to a machine learning process, which rather than starting the learning process from scratch starts from patterns that have been previously learned, when solving a different problem. This way previous learnings may, e.g., be leveraged, avoiding to start from scratch. A pre-trained machine learning module is a machine learning module that was trained previously, e.g., on a large benchmark dataset to solve a problem similar to the one to be solved by the additional learning. In case of a pre-trained machine learning module a previous learning process has been completed successfully. A partially trained machine learning module is a machine learning module, which has been partially trained, i.e., the training process may not have been completed yet. A pre-trained or partially machine learning module may, e.g., be import and trained to be used for the purposes disclosed herein.

The term "machine learning" (ML) refers to a computer algorithm used to extract useful information from training data sets by building probabilistic models, which are referred to as machine learning modules or models, in an automated way. A machine learning module may also be referred to as a predictive model. Machine learning algorithms build a mathematical model based on sample data, known as "training data", in order to make predictions or decisions without being explicitly programmed to perform the task. The machine learning module may be performed using a learning algorithm such as supervised or unsupervised learning. The machine learning module may be based on various techniques such as clustering, classification, linear regression, reinforcement, self-learning, support vector machines, neural networks, etc. A machine learning module may, e.g., be a data structure or program such as a neural network, in particular a convolutional neural network, a support vector machine, a decision tree, a Bayesian network etc. The machine learning module may be adapted to predict an unmeasured value, e.g., a three-dimensional digital restorative tooth model as output by the trained machine learning module. The trained machine learning module may predict the unmeasured value from other, known values, e.g., a three-dimensional digital tooth model as input. The three-dimensional digital tooth model may be comprised by a three-dimensional digital dentition tooth model. For example, an identifier may be provided identifying the three-dimensional digital tooth model comprised by the three-dimensional digital dentition model. According to an example, the machine learning module may comprise a deep learning model.

The three-dimensional digital restorative tooth model may be provided as part of a three-dimensional digital dentition model of the dentition of the patient. The three-dimensional digital dentition model may be a three-dimensional digital model of a current state the dentition. This three-dimensional digital dentition model may be generated using the scan data of a direct and/or indirect scan of the dentition. The three-dimensional digital dentition model as a current state model of the respective dentition may resemble an actual state of the patient's dentition, i.e., it may be a digital replica of the physical dentition. The three-dimensional digital dentition model of the respective tooth may in particular resemble the geometric form of the physical dentition as well as the relative positions of the teeth comprised by the dentition. The three-dimensional digital dentition model may be generated by the computer system or it may be received from an external source. The external source may, e.g., be a server, like a cloud server, providing the three-dimensional digital dentition model via a network. The external source may, e.g., be a removable storage device providing the three-dimensional digital dentition model via a direct communication connection, e.g., wireless or via a wire.

For example, an implementation of the method may comprise one or more of the following steps:
A target state to be achieved using ortho-restorative measures is defined using the three-dimensional digital restorative tooth model.

Scan data of a dental situation of a patient may be received. The scan data of the dental situation of the patient may for example be acquired using an intraoral scanner. Using the scan data, a three-dimensional digital dentition model may be provided, the three-dimensional digital dentition model may comprise a plurality of teeth of the patient. Furthermore, the three-dimensional digital dentition model may comprise at least a part of the patient's gingiva. The three-dimensional digital dentition model may be segmented, in order to provide a three-dimensional digital tooth model of the tooth for which the ortho-restorative measurements are to be determined. The segmentation may further provide a three-dimensional digital gingiva model.

The three-dimensional digital reduced restorative tooth model describes a reduced version of the three-dimensional digital restorative tooth model. The reduction, i.e., the predefined minimum volume by which the three-dimensional digital restorative tooth model is reduced, describes a minimum preparation necessary for receiving a dental restoration element, in order to obtain the target form of the tooth as defined by the three-dimensional digital restorative tooth model. This minimum preparation is independent of the three-dimensional digital tooth model and may be considered to be preliminary. The actual preparation of the tooth required for achieving the target state as defined by the three-dimensional digital restorative tooth model depends on the orthodontic adjustment of the position of the three-dimensional digital tooth model and is therefore to be determined.

The minimum preparation may, e.g., depend on the target form defined by the three-dimensional digital restorative tooth model, features of a restorative material of the dental restoration element, like a minimum material thickness required for the respective restorative material, an inner structure of the dental restoration element, and/or a type of dental restoration element to be used for achieving the target state.

Using the core section of the of the three-dimensional digital tooth model and the three-dimensional digital reduced restorative tooth model, it may be determined, whether there is an orthodontic adjustment of the position of the three-dimensional digital tooth model, which allows at the same time to protect the core section from the preparation of the tooth and provide a minimum volume, e.g., for a minimum preparation, required for receiving a dental restoration element. If the core section of the orthodontically adjusted three-dimensional digital tooth model fits completely into the three-dimensional digital reduced restorative tooth model, the respective orthodontic adjustment is able to satisfy both requirements at the same time. Else, three-dimensional digital reduced restorative tooth model and the three-dimensional digital reduced restorative tooth model may have to be adjusted to enable a satisfying of both requirements at the same time.

A virtual preparation margin may be defined on the tooth. The virtual preparation margin may depend on the position of the tooth within the dentition as well as on neighbor teeth. The virtual preparation margin indicates, where the tooth is to be prepared. The virtual preparation margin may, e.g., be defined using an intersection of the orthodontically adjusted three-dimensional digital tooth model with a three-dimensional digital gingiva model. Alternatively or additionally, an input with a definition virtual preparation margin or a definition of an adjustment of the virtual preparation margin may be received, e.g., in form of a three-dimensional spline curve defined on a surface of the orthodontically adjusted three-dimensional digital tooth model.

The virtual preparation of the orthodontically adjusted three-dimensional digital tooth model may be defined using the virtual preparation margin. For example, within an area limited by the virtual preparation margin tooth material may be virtually removed. The tooth material may, e.g., be removed to a predefined preparation depth. For example, sections of the orthodontically adjusted three-dimensional digital tooth model within the area limited by the virtual preparation margin, which overlap with the minimum volume determined for the three-dimensional digital restorative tooth model, may be removed.

Hereby, it may be ensured that the prepared tooth defined by the orthodontically adjusted three-dimensional digital tooth model, provides sufficient to receive a dental restoration element with a required minimum material thickness. Hereby, it may be ensured that the preparation applied to the tooth defined by the orthodontically adjusted three-dimensional digital tooth model is as minimal as possible.

The resulting virtual preparation, defines sections of the tooth, e.g., surfaces or volumes, that are to be grinded down in order to prepare the tooth for receiving the dental restoration element.

The aforementioned, orthodontic adjustment of the position of the three-dimensional digital tooth model as well as the determination of the virtual preparation may, e.g., be repeated following an iterative optimization algorithm until one or more criteria are satisfied. In each step of the iterative optimization algorithm, the orthodontic adjustment and the virtual preparation may be updated. A target of the iterative optimization algorithm may, e.g., be a reduction of a tooth mass loss due to the virtual preparation. A criterion to be satisfied may, e.g., be a reaching of a minimum for the tooth mass loss. The tooth mass loss may, e.g., be defined by a volume of the tooth being removed as defined using the virtual preparation. The tooth mass loss may, e.g., be defined using a ratio of the volume of the tooth being removed as defined by the virtual preparation to the remaining volume of the prepared tooth. The tooth mass loss may, e.g., be defined using statistical measurements of the removed sections of prepared tooth in mesial, distal and occlusal direction of the tooth.

The method for determining the parameters of the ortho-restorative measures may, e.g., be executed for a single type of dental restoration element. Alternatively, the method may, e.g., be executed for different types of dental restoration elements and the resulting parameters of the ortho-restorative measures may be compared in order to select one of the dental restoration elements, in order to achieve the target state defined by the three-dimensional digital restorative tooth model.

For example, the orthodontic adjustment is determined with the complete core section of the orthodontically adjusted three-dimensional digital tooth model fitting into the three-dimensional digital reduced restorative tooth model.

When the complete core section of the orthodontically adjusted three-dimensional digital tooth model is fitted into the three-dimensional digital reduced restorative tooth model, it may be ensured that the core section may be protected from preparation and at the same time a sufficient minimum of free space for the dental restoration element may be provided. With no overlapping of the core section with the predefined minimum volume, no parts of the core section may conflict with arranging the dental restoration element.

For example, the orthodontic adjustment is determined with another part of the core section of the orthodontically adjusted three-dimensional digital tooth model not fitting into the three-dimensional digital reduced restorative tooth model. The method further comprises updating the three-dimensional digital reduced restorative tooth model by an adjusted three-dimensional digital reduced restorative tooth model being adjusted to comprise the complete core section of the orthodontically adjusted three-dimensional digital tooth model and updating the three-dimensional digital restorative tooth model by an adjusted three-dimensional digital restorative tooth model adjusted using the adjusted three-dimensional digital reduced restorative tooth model.

When a part of the core section of the orthodontically adjusted three-dimensional digital tooth model does not fit into the three-dimensional digital reduced restorative tooth model, i.e., overlaps with the predefined minimum volume required for arranging the dental restoration element, arranging the dental restoration element would require violating the core section. The part of the core section not fitting into the three-dimensional digital reduced restorative tooth model would have to be removed, in order to be able to arrange the dental restoration element. In order to resolve this conflict, i.e., to avoid a violation of the core section and at the same time enable an arranging of the dental restoration element, the three-dimensional digital restorative tooth model is updated by an adjusted three-dimensional digital restorative tooth model. This three-dimensional digital restorative tooth model is adjusted using an adjusted three-dimensional digital reduced restorative tooth model. The adjusted three-dimensional digital reduced restorative tooth model is adjusted to comprise the complete core section of the orthodontically adjusted three-dimensional digital tooth model. This adjusted three-dimensional digital reduced restorative tooth model is used to update the three-dimensional digital reduced restorative tooth model.

Adjusting the three-dimensional digital restorative tooth model may comprise adjusting the target form of the tooth and/or the target position of the tooth. Thus, the updating of the three-dimensional digital restorative tooth model may result in an updated target form and/or an updated target position of the tooth to be achieved by the one or more ortho-restorative measures. Adjusting the target form of the three-dimensional digital restorative tooth may result in an adjustment of the predefined minimum volume required for receiving a dental restoration element for obtaining the target form of the tooth. The updated three-dimensional digital reduced restorative tooth model corresponds to the updated three-dimensional digital restorative tooth model reduced by the predefined minimum volume required for receiving a dental restoration element for obtaining the target form of the tooth or an updated predefined minimum volume required for receiving a dental restoration element for obtaining the updated target form of the tooth.

For example, limits may be defined for the orthodontic adjustment. The limits may be descriptive of a maximum range for a lateral movement of the tooth comprised by the orthodontic adjustment. The limits may be descriptive of a maximum range of a rotation of the tooth comprised by the orthodontic adjustment. The maximum range of rotation may, e.g., comprise a maximum range of rotation for one axis of rotation, two axes of rotation or three axes of rotation. The axes of rotation may be perpendicular to each other. The axes of rotation may, e.g., comprise an axis extending in occlusal direction, an axis extending in approximal direction and/or an axis extending in vestibular/oral direction.

For example, an orthodontic adjustment within the limits defined for the adjustment may be insufficient to move the complete core section into the three-dimensional digital reduced restorative tooth model, such that a part of the core section of the orthodontically adjusted three-dimensional digital tooth model does not fit into the three-dimensional digital reduced restorative tooth model, but rather extends beyond the three-dimensional digital reduced restorative tooth model.

For example, the predefined minimum volume has a thickness comprising a minimum material thickness required by a predefined restoration material of the dental restoration element.

By comprising the minimum thickness, the minimum volume takes into account space required for the restoration material of the dental restoration element. Thus, the minimum volume comprises sufficient space for receiving a layer of restoration material with the minimum material thickness. For example, the thickness of the predefined minimum volume may be equal to the minimum material thickness.

The minimum material thickness defines a material depending minimum thickness of a restoration material of the dental restoration element. The minimum material thickness is a minimum thickness of the restoration material ensure one or more of the following: a sufficient minimum structural stability of the dental restoration element, a pre-defined color of the dental restoration element, a pre-defined degree of transparency of the dental restoration element.

Using a predefined minimum volume defined by the minimum material thickness may have the beneficial effect, that the minimum material thickness is taken into account, when determining the three-dimensional digital reduced restorative tooth model. Thus, it may be ensured that the orthodontic measures described by the output orthodontic parameters enable an arranging of a dental restoration element with one or more of the following features: a sufficient minimum structural stability, a pre-defined color, a pre-defined degree of transparency. The pre-defined color may be a target color of the dental restoration element on the prepared tooth.

For example, the minimum material thickness is a tooth section depending minimum material thickness. The minimum material thickness may, e.g., vary between different tooth sections. In some sections, like an occlusal section, the minimum material thickness of the dental restoration element may be larger compared to other sections, like an approximal section, a vestibular section, or an oral section, in order to ensure a sufficient local stability of the dental restoration element.

For example, the thickness of the minimum volume further comprises a predefined additional minimum space for applying a bonding material for bonding the dental restoration element to the three-dimensional digital reduced restorative tooth model. Thus, the minimum volume may in addition take into account the space required for bonding the dental restoration element to the tooth. The thickness of the minimum volume may, e.g., be equal to the minimum material thickness in combination with the additional minimum space.

For example, the method further comprises determining position and form of a pulp chamber of the tooth within the three-dimensional digital tooth model. The pulp chamber is comprised by the core section of the three-dimensional digital tooth model.

As the core section is excluded from preparation, the pulp chamber comprised by the core section is excluded from the preparation as well. Excluding the pulp chamber from preparation may protect the pulp chamber with the pulp, i.e., the neurovascular bundle central to each tooth and comprising connective tissue, nerves, blood vessels, and odontoblasts, from being damaged. Violating the pulp chamber may result in the death of the tooth.

The pulp chamber comprises the central pulp chamber as well as the pulp horns. The core section may, e.g., further comprise at least parts of the radicular canals of the pulp, depending on how far the three-dimensional digital tooth model extends in radicular direction.

For example, position and form of the pulp chamber within the tooth may be estimated using the form of the three-dimensional digital tooth model. For example, a tooth type specific depth may be used for estimating the form and position of the pulp chamber within the tooth. For example, the three-dimensional digital tooth model may be reduced by predefined tooth type specific depth with the reduced three-dimensional digital tooth model, e.g., being used as the core section of the three-dimensional digital tooth model. The tooth type specific depth may, e.g., vary in different tooth direction, i.e., the tooth type specific depth may be a tooth section specific depth.

For a rough estimate of the position and form of the pulp chamber, the three-dimensional digital tooth model may, e.g., be reduced by 2 mm and a resulting reduced three-dimensional digital tooth model may be used as the core section of the three-dimensional digital tooth model.

For example, position and form of the pulp chamber within the tooth may be estimated using a library of typical forms of pulp chambers. For example, machine learning module may be used for estimating position and form of the pulp chamber.

By excluding the pulp chamber from the preparation, it may be ensured that the tooth is not prepared too deep. Violating the pulp chamber may result in the death of the tooth. Therefore, in order to determine the core section to be excluded from preparation, a form and position of the pulp chamber may be estimated. For example, form and position of the pulp chamber may be estimated using a form of the tooth. For example, a type of tooth may also be taken into account, when estimating form and position of the pulp chamber.

For example, scan data of an X-ray and/or CBCT scan of the tooth are received. For example, DICOM data of X-ray images and/or CBCT images of the tooth are received. For example, scan data of a near-infrared scan of the tooth are received. The scan data may be indicative of the form and/or position of the pulp chamber within the tooth. The respective scan data may be used to determine the form and/or position of the pulp chamber within the tooth. The respective scan data may be used to determine the core section comprising the pulp chamber within the tooth.

For example, a machine learning module may be used for determining the pulp chamber and/or for determining the core section comprising the pulp chamber.

For example, a trained machine learning module may be used for determining a three-dimensional digital pulp chamber model. For determining the three-dimensional digital pulp chamber model, the trained machine learning module may, e.g., use the three-dimensional digital tooth model. The three-dimensional digital pulp chamber model may be received as output from the trained machine learning module in response to providing the three-dimensional digital tooth model as input. For example, the three-dimensional digital tooth model may be provided as part of a three-dimensional digital dentition model as input to the trained machine learning module.

The trained machine learning module may be trained to provide the three-dimensional digital pulp chamber model as output in response to receiving the three-dimensional digital tooth model as input. The trained machine learning module may be trained to provide the three-dimensional pulp chamber model as output in response to receiving a three-dimensional digital dentition model comprising the three-dimensional digital tooth model as input.

For example, a providing of the trained machine learning module may comprise providing a machine learning module to be trained. A set of training datasets may be provided for training the machine learning module to be trained. For example, each training dataset may comprise a three-dimensional digital training tooth model as well as a three-dimensional digital training pulp chamber model. The machine learning module to be trained may be trained to provide the three-dimensional digital training pulp chamber models of the training datasets as an output in response to receiving the three-dimensional digital training tooth models of the respective training datasets as input.

For example, each training dataset may comprise a three-dimensional digital training dentition model as well as a three-dimensional digital training pulp chamber model. The three-dimensional digital training dentition models may comprise three-dimensional digital training tooth models, for which the three-dimensional digital training pulp chamber model are to be determined. The machine learning module to be trained may be trained to provide the three-dimensional digital training pulp chamber models of the training datasets as an output in response to receiving the three-dimensional digital training dentition models of the respective training datasets as input. The three-dimensional digital training pulp chamber models may, e.g., be provided in form of three-dimensional digital training dentition models comprising the three-dimensional digital training pulp chamber models.

For example, a trained machine learning module may be used for determining a three-dimensional digital core section model of a core section of a tooth comprising a pulp chamber of the respective tooth. The three-dimensional digital core section model may be received as output from the trained machine learning module in response to providing the three-dimensional digital tooth model as input. For example, the three-dimensional digital tooth model may be provided as part of a three-dimensional digital dentition model as input to the trained machine learning module.

The trained machine learning module may be trained to provide the three-dimensional digital core section model as output in response to receiving the three-dimensional digital tooth model as input. The trained machine learning module may be trained to provide the three-dimensional core section model as output in response to receiving a three-dimensional digital dentition model comprising the three-dimensional digital tooth model as input.

For example, a providing of the trained machine learning module may comprise providing a machine learning module to be trained. A set of training datasets may be provided for training the machine learning module to be trained. For example, each training dataset may comprise a three-dimensional digital training tooth model as well as a three-dimensional digital training core section model of a core section of the training tooth comprising a pulp chamber of the respective training tooth. The machine learning module to be trained may be trained to provide the three-dimensional digital training core section models of the training datasets as an output in response to receiving the three-dimensional digital training tooth models of the respective training datasets as input.

For example, each training dataset may comprise a three-dimensional digital training dentition model as well as a three-dimensional digital training core section model. The three-dimensional digital training dentition models may comprise three-dimensional digital training tooth models, for which the three-dimensional digital training core section model are to be determined. The machine learning module to be trained may be trained to provide the three-dimensional digital training core section models of the training datasets as an output in response to receiving the three-dimensional digital training dentition models of the respective training datasets as input. The three-dimensional digital training core section models may, e.g., be provided in form of three-dimensional digital training dentition models comprising the three-dimensional digital training core section models.

The machine learning module to be trained may, e.g., be an untrained machine learning module, a pre-trained machine learning module or a partially trained machine learning module. The machine learning module being trained may be an untrained machine learning module, which is trained from scratch. Alternatively, the machine learning module being trained may be a pre-trained or partially trained machine learning module. In general, it may not be necessary to start with an untrained machine learning module, e.g., in deep learning. For example, one may start with a pre-trained or partially trained machine learning module. The pre-trained or partially trained machine learning module may have been pre-trained or partially trained for the same or a similar task. Using a pre-trained or partially trained machine learning may, e.g., enable a faster training of the trained machine learning module to be trained, i.e., the training may converge faster. For example, transfer learning may be used for training a pre-trained or partially trained machine learning module. Transfer learning refers to a machine learning process, which rather than starting the learning process from scratch starts from patterns that have been previously learned, when solving a different problem. This way previous learnings may, e.g., be leveraged, avoiding to start from scratch. A pre-trained machine learning module is a machine learning module that was trained previously, e.g., on a large benchmark dataset to solve a problem similar to the one to be solved by the additional learning. In case of a pre-trained machine learning module a previous learning process has been completed successfully. A partially trained machine learning module is a machine learning module, which has been partially trained, i.e., the training process may not have been completed yet. A pre-trained or partially machine learning module may, e.g., be import and trained to be used for the purposes disclosed herein.

By taking into account the pulp chamber or at least an estimated pulp chamber as part of the core section, the pulp chamber is excluded from preparation, i.e., it may be ensured that any preparation parameter determined may exclude the pulp chamber from preparation measures. Thus, the pulp chamber may be protected effectively. A protection of the pulp chamber may have the beneficial effect of avoiding any grind down of the tooth to be prepared according to the preparation parameters determined, which could damage the pulp chamber. Thus, a death of the remaining tooth as a consequence of the damaging may be avoided. Otherwise, the death of the remaining tooth may result in an earlier loss of the respective tooth, which may include the restoration.

For example, the core section of the three-dimensional digital tooth model further comprises a safety layer of tooth material for protecting the pulp chamber. Taking into account an additional safety layer of tooth material may provide an improved protection of the pulp chamber against negative impacts by the preparation. Grinding down the tooth during preparation may result in heat build-up, which may have a negative impact on the pulp. A safety layer may provide a kind of thermal insulation protecting the pulp from overheating due to a heating caused by the preparation.

For example, when using a trained machine learning module for determining the core section of the tooth, the machine learning module may be trained for determining a three-dimensional digital core section model of the core section of the tooth comprising in addition to the pulp chamber of the respective tooth a safety layer of tooth material for protecting the pulp chamber.

For example, the one or more ortho-restorative measures comprises a preparation of the orthodontically adjusted three-dimensional digital tooth model for receiving the dental restoration element. The method further comprises determining one or more preparation parameters descriptive of the preparation of the orthodontically adjusted three-dimensional digital tooth model and outputting the one or more preparation parameters.

The one or more preparation parameters may, e.g., be descriptive of an amount and a position of tooth material to be removed by preparation of the orthodontically adjusted tooth.

The preparation of the orthodontically adjusted three-dimensional digital tooth model described by the determined preparation parameters, may, e.g., comprise a margin line, also referred to as finish line, of one of the following types: feather edge, knife edge, chamfer, bevel, shoulder, beveled shoulder.

For example, the preparation described by the one or more preparation parameters comprises removing one or more sections of the orthodontically adjusted three-dimensional digital tooth model extending beyond the three-dimensional digital reduced restorative tooth model.

For example, sections of the orthodontically adjusted three-dimensional digital tooth model extending beyond the three-dimensional digital reduced restorative tooth model, i.e., extending into the minimum volume determined for the three-dimensional digital restorative tooth model may be removed. For example, the preparation described by the one or more preparation parameters may result in a reduction of the orthodontically adjusted three-dimensional digital tooth model such that the resulting orthodontically adjusted three-dimensional digital prepared tooth model fits completely into the three-dimensional digital reduced restorative tooth model.

The three-dimensional digital prepared tooth model may be descriptive of a target form and a target position of the prepared tooth to be achieved by applying the ortho-restorative measures as defined by the one or more parameters being determined using the method described herein. The target position of the prepared tooth may result from the orthodontic adjustment of the position of the three-dimensional digital tooth model describing the current position of the tooth within the dentition. The orthodontic adjustment is defined by the one or more orthodontic parameters being determined using the method described herein. The target form of the prepared tooth may result from the preparation of the form of the three-dimensional digital tooth model describing the current form of the tooth.

In order to provide a tooth with a cemented dental restoration, like, e.g., a crown or a veneer, the respective tooth may have to be prepared, i.e., grinned down with a drill, to provide sufficient free space for the material of the restoration to be arranged on the prepared tooth.

For example, the preparation described by the one or more preparation parameters further comprises removing a surface layer from a surface section of the orthodontically adjusted three-dimensional digital tooth model arranged within the three-dimensional digital reduced restorative tooth model for improving the bonding of the dental restoration element to the surface section.

For example, the surface layer may be removed for roughening or smoothening the surface section of the tooth. For example, from all surface sections of the orthodontically adjusted three-dimensional digital tooth model arranged within the three-dimensional digital reduced restorative tooth model, on which the dental restoration element is to be arranged, a surface layer may be removed. As a result, all bonding surface sections at which the restorative tooth model is to be arranged and bonded to the prepared tooth may be prepared. This preparation may at least comprise a removing of a surface layer for roughening or smoothening the respective surface sections of the tooth, in order to improve the bonding of the dental restoration element to these surface sections.

For example, the three-dimensional digital tooth model comprises one or more defects of the tooth to be repaired by the one or more ortho-restorative measures to be applied to the tooth. The one or more preparation parameters are further adjusted to remove the defects.

For example, larger sections of the orthodontically adjusted three-dimensional digital tooth model, i.e., locally more tooth material, may be removed by restoration than required for fitting the complete resulting three-dimensional digital prepared tooth model into the three-dimensional digital reduced restorative tooth model. In order to remove the defects, additional tooth material may be removed at the locations of the defects resulting in a three-dimensional digital prepared tooth model, which is smaller than the three-dimensional digital reduced restorative tooth model. The additional tooth material being removed may comprise the defects to be removed, thereby removing the respective defects.

Scan data descriptive on an inner structure of the tooth, e.g., NIRI data or X-ray data, may be used to determine a minimum required preparation depth to remove the defects, e.g., carve out existing caries or other damages of a tooth. In case of an overlap of the core section and the section defined by the determined minimum preparation depth, the core section of the three-dimensional digital tooth model may be adjusted such that it does not overlap with the section defined by the determined minimum preparation depth anymore. So, the core section may become smaller, where there are defects of the tooth requiring a lager preparation depth to be removed.

For example, the core section may comprise an inner core subsection and an outer core subsection at least partly enveloping inner core subsection. The outer core subsection may define a subsection, which is added to the inner core subsection as a precaution and may be adjusted under specific predefined exceptional circumstances, e.g., in case of an overlap with a determined minimum preparation depth required for removing one or more defects of the tooth. The inner core subsection may define a subsection which is not allowed to be adjusted. For example, the inner core subsection may be defined by the pulp chamber.

In case an adjustment of the inner core subsection is unavoidable, e.g., due to an overlap with a determined minimum preparation depth required for removing one or more defects of the tooth, a warning may be outputted. For example, a different restorative approach may be chosen, which does not exclude inner part of the tooth, like the pulp chamber form preparation. For example, a post and core crown may be used. A post and core crown is a type of dental restoration usable, where there is an inadequate amount of sound tooth tissue remaining to retain a conventional dental restoration element, like, e.g., a crown. A post is cemented into a prepared root canal of the tooth. The post is used to retain a core restoration, which retains the final crown.

For example, the determining of the one or more preparation parameters further comprises taking into account an insertion direction of the dental restoration element onto the orthodontically adjusted three-dimensional digital tooth model.

Taking into account an insertion direction of the dental restoration element for determining of the preparation parameters may have the beneficial effect that the resulting preparation of the tooth may facilitate an insertion of the dental restoration element along the insertion direction. The insertion direction may, e.g., be chosen in order to improve the hold of the dental restoration element on the prepared tooth. For example, the insertion direction may be chosen to extend parallel to a direction of maximal force applied on the dental restoration element during an intended use, e.g., chewing. The respective insertion direction may, e.g., be chosen to extend parallel to an occlusal direction. For example, the insertion direction may be chosen to extend parallel to a direction of maximal force applied on the dental restoration element during an intended use, e.g., chewing. The respective insertion direction may, e.g., be chosen to extend parallel to a direction of extension of roots of the tooth, which is a direction of anchoring of the tooth within a bone of a jaw, mandible or maxilla. This direction of anchoring may provide a highest stability, i.e., forces acting in this direction may be best absorbed by the tooth. In this case, forces acting in the insertion direction may be best absorbed by the tooth.

For example, the one or more preparation parameters are further adjusted to block out undercuts of the shape of the prepared orthodontically adjusted three-dimensional digital tooth model in the insertion direction of the dental restoration element.

A blocking-out of undercuts may have the beneficial effect of a tight fit of the dental restoration element to the prepared tooth may be provided. For example, a bottom of a crown may be enabled to tightly fit to the prepared tooth. Thus, tolerances of the fitting of the dental restoration element onto the prepared tooth may be reduced. In particular, a clearance under the dental restoration element may be avoided, which could reduce the hold of the dental restoration element on the prepared tooth.

For example, the method further comprises a determining of a direction of extension of roots of the tooth described by the three-dimensional digital tooth model and a determining of an adjusted direction of extension of roots for the orthodontically adjusted three-dimensional digital tooth model using the direction of extension of roots determined for the three-dimensional digital tooth model. The insertion direction of the dental restoration element is adjusted to approximate the adjusted direction of extension of roots.

By adjusting the insertion direction of the dental restoration element to approximate the adjusted direction of extension of roots, the adjusted insertion direction may extend approximately parallel or parallel to the adjusted direction of extension of roots. This adjusted direction of extension of roots may describe a direction of anchoring of the orthodontically adjusted tooth within a bone of a jaw, mandible or maxilla. This direction of anchoring may provide a highest stability, i.e., forces acting in this direction may be best absorbed by the tooth. Thus, forces acting in the direction of the adjusted insertion direction may be best absorbed by the tooth. In this case, forces acting in the adjusted insertion direction may be best absorbed by the tooth.

A beneficial insertion direction may be related to the direction of the roots of the tooth, since these roots ensure the stability of the tooth. The direction of the tooth may, e.g., be estimated from the original patient tooth. It may be desirable, to automatically adjust the insertion direction to bend it slightly according to the planned restoration tooth, e.g., with some configurable maximum deviation from the original patient tooth root direction.

For example, scan data of an X-ray and/or CBCT scan of the tooth are received. The scan data may be indicative of the direction of extension of roots of the three-dimensional digital tooth model. The scan data is used to determine the direction of extension of roots of the three-dimensional digital tooth model.

For example, the direction of extension of roots of the three-dimensional digital tooth model may be estimated using the form of the three-dimensional digital tooth model. For example, the direction of extension of roots of the three-dimensional digital tooth model may be estimated using a library of typical forms of roots. For example, machine learning module may be used for estimating the direction of extension of roots of the three-dimensional digital tooth model.

For example, a trained machine learning module may be used for determining a direction of extension of roots. A description of the direction of extension of roots may be received as output from the trained machine learning module in response to providing the three-dimensional digital tooth model as input. For example, the three-dimensional digital tooth model may be provided as part of a three-dimensional digital dentition model as input to the trained machine learning module.

The trained machine learning module may be trained to provide the description of the direction of extension of roots as output in response to receiving the three-dimensional digital tooth model as input. The trained machine learning module may be trained to provide the description of the direction of extension of roots as output in response to receiving a three-dimensional digital dentition model comprising the three-dimensional digital tooth model as input.

For example, a providing of the trained machine learning module may comprise providing a machine learning module to be trained. A set of training datasets may be provided for training the machine learning module to be trained. For example, each training dataset may comprise a three-dimensional digital training tooth model as well as a training description of the direction of extension of roots. The machine learning module to be trained may be trained to provide the training descriptions of the directions of extension of roots of the training datasets as an output in response to receiving the three-dimensional digital training tooth models of the respective training datasets as input.

For example, each training dataset may comprise a three-dimensional digital training dentition model as well as a training description of a direction of extension of roots. The three-dimensional digital training dentition models may comprise three-dimensional digital training tooth models, for which the training descriptions of the directions of extension of roots are to be determined. The machine learning module to be trained may be trained to provide the training descriptions of the directions of extension of roots of the training datasets as an output in response to receiving the three-dimensional digital training dentition models of the respective training datasets as input.

The machine learning module to be trained may, e.g., be an untrained machine learning module, a pre-trained machine learning module or a partially trained machine learning module. The machine learning module being trained may be an untrained machine learning module, which is trained from scratch. Alternatively, the machine learning module being trained may be a pre-trained or partially trained machine learning module. In general, it may not be necessary to start with an untrained machine learning module, e.g., in deep learning. For example, one may start with a pre-trained or partially trained machine learning module. The pre-trained or partially trained machine learning module may have been pre-trained or partially trained for the same or a similar task. Using a pre-trained or partially trained machine learning may, e.g., enable a faster training of the trained machine learning module to be trained, i.e., the training may converge faster. For example, transfer learning may be used for training a pre-trained or partially trained machine learning module. Transfer learning refers to a machine learning process, which rather than starting the learning process from scratch starts from patterns that have been previously learned, when solving a different problem. This way previous learnings may, e.g., be leveraged, avoiding to start from scratch. A pre-trained machine learning module is a machine learning module that was trained previously, e.g., on a large benchmark dataset to solve a problem similar to the one to be solved by the additional learning. In case of a pre-trained machine learning module a previous learning process has been completed successfully. A partially trained machine learning module is a machine learning module, which has been partially trained, i.e., the training process may not have been completed yet. A pre-trained or partially machine learning module may, e.g., be import and trained to be used for the purposes disclosed herein.

For example, the adjusted insertion direction of the dental restoration element is identical with the adjusted direction of extension of roots. In this case, the adjusted insertion direction of the dental restoration element may extend parallel to the adjusted direction of extension of roots.

For example, a deviation of the adjusted insertion direction of the dental restoration element from the adjusted direction of extension of roots is equal to or smaller than a predefined first threshold. Thus, the adjusted insertion direction of the dental restoration element may, e.g., extend approximately parallel to the adjusted direction of extension of roots. A maximum deviation from the parallel direction may be given by the predefined first threshold.

For example, the method further comprises a receiving of a three-dimensional digital gingiva model. The three-dimensional digital gingiva model is descriptive of a current form and a current position of a gingiva around the tooth within the dentition. The method may further comprise an adjusting of the form and the position of the three-dimensional digital gingiva model to the orthodontic adjustment of the position of the three-dimensional digital tooth model.

By adjusting of the form and the position of the three-dimensional digital gingiva model to the orthodontic adjustment, an adjusted three-dimensional digital gingiva model may be provided. The adjusted three-dimensional digital gingiva model may be descriptive of an adjusted form and an adjusted position of a gingiva around the tooth resulting from the orthodontic adjustment of the position of the three-dimensional digital tooth model. For determining a cervical preparation margin, e.g., the adjusted form and position of the gingiva around the tooth as described by the adjusted three-dimensional digital gingiva model may be taken into account.

The three-dimensional digital gingiva model may be provided using scan data of the gingiva of the patient acquired, at least around the tooth, using a scanner, e.g., an optical scanner. The scan may be a direct scan of the patient's gingiva, e.g., an intraoral scan. Alternatively or additionally, an indirect scan of the patient's gingiva may be used to acquire the scan data. For example, an impression of the patient's dentition comprising the gingiva or a physical model of the detention, like a plaster model, comprising the gingiva may be scanned.

The three-dimensional digital gingiva model may, e.g., be provided as part of a three-dimensional digital dentition model of the dentition of the patient. The three-dimensional digital gingiva model may be a three-dimensional digital model of a current state of the gingiva, at least around the tooth. This three-dimensional digital gingiva model as a current state model of the gingiva may resemble an actual state of the patient's gingiva, i.e., it may be a digital replica of the physical gingiva. The three-dimensional digital gingiva model may in particular resemble the geometric form of the gingiva. The three-dimensional digital gingiva model may further resemble the current position of the physical gingiva relative to the teeth within the physical dentition. The three-dimensional digital gingiva model may, e.g., be generated by a computer system executing the method for determining the parameters of the ortho-restorative measures or it may be received from an external source. The external source may, e.g., be a server, like a cloud server, providing the three-dimensional digital gingiva model via a network. The external source may, e.g., be a removable storage device providing the three-dimensional digital gingiva model via a direct communication connection, e.g., wireless or via a wire.

For example, the method further comprises a using of the adjusted form and position of the three-dimensional digital gingiva for determining a cervical preparation margin of the preparation described by the one or more preparation parameters. Thus, for determining the cervical preparation margin, i.e., a margin line, the adjusted form and position of the three-dimensional digital gingiva as described by the adjusted three-dimensional digital gingiva model may be taken into account. The cervical preparation margin may, e.g., comprise one of the following types of a margin: feather edge, knife edge, chamfer, bevel, shoulder, beveled shoulder.

For example, the method further comprises a generating of a three-dimensional digital dental restoration model defining the dental restoration element. The three-dimensional digital dental restoration model is adjusted to the one or more preparation parameters descriptive of the preparation of the prepared orthodontically adjusted tooth. The method further comprises an outputting of the three-dimensional digital dental restoration model.

Thus, a three-dimensional digital dental restoration model defining the dental restoration element may, e.g., be provided. This three-dimensional digital dental restoration model may, e.g., be used as a template for manufacturing the dental restoration element as a physical copy of the template.

For example, the generating of the three-dimensional digital dental restoration model comprises subtracting the orthodontically adjusted three-dimensional digital tooth model prepared as described by the one or more preparation parameters from the three-dimensional digital restorative tooth model.

Thus, arranging a dental restoration element as described by the three-dimensional digital dental restoration model on a prepared tooth as described by the orthodontically adjusted three-dimensional digital tooth model prepared accruing to the preparation parameters may result in a restored tooth as defined by the three-dimensional digital restorative tooth model, i.e., in a tooth with the target form and position defined by the three-dimensional digital restorative tooth model.

For example, the generating of the three-dimensional digital dental restoration model further comprises subtracting an additional minimum space for applying a bonding material for bonding the dental restoration element from the three-dimensional digital restorative tooth model.

Thus, an additional minimum space may be provided between the dental restoration element and the prepared tooth, when arranging the dental restoration element on the prepared tooth. This additional minimum space may enable applying a predefined minimum quantity of bonding material between the of bonding material dental restoration element and the prepared tooth for bonding the dental restoration element to the prepared tooth.

For example, the method further comprises a controlling of a manufacturing device for manufacturing the dental restoration element in form of a physical copy of the three-dimensional digital dental restoration model. Thus, the three-dimensional digital dental restoration model may be used as a template for manufacturing the dental restoration element as a physical copy of the template.

For manufacturing the dental restoration element, e.g., computer-controlled additive and/ subtractive methods may be used. For example, the dental restoration element may be manufactured using one of the following: machining, 3D printing, casting.

Examples may have the beneficial effect, that the dental restoration element may be manufactured using a machining device configured to manufacture the dental restoration element by processing a blank of restoration material. The resulting dental restoration element may be configured to be arranged on the prepared tooth resulting in a restored tooth with the target form as defined by three-dimensional digital restorative tooth model. For example, the dental restoration element may be manufactured using a 3D printing device, i.e., a printer, configured to print the dental restoration element. The resulting dental restoration element may be configured to be arranged on the prepared tooth resulting in a restored tooth with the target form as defined by three-dimensional digital restorative tooth model.

Furthermore, using the orthodontic parameters three-dimensional digital models of one or more orthodontic appliances, e.g., removable aligners, configured to be used for orthodontically adjusting the tooth as defined by the orthodontic parameters may be generated. The method further comprises a controlling of a manufacturing device for manufacturing the one or more orthodontic appliances in form of a physical copies of the three-dimensional digital models of the one or more orthodontic appliances. Thus, the three-dimensional digital models of the one or more orthodontic appliances may be used as a template for manufacturing the one or more orthodontic appliances as a physical copy of the template.

For manufacturing the one or more orthodontic appliances, e.g., computer-controlled additive and/ subtractive methods may be used. For example, the one or more orthodontic appliances may be manufactured using one of the following: machining, 3D printing, casting.

For generating a three-dimensional digital model of an orthodontic appliance, like a removable aligner, e.g., a three-dimensional digital library model from a digital orthodontic appliance library may be used. For example, the three-dimensional digital library model may in addition be adjusted using the orthodontic parameters. For example, the three-dimensional digital library model may in addition be adjusted to the dentition of the patient. For example, the three-dimensional digital model of the orthodontic appliance may be generated from scratch.

For example, a trained machine learning module may be used for generating the three-dimensional digital model of the orthodontic appliance. One or more three-dimensional digital models of one or more orthodontic appliances may be received as output from the trained machine learning module in response to providing the orthodontic parameters as input. Alternatively or additionally, the three-dimensional digital tooth model and the orthodontically adjusted three-dimensional digital tooth model a may be provided as input to the trained machine learning module.

The trained machine learning module may be trained to provide the one or more three-dimensional digital models of the one or more orthodontic appliances as output in response to receiving the three-dimensional digital tooth model and the orthodontically adjusted three-dimensional digital tooth model or the three-dimensional digital tooth model and the orthodontic parameters as input.

For example, a providing of the trained machine learning module may comprise providing a machine learning module to be trained. A set of training datasets may be provided for training the machine learning module to be trained. For example, each training dataset may comprise a three-dimensional digital training tooth model, an orthodontically adjusted three-dimensional digital training tooth model as well as one or more three-dimensional digital training models of one or more orthodontic appliances. The machine learning module to be trained may be trained to provide the one or more three-dimensional digital training models of one or more orthodontic appliances of the training datasets as an output in response to receiving the three-dimensional digital training tooth models and the orthodontically adjusted three-dimensional digital training tooth models of the respective training datasets as input. For example, each training dataset may comprise a three-dimensional digital training tooth model, orthodontic training parameters as well as one or more three-dimensional digital training models of one or more orthodontic appliances. The machine learning module to be trained may be trained to provide the one or more three-dimensional digital training models of one or more orthodontic appliances of the training datasets as an output in response to receiving the three-dimensional digital training tooth models and orthodontic training parameters of the respective training datasets as input.

The machine learning module to be trained may, e.g., be an untrained machine learning module, a pre-trained machine learning module or a partially trained machine learning module. The machine learning module being trained may be an untrained machine learning module, which is trained from scratch. Alternatively, the machine learning module being trained may be a pre-trained or partially trained machine learning module. In general, it may not be necessary to start with an untrained machine learning module, e.g., in deep learning. For example, one may start with a pre-trained or partially trained machine learning module. The pre-trained or partially trained machine learning module may have been pre-trained or partially trained for the same or a similar task. Using a pre-trained or partially trained machine learning may, e.g., enable a faster training of the trained machine learning module to be trained, i.e., the training may converge faster. For example, transfer learning may be used for training a pre-trained or partially trained machine learning module. Transfer learning refers to a machine learning process, which rather than starting the learning process from scratch starts from patterns that have been previously learned, when solving a different problem. This way previous learnings may, e.g., be leveraged, avoiding to start from scratch. A pre-trained machine learning module is a machine learning module that was trained previously, e.g., on a large benchmark dataset to solve a problem similar to the one to be solved by the additional learning. In case of a pre-trained machine learning module a previous learning process has been completed successfully. A partially trained machine learning module is a machine learning module, which has been partially trained, i.e., the training process may not have been completed yet. A pre-trained or partially machine learning module may, e.g., be import and trained to be used for the purposes disclosed herein.

For example, the 3D digital restoration model may be used as a positive to define a negative of the physical dental restoration element in form of a negative 3D digital restoration model. The negative 3D digital restoration model may be used to manufacture, e.g., using machining or 3D printing, a casting matrix. The casting matrix may be configured for casting the physical dental restoration element by inserting restoration material into the casting matrix and curing the inserted restoration material. The resulting dental restoration element may be configured to be arranged on the prepared tooth resulting in a restored tooth with the target form as defined by three-dimensional digital restorative tooth model.

For example, the determining of the one or more orthodontic parameters of the orthodontic adjustment of the position of the three-dimensional digital tooth model further comprises a determining of a final position of the core section of the orthodontically adjusted three-dimensional digital tooth model within the three-dimensional digital reduced restorative tooth model. The determining of a final position of the core section of the orthodontically adjusted three-dimensional digital tooth model within the three-dimensional digital reduced restorative tooth model may comprise a fine adjustment of the final position of the core section within the three-dimensional digital. The preparation as described by the preparation parameters may be adjusted to take into account the fine adjustment of the final position of the core section as well. Thus, a fine adjustment of the preparation may be determined as well.

For example, the determining of the final position comprises further adjusting, e.g., repeatedly further adjusting the position of the three-dimensional digital tooth model and determining one or more updated preparation parameters of the preparation of the further adjusted three-dimensional digital tooth model, until a predefined stop criterion for the further adjusting is satisfied by the updated preparation parameters.

The position of the tooth resulting from the orthodontic movement and the preparation of the tooth required to prepare the tooth for receiving the dental restoration element may depend on each other. In order to take this dependence into account, e.g., every criterion to be fulfilled by the ortho-restorative measures may be observed at once. In order to take this dependence into account, e.g., an iterative approach may be used. The iterative approach may comprise in each iterative step a predefined movement of the tooth and an evaluation of the criteria to be fulfilled by the preparation. For this purpose, the required preparation may be updated in each iterative step taking into account the predefined movement executed in the respective step.

For example, the predefined stop criterion comprises one or more of the following criteria: a tooth mass loss descriptive of an amount of tooth material being removed by the preparation described by the one or more updated preparation parameters reaching a minimum, the core section of the orthodontically adjusted three-dimensional digital tooth model arranged within the three-dimensional digital reduced restorative tooth model reaching a border of the three-dimensional digital reduced restorative tooth model, a maximum distance between a surface of the orthodontically adjusted three-dimensional digital tooth model and a surface of the three-dimensional digital restorative tooth model reaching a predefined first maximum value, the orthodontic adjustment reaching a predefined second maximum value, a deviation of the insertion direction from a reference direction reaching a second threshold, a deviation of an occlusal direction from a long axis of the tooth reaching a third threshold, a deviation of the occlusal direction from the direction of extension of roots reaching a fourth threshold.

For example, a final position of the core section may be adjusted until a tooth mass loss descriptive of an amount of tooth material being removed by the preparation described by the one or more updated preparation parameters reaches a minimum. Thus, it may be ensured that an amount of healthy tooth tissue being removed is kept to a minimum. For the virtual preparation, a tooth mass loss may be computed. The tooth mass loss may be defined using a volume of tooth material removed by the preparation or a percentage of tooth mass, e.g., volume, being removed relative to a total tooth mass, e.g., volume. The volume may, e.g., be determined using statistical measurements of an extension of the tooth and/or prepared tooth in main directions of the tooth, e.g., in mesial, distal, and/or occlusal direction. A minimum of the tooth mass loss may be indicative of a minimum amount of tooth material being removed by the preparation. A minimum of the tooth mass loss may be reached, when a further adjusting of the position of the core section results in a reduction of the mass loss smaller than a predefined threshold or in an increase of the mass loss.

Examples may have the beneficial effect, that a tooth mass loss, i.e., an amount of tooth material to be removed as defined by the preparation parameters may reach a minimum. Thus, it may be effectively avoided to remove too much tooth material from the respective tooth, e.g., grind down too much from the tooth. Any unnecessary loss of healthy tooth tissue may be avoided. Furthermore, e.g., a damaging of the pulp chamber or a too extensive removal of dentin may be avoided. Otherwise, there may be a danger of the remaining tooth dying due to the damaging of the pulp chamber and/or of a too extensive removal of the dentin. By reducing the tooth mass loss, e.g., an early tooth loss and thus loss of the restoration as a consequence of a dying of the tooth may be avoided.

For example, a final position of the core section may be adjusted until the core section arranged within the three-dimensional digital reduced restorative tooth model due to the orthodontic adjustment reaches a border of the three-dimensional digital reduced restorative tooth model. Thus, it may be avoided that the core section is moved out of the three-dimensional digital reduced restorative tooth model due to the orthodontic adjustment of the three-dimensional digital tooth model. Remaining within the three-dimensional digital reduced restorative tooth model, the core section may be effectively protected against being prepared.

For example, a final position of the core section may be adjusted until a maximum distance between a surface of the orthodontically adjusted three-dimensional digital tooth model and a surface of the three-dimensional digital restorative tooth model reaches a predefined first maximum value, e.g., falls below the predefined first maximum value or increases to the predefined first maximum value. Thus, it may be avoided that a maximum distance between the surface of the orthodontically adjusted three-dimensional digital tooth model and the surface of the three-dimensional digital restorative tooth model becomes larger than the predefined first maximum value. This maximum distance has to be spanned or filled by restoration material, in order to build a restored tooth as defined by the three-dimensional digital restorative tooth model. In other words, this maximum distance may describe a maximum thickness of the dental restorative element. For example, in case of a ceramic dental restoration element, a danger of the dental restorative element breaking may become relevant, if maximum thickness of the dental restorative element becomes larger than the predefined first maximum value. By limiting the maximum distance to be equal or smaller than the predefined first maximum value, a maximum thickness of the dental restorative element may be effectively limited avoiding or significantly reducing the risk of the dental restorative element breaking due to a maximum thickness being too large.

For example, a final position of the core section may be adjusted until the orthodontic adjustment reaching a predefined second maximum value. The predefined second maximum value may define a limit for the orthodontic adjustment, e.g., a maximum orthodontic adjustment reachable using the orthodontic measures intended to be used for implementing the orthodontic adjustment and/or an anatomic limit for the maximum orthodontic adjustment preventing a further movement of the tooth. Thus, it may be avoided that a final position is determined, which is not reachable by the orthodontic measures intended to be used and/or not reachable due to an anatomic limit preventing a further movement of the tooth.

For example, a final position of the core section may be adjusted until a deviation of the insertion direction from a reference direction reaches a second threshold, i.e., falls below the second threshold or increases to the second threshold. Thus, it may be ensured that a maximum deviation of the insertion direction from the reference direction is equal to or smaller than the second threshold.

The reference direction may, e.g., be provided by a long axis of the tooth. Thus, it may be ensured that a maximum deviation of the insertion direction from the long axis of the tooth is equal to or smaller than the second threshold. The reference direction may, e.g., be provided by the direction of extension of roots. Thus, it may be ensured that a maximum deviation of the insertion direction from the direction of extension of roots of the tooth is equal to or smaller than the second threshold. The reference direction may, e.g., be provided by a second insertion direction defined for a second tooth. Thus, it may be ensured that a maximum deviation of the insertion direction from the second insertion direction defined for the second tooth is equal to or smaller than the second threshold. Having two insertion directions for two tooth coinciding or at least approximately coinciding may be beneficial for a dental restoration element in the form of a bridge. In case of a dental restoration element in form of a bridge, there may be two abutment teeth, which support and retain the bridge. The tooth, for which the parameters of the ortho-restorative measures are determined, may be one of the two abutment teeth, while the second tooth may be the other one of the two abutment teeth. The bridge may have to arranged on both abutment teeth simultaneously using a common insertion direction.

For example, a final position of the core section may be adjusted until a deviation of an occlusal direction from a long axis of the tooth reaches a third threshold, i.e., falls below the second threshold or increases to the third threshold. Thus, it may be ensured that a maximum deviation of the long axis of the tooth from the occlusal direction is equal to or smaller than the third threshold. The occlusal direction is a direction extending perpendicular to an occlusal plane. Restricting a deviation of the occlusal direction from the long axis of the tooth by the third threshold may result in a long axis of the orthodontically adjusted tooth extending approximately parallel or parallel to the occlusal direction. Thus, it may be avoided that the long axis of the orthodontically adjusted tooth deviates at all or deviates to much from the occlusal direction, i.e., that the orthodontically adjusted tooth is aligned in the occlusal direction.

For example, a final position of the core section may be adjusted until a deviation of the occlusal direction from the direction of extension of roots reaching a fourth threshold, i.e., falls below the fourth threshold or increases to the fourth threshold. Thus, it may be ensured that a maximum deviation of the direction of extension of roots from the occlusal direction is equal to or smaller than the fourth threshold. Restricting a deviation of the occlusal direction from the direction of extension of roots by the fourth threshold may result in a direction of extension of roots of the orthodontically adjusted tooth extending approximately parallel or parallel to the occlusal direction.

This adjusted direction of extension of roots may describe a direction of anchoring of the orthodontically adjusted tooth within a bone of a jaw, mandible or maxilla. This direction of anchoring may provide a highest stability, i.e., forces acting in this direction may be best absorbed by the tooth. Thus, forces acting in the occlusal direction may be best absorbed by the tooth.

For example, the method further comprises a determining of a direction of the orthodontic adjustment of the three-dimensional digital tooth model using one or more reference points of the three-dimensional digital tooth model and one or more reference points of the three-dimensional digital restorative tooth model.

The spatial relation between the reference points of the three-dimensional digital tooth model and the reference points of the three-dimensional digital restorative tooth model may be used to determine the direction of the orthodontic adjustment of the three-dimensional digital tooth model. The orthodontic adjustment of the three-dimensional digital tooth model may, e.g., comprise an adjusting of the position and/or alignment of the three-dimensional digital tooth model such that the reference points of the three-dimensional digital tooth model coincide with the reference points of the three-dimensional digital restorative tooth model. For example, a registration algorithm may be used for determining an orthodontic adjustment of the three-dimensional digital tooth model such that the reference points of the three-dimensional digital tooth model coincide with the reference points of the three-dimensional digital restorative tooth model.

For example, the determining of the direction of the orthodontic adjustment may comprise using a center of mass of the three-dimensional digital tooth model indicated by a reference point of the one or more reference points of the three-dimensional digital tooth model and a center of mass of the three-dimensional digital restorative tooth model indicated by a reference point of the one or more reference points of the three-dimensional digital restorative tooth model.

The direction of the orthodontic adjustment may be defined by the spatial relation between the center of mass of the three-dimensional digital tooth model and the center of mass of the three-dimensional digital restorative tooth model. The orthodontic adjustment of the three-dimensional digital tooth model may, e.g., comprise an adjusting of the position and/or alignment of the three-dimensional digital tooth model such that the center of mass of the three-dimensional digital tooth model coincides with the center of mass of the three-dimensional digital restorative tooth model.

For example, the determining of the direction of the orthodontic adjustment may comprise using one or more reference axes of the three-dimensional digital tooth model defined using the one or more reference points of the three-dimensional digital tooth model and one or more reference axes of the three-dimensional digital restorative tooth model defined using the one or more reference points of the three-dimensional digital restorative tooth model.

The direction of the orthodontic adjustment may be defined by the spatial relation between the reference axes of the three-dimensional digital tooth model and the reference axes of the three-dimensional digital restorative tooth model. The orthodontic adjustment of the three-dimensional digital tooth model may, e.g., comprise an adjusting of the position and/or alignment of the three-dimensional digital tooth model such that the reference axes of the three-dimensional digital tooth model coincide with the reference axes of the three-dimensional digital restorative tooth model. The one or more reference may, e.g., comprise one or more of the following axes: an approximal axis extending in approximal direction, i.e., in mesial and distal direction, a vestibular axis/oral extending in vestibular/oral direction, i.e., in labial/buccal and lingual/palatal direction, an occlusal axis extending in occlusal/incisal direction.

For example, the determining of the direction of the orthodontic adjustment may comprise defining a reference position for the three-dimensional digital tooth model using a registering of the three-dimensional digital tooth model with the three-dimensional digital restorative tooth model with the registering using the one or more reference points of the three-dimensional digital tooth model and the one or more reference points of the three-dimensional digital restorative tooth model. A registration may be used for determining the direction of the orthodontic adjustment of three-dimensional digital tooth model. The orthodontic adjustment of the three-dimensional digital tooth model resulting from the registering may, e.g., define an adjusting of the position and/or alignment of the three-dimensional digital tooth model such that the reference points of the three-dimensional digital tooth model used for the registration coincide with the reference points of the three-dimensional digital restorative tooth model.

For example, the determining of the direction of the orthodontic adjustment may comprise defining a reference position for the three-dimensional digital tooth model using a minimization of a combination of distances between the one or more reference points of the three-dimensional digital tooth model and the one or more reference points of the three-dimensional digital restorative tooth model. The orthodontic adjustment determined such that an adjusting of the position and/or alignment of the three-dimensional digital tooth model results in a minimization of a combination of distances between the reference points of the three-dimensional digital tooth model and the reference points of the three-dimensional digital restorative tooth model. Thus, the reference points of the three-dimensional digital tooth model may not necessarily coincide with the reference points of the three-dimensional digital restorative tooth model, but a combination, e.g., sum, of distances between the reference points of the three-dimensional digital tooth model and the reference points of the three-dimensional digital restorative tooth model may be minimized. For example, a signed sum may be used, i.e., the distances may be assigned with signs depending on whether the reference points of the three-dimensional digital tooth model are arranged within or outside the three-dimensional digital restorative tooth model.

For example, the method further comprises a receiving of a definition of the direction for the orthodontic adjustment of the three-dimensional digital tooth model. The direction for the orthodontic adjustment of the three-dimensional digital tooth model may, e.g., be received in form of an input.

For example, the dental restoration element is one of the following: veneer, a coping with coating, an inlay, an onlay, an overlay, crown, a bridge.

A veneer is a layer of restoration material placed over a tooth, in order to cover one or more surfaces of the tooth. Veneers may, e.g., improve the aesthetics of a smile and/or protect the tooth's surface from damage. Indirect veneers are manufactured outside of a patient's oral cavity and then arranged on a tooth within the oral cavity. Direct veneers are built-up directly on a tooth inside a patient's oral cavity. The tooth may be prepared for receiving the veneer.

For example, two main types of restoration material may be used for manufacturing a veneer: composite and dental porcelain. A composite veneer may be directly placed on the tooth, i.e., built-up in the mouth of patient, or indirectly manufactured outside the mouth of the patient and later bonded to the tooth. In contrast, a porcelain veneer may only be indirectly manufactured outside the mouth of the patient. A full veneer crown, on the one hand, is dental restoration element that is configured to cover all the coronal tooth surfaces, i.e., the mesial, distal, facial, lingual and occlusal surfaces. A laminate veneer, on the other hand, is a thin layer of restoration material that may, e.g., cover only a single surface of a tooth, e.g., a labial surface. A laminate veneer may generally be used for aesthetic purposes.

Coping with coating refers to a dental restoration element, which is directly built on the tooth to be restored. An underlying coping is arranged on the tooth. The coping is configured to replicate the performance of a natural tooth. On the coping a coating is applied, which is configured to replicate the natural aesthetics of the tooth to be restored. For example, a ceramic coating may be used. Using a coping with coating to restore a tooth may have the beneficial effect of providing a dental restoration element that combines both durability and natural aesthetics.

Inlays, onlays, and overlays are forms of indirect restoration manufactured outside of a patient's oral cavity as a single, solid piece that fits a specific size and shape of a reception prepared within a tooth of the oral cavity. The inlay, onlay, or overlay is arranged within the respective reception and bonded, e.g., cemented, in place on the prepared tooth. In contrary to a crown, inlays, onlays, and overlays are arranged within a reception prepared within a damaged tooth.

An inlay is configured to cover an inner, e.g., central, section of an occlusal surface of a tooth. Thus, an inlay may be used to replace an internal part of a damaged tooth and cover part of the occlusal surface of the respective tooth. The inlay is positioned within hard tissues of the tooth, but does not cover a cusp or pointed part of the tooth. In comparison to an inlay, an onlay in addition covers at least one of the cusps of the tooth. In comparison to an onlay, an overlay covers a larger portion of the occlusal surface of the tooth extending beyond the cusps.

The inlays, onlays, and overlays may, e.g., be configured as pinlays. Pinlays are characterized by an additional use of pins to increase their retention. Thus, any inlay, onlay, or overlay may be configured as a pinlay by being braced by pins. Such a pin may, e.g., be inserted at an edge of the tooth or parallel to a groove. In general, the base of a pin is selected to lie in a section of the tooth surface that is free of damage.

A crown is a dental restoration element in form of a dental cap. Such a crown may, e.g., be provided in form of a full coverage crown or a partial crown, like a 7/8 crown or a 3/4 crown. Partial crowns, like 7/8 and 3/4 crowns, are hybrids between an onlay and a full coverage crown. They are categorized based on an estimated degree of wall coverage of the walls of the prepared tooth, on which the respective crown is arranged. For example, a 3/4 crown aims to cover three thirds of the walls of the tooth to be restored, e.g., three out of the four walls, e.g., with the buccal wall being spared. For example, a 7/8 crown aims to cover seven eights of the walls of the tooth to be restored. A full coverage crown completely caps or encircles a prepared tooth. A crown may, e.g., be required when a large cavity threatens the health of a tooth. A crown may be bonded to the tooth prepared for receiving the crown using a bonding material, e.g., a dental cement. A crown may be made from various materials, which may be fabricated using indirect methods, i.e., outside the patient's oral cavity. Crowns may be used to improve strength, to improve appearance of teeth and/or to halt deterioration.

A bridge is a dental restoration element in form of a permanent appliance used to replace one or more missing teeth. A dental bridge comprises a plurality of artificial dental elements that are fused together, e.g., one or more artificial replacement teeth are definitively joined to adjacent teeth. A conventional bridge may be supported, e.g., by full coverage crowns, partial crowns, overlays, onlays or inlays on the abutment teeth. The abutment teeth require preparation and reduction to support the bridge.

For example, the one or more parameters of one or more ortho-restorative measures being determined may be used for providing a treatment plan descriptive of the orthodontic measures to be applied to the tooth. For example, the orthodontic parameters may be used for providing a treatment plan descriptive of the orthodontic measures to be applied for orthodontically adjusting the tooth as defined by the respective orthodontic parameters. For example, the preparation parameters may be used for providing a treatment plan descriptive of a preparation to be applied to the tooth as a part of the restorative measures to be applied, e.g., to the orthodontically adjusted tooth as defined by the respective orthodontic parameters. For example, the three-dimensional digital dental restoration model defining the dental restoration element may be used to provide a treatment plan descriptive of the restorative measures to be applied to the tooth. The restorative measures comprising arranging the dental restoration element defined by the three-dimensional digital dental restoration model on the tooth prepared as described by the preparation parameters. The tooth prepared as described by the preparation parameters may, e.g., be the orthodontically adjusted tooth as defined by the orthodontic parameters.

For example, the one or more parameters of one or more ortho-restorative measures being determined may be used for providing a treatment option descriptive of the orthodontic measures to be applied to the tooth. For example, the orthodontic parameters may be used for providing a treatment option descriptive of the orthodontic measures to be applied for orthodontically adjusting the tooth as defined by the respective orthodontic parameters. For example, the preparation parameters may be used for providing a treatment option descriptive of a preparation as a part of the restorative measures to be applied to the tooth, e.g., to the orthodontically adjusted tooth as defined by the respective orthodontic parameters. For example, the three-dimensional digital dental restoration model defining the dental restoration element may be used to provide a treatment option descriptive of the restorative measures to be applied to the tooth. The restorative measures comprising arranging the dental restoration element defined by the three-dimensional digital dental restoration model on the tooth prepared as described by the preparation parameters. The tooth prepared as described by the preparation parameters may, e.g., be the orthodontically adjusted tooth as defined by the orthodontic parameters.

For example, the method further comprises providing a treatment proposal for the dentition of the patient. A three-dimensional digital model of a current state of the dentition is received as a current state model using scan data of the dentition. The three-dimensional digital model of the current state of the dentition comprises the three-dimensional digital tooth model descriptive of a current form and a current position of the tooth within the dentition. A three-dimensional digital model of a target state of the dentition to be achieved is received as a target state model. The three-dimensional digital model of the target state of the dentition to be achieved comprises the three-dimensional digital restorative tooth model defining the target form and the target position of the tooth.

A set of treatment options for treating the tooth and/or the dentition comprising the tooth is received. Each of the treatment options defines one or more pre-defined measures of dentition modifications. Each of the treatment options are assigned with a set of one or more feasibility requirements to be met by the dentition for the treatment option to be feasible. One or more of the provided treatment options are checked. The checking comprises determining, whether the tooth and/or the dentition of the patient comprising the tooth is meeting the feasibility requirements assigned to the treatment option being checked using the current state model. In case the tooth and/or the dentition comprising the tooth is determined to meet the feasibility requirements assigned to the treatment option being checked, the treatment proposal is provided. The treatment proposal identifies the respective treatment option and implementation parameters determined for the measures of the identified treatment option. The implementation parameters are determined for modifying the current state model such that one or more discrepancies of the current state model relative to the target state model are compensated.

The set of treatment options may comprise a treatment option being assigned with the determined one or more parameters of one or more ortho-restorative measures as implementation parameters. The determined one or more parameters of one or more ortho-restorative measures may, e.g., comprise one or more orthodontic parameters descriptive of the orthodontic measures to be applied for orthodontically adjusting the tooth, one or more preparation parameters descriptive of a preparation to be applied to the tooth, e.g., to the orthodontically adjusted tooth as defined by the respective orthodontic parameters, and/or a three-dimensional digital dental restoration model defining the dental restoration element to be arranged on the tooth, e.g., to the orthodontically adjusted tooth as defined by the respective orthodontic parameters.

For example, the set of treatment options may comprise a plurality of treatment options with each of the treatment options of the plurality of treatment options being assigned with parameters of different ortho-restorative measures as implementation parameters determined for different types of dental restorative elements.

For example, the computer system may provide automatic treatment selection automatically selecting a treatment option for a dental treatment. The automatically selected treatment option may be provided as a treatment proposal. The treatment options of the set of treatment options may, e.g., be treatment options for improving the aesthetic appearance of a smile of a patient.

Different treatment options may be checked. If a check is positive for one of the treatment options, a recommendation in form of a treatment proposal recommending the respective treatment option may be issued. The treatment proposal may, e.g., be outputted via a user interface of the computer. For example, the treatment proposal may be displayed on a display of the computer system using a graphical user interface. The check may be positive, in case the treatment option checked is determined to be feasible in view of the current state of the tooth, i.e., current form and current position of the tooth, and/or the current state of the dentition comprising the current state of the tooth. A treatment option is feasible, if the tooth and/or the dentition is meeting the feasibility requirements required to be met for the respective treatment option. Thus, an automated recommendation for a dental treatment may be provided.

The treatment options may, e.g., be ordered according to a ranking order. For example, the treatment options may be checked subsequently following the ranking order, until the tooth and/or the dentition comprising the tooth is determined to meet the feasibility requirements assigned to the treatment option being checked. When feasibility requirements of a treatment option being checked are met, the checking may, e.g., be terminated and the respective treatment option may be provided in form of a treatment proposal as a recommendation. The checking may, e.g., be interrupted and waiting for a response to the treatment proposal provided. In case an acceptance command accepting the treatment proposal is received from a user, e.g., via a user interface, the checking may be terminated. In case a rejection command rejecting the treatment proposal is received from a user, e.g., via a user interface, the checking may be continued with the next treatment option in line according to the ranking order. Alternatively, all the treatment options may be checked and treatment proposal may comprise all the feasible treatment options of the set of treatment options being checked. The feasible treatment options may be provided, e.g., displayed, indicating their ranking order. Thus, a user may be enabled to select one of the feasible treatment options, e.g., taking into account their ranking.

The checking may take into account additional information being provided with regard of the dentition of the patient. This additional information may for example be provided in form of additional scan data. The additional scan data may provide information regarding external and/or internal structures of the teeth of the dentition. The additional information may be indicative of one or more contraindications of the dentition regarding one or more of the treatments options. In case there is a contraindication, like a tooth damage, excluding a usage of a particular treatment option per se, the dentition may be determined not to meet the feasibility requirements of the respective treatment option without requiring a further analysis, e.g., using implementation parameters of the respective treatment option.

The checking may, e.g., take into account implementation parameters for the measures of the treatment option being checked. The checking may, e.g., comprise determining implementation parameters for the measures of the treatment option being checked for modifying the current state model such that one or more discrepancies of the current state model relative to the target state model being compensated. Using the implementation parameters, it may be determined which preparations of the dentition are required for implementing the measures of a treatment option being checked. Determining whether the dentition is meeting the feasibility requirements may comprise determining whether the tooth and/or the dentition comprising the tooth allows to implement the respective measures according to the implementation parameters. For example, if implementing a crown requires removal of tooth tissue, it may be determined whether the tooth tissue is removable without risking to significantly damage the respective tooth, e.g., by damaging the pulp of the tooth. Furthermore, determining whether the tooth and/or the dentition comprising the tooth is meeting the feasibility requirements may comprise determining whether the tooth and/or the dentition comprising the tooth after the measures according to the implementation parameters having been implemented is meeting the feasibility requirements. For example, if implementing a crown requires removal of tooth tissue, it may be determined whether the tooth after the removal of the tooth tissue provides sufficient support for the crown.

The scan data of the dentition for providing the current state model may be acquired by using a scanner, e.g., an optical scanner. The scan may be a direct scan of the patient's dentition, e.g., an intraoral scan. Alternatively or additionally, an indirect scan of the patient's dentition may be used to acquire the scan data. For example, a dental impression of the patient's dentition or a dental model of the dentition, like a plaster model, may be scanned.

A current state model, i.e., a digital three-dimensional model of a current state of the dentition is received. This current state model may be generated using the scan data of a direct and/or indirect scan of the dentition. The current state model resembles an actual state of the patient's dentition, i.e., it may be a digital replica of the physical dentition. The current state model may in particular resemble the geometrical form of the physical dentition. The current state model may be generated by the computer system executing the method or it may be received from an external source. The external source may, e.g., be a server, like a cloud server, providing the current state model via a network. The external source may, e.g., be a removable storage device providing the current state model via a direct communication connection.

Furthermore, a digital three-dimensional model of a target state of the dentition is provided. This model is referred to as a target state model. The target state model may be resembling a digital replica of a physical state of the patient's dentition to be achieved by dental treatment. The target state model may, e.g., be generated using the current state model. For this purpose, the current state model may be digital modified until it resembles an intended state of the dentition. The modification may, e.g., comprise removing, replacing, resizing, reshaping, reorienting, and/or repositioning one or more digital teeth comprised by the current state model and/or adding one or more digital teeth, e.g., library teeth. For example, one or more digital teeth of the current state model may be replaced by one or more digital teeth from a tooth library. Furthermore, one or more of these library teeth may be adjusted. The adjustments may comprise, e.g., resizing, reshaping, reorienting and/or repositioning. The target state model may be generated by the computer system executing the method or it may be received from an external source. The external source may, e.g., be a server, like a cloud server, providing the target state model via a network. The external source may, e.g., be a removable storage providing the target state model via a direct communication connection.

A set of possible treatment options for treating the dentition is received. The set of possible treatment options comprises a plurality of treatment options. Each of the treatment options defines one or more pre-defined measures of dentition modifications. Each of the treatment options is assigned with a set of one or more feasibility requirements to be met by the dentition for the treatment option to be feasible. For example, the possible treatment options are alternative treatment option. Thus, each of these treatment options provides one or more measures for modifying a dentition. Each of these treatment options may provide one or more measures for modifying the current state of the dentition according to the current state model such that one or more differences between the current state of the dentition and the target state of the dentition defined by the target state model are reduced. For example, one or more of these treatment options provide treatment options for transferring the current state of the dentition into the target state of the dentition, i.e., to modify the current state such that the result of the modification matches the target state. For example, all of these treatment options provide treatment options for transferring the current state into the target state.

The set of treatment options may, e.g., comprise the treatment option of using one or more dental restorative elements, like veneer or crowns. The set of treatment options may, e.g., comprise the treatment option of replacing a tooth or tooth stump by a dental prosthesis. For example, a missing tooth may be replaced. For example, an existing tooth or remaining tooth part may be replaced. The replacement of an existing tooth or tooth part comprise an extraction of the respective tooth or tooth part. The replacing by a dental prosthesis may, e.g., be used on their own and/or in combination with one or more dental restorative elements. The treatment options may, e.g., comprise the treatment option of using orthodontics. The orthodontics may, e.g., be used on their own and/or in combination with one or more dental restorative elements.

For example, discrepancies between the current state of the dentition and the target state of the dentition may be determined. The discrepancies between the current state of the dentition and the target state of the dentition may be determined by a comparison of the current state model and the target state model. The discrepancies may, e.g., comprise geometrical discrepancies and/or color discrepancies. Geometrical discrepancies may comprise discrepancies regarding position, orientation, size and/or shape of teeth. The discrepancies may be used to determine, where treatment measures are required. For example, the discrepancies may be used to determine which teeth of the dentition have to be modified.

The discrepancies may be used to determine implementation parameters for an implementation of the pre-defined measures such that one or more discrepancies of the current state model relative to the target state model are compensated. For example, implementation parameters for the implementation of the pre-defined measures may be determined such that one or more discrepancies of the current state model relative to the target state model are compensated.

The implementation parameters may for example be determined depending on the target state model. For this purpose, implementation of the pre-defined measures may be determined such that they match the target state model. For example, the target model may define a margin within which the measures of the treatment options, e.g., veneers or crowns, have to be implemented. For example, a veneer may be configured such that it matches the lingual appearance of a tooth of the target state model. The configured veneer may be used to determine, whether and/or how an existing tooth of the current state model has to be prepared in order to provide a suitable support surface for the respective veneer. For example, a crown may be configured such that it matches the crown of a tooth of the target state model. The configured crown may be used to determine, how an existing tooth of the current state model has to be prepared in order to provide a tooth stump with a suitable support for the respective crown.

The implementation parameters may, e.g., define preparation requirements defining how teeth of the current state model have to be prepared for implementing the measures of a treatment option. Preparation requirements for teeth of the current state model may, e.g., be determined by a subtraction of the configured measures, like veneers or crowns. The configured measures may, e.g., be subtracted from the current state model registered with the target state model used to configure the measures. The configured measures may, e.g., be subtracted from the target state model registered with the current state model and the resulting reduced target state model may be subtracted from the current state model. Using these preparation requirements provided as a part of the implementation parameters, the treatment proposal may further comprise preparation instruction for the current state model, in order to prepare the current state model for the respective treatment measures of the respective treatment proposal.

For example, the method may comprise receiving two, e.g., 2D photographs of the patient. A first one of the photographs may be a smile photograph. The smile photograph may be a photograph of a smile of a patient, e.g., depicting the smiling patient. A second one of the photographs may be a "retracted" photograph, in which the patient's lips are retracted or pushed back with the help of a plastic mouthpiece, e.g., a transparent mouthpiece, to reveal the teeth of the patient as much as possible.

The photographs may be registered with the current state model, i.e., with a three-dimensional scan of the patient's dentition. The registration may for example use a point registration or an automatic registration using machine learning may be implemented. For example, the retracted photograph depicting more of the patient's teeth than the smile photograph may be used to register the three-dimensional current state model of the dentition with the 2D photographs of the teeth. The retracted photograph and the smile photograph may be registered with each other, e.g., using the parts of the teeth shown on both photographs. The smile photograph may be placed lingual in front of the current state model with the smile being cut out along the lip lines such that in the mouth of the patient the teeth of the three-dimensional model are visible instead of the cut-out teeth depicted in the smile photograph. For placing the smile photograph in front of the current state model, the registration of the smile photograph with the retracted photograph may be used. Alternatively, only the smile photograph may be used and registered with the current state model before cutting out the teeth, in case the teeth sections shown in the smile photograph are sufficient for a registration.

This placement of the smile photograph in front of the current state model may allow to see the current state model through the cut-out in the smile photograph. The current state model may be modified in order to provide the target state model. Replacing the current state model by the target state model and vice versa, the effects of the modifications of the current state model resulting in the target state model may be illustrated in context of the 2D smile photograph. Thus, a realistic impression of the aesthetic appears of possible three-dimensional modifications of the patient dentition may be provided in the 2D photograph. In particular, the effects of such modifications on the aesthetic appearance of the patient's smile may be illustrated.

The target model may, e.g., be generated using library teeth from the tooth library. For example, one or more teeth of the patient as defined by the current state model may be replaced by a tooth from the tooth library. The current state model behind the smile photograph may be replaced by the resulting target state model. Thus, the result of the modifications of the current state model and their effects on the smile of the patient, in particular on the aesthetic appearance of the smile, may be determined immediately and may, e.g., be presented to the patient. Thus, a realistic impression of the potential results of a treatment of the patient's dentition on the patient's smile, in particular on its aesthetic appearances, may be illustrated.

After generating a satisfying target state model and, e.g., checking the aesthetic effect of the respective target state model on the smile of the patient, a treatment proposal for the dentition of the patient in order to achieve the target model may be provided. For this purpose, the set of treatment options for treating the dentition may be checked.

For example, in case the result of applying the treatment according to the treatment proposal to the current state model differs from the target state model, a modified target model may be generated showing the result of the applying the treatment according to the treatment proposal. Furthermore, the aesthetic effect of the respective modified target state model on the smile of the patient may be checked. For this purpose, the target state model behind the smile photograph may be replaced by the modified target state model. Thus, the result of the modifications of the current state model according to the treatment proposal and their effects on the smile of the patient, in particular on the aesthetic appearance of the smile, may be determined and may, e.g., be presented to the patient. Thus, a realistic impression of the potential results of a treatment of the patient's dentition according to the treatment proposal on the patient's smile, in particular on its aesthetic appearances, may be illustrated.

By checking feasibility requirements, when selecting a treatment proposal, it may be ensured that the proposed treatment option is actually feasible. Thus, before applying a treatment, the risk of surprising obstacles arising during application may be reduced or minimized. Otherwise, such obstacles may, e.g., result in an insufficient result of the treatment.

Thus, it may be avoided that in the process of designing, e.g., a dental restorative element, it is determined that the dental restorative element cannot be implemented, e.g., due to a violation of minimum thicknesses of the dental restorative element or because a bonding surface is too small. The dentition may, e.g., only allow for a dental restorative element, like a veneer, which is too thin and/or provide a bonding surface is too small. For example, in case of a crown designed using a library tooth, it may be avoided to determine during designing the crown using the library tooth that the respective crown cannot be designed with the desired result on the available preparation. For example, the dentition may only allow for preparations, which are incompatible with the intended and/or required design of the crown.

Furthermore, it may be avoided that a more invasive treatment option is applied, even though a less invasive may be possible in order to achieve the same or an equivalent result, in particular the same or an equivalent aesthetic effect on the smile of a patient. More invasive may, e.g., refer to a larger loss of natural tooth tissue. For example, it may be avoided that a crown is prepared, e.g., because of uncertainties whether a veneer may be possible, although a veneer would actually be possible. Preparing a crown, even though a veneer is possible, may lead to unnecessarily losses of healthy teeth tissue or even complete healthy teeth by the patient. This may be avoided by using the feasibility check. Based on the feasibility check, it may be determined, whether, e.g., veneers are actually a feasible treatment option for the dentition of the individual patient. For example, only in case veneers are no feasible treatment option, crowns or a complete replacement of teeth, e.g., using implants, may be checked.

Furthermore, it may be avoided that a dental restorative element, like a crown, is prepared, even though it is not feasible. For example, a crown may not fit. For example, e.g., minimum thicknesses may not be met due to insufficient space. The crown may be adjusted with a wall thickness below a required minimum thickness, which may result in a breaking of the crown after a short period of time.

Furthermore, it may be avoided that a first treatment option is applied, which turns out to be infeasible or to provide an insufficient result, such that several different treatment options may have to be applied before a feasible and satisfying result is reached.

The decision of which treatment option to choose may be facilitated by providing a treatment proposal based on a check of feasibility requirements. Furthermore, the treatment proposal may comprise instructions, e.g., based on the implementation parameters, as how exactly the patient's teeth is to be prepared for the treatment option proposed.

The target model may, e.g., be generated replacing teeth of the current state model by teeth from a tooth library. The teeth of the current state model may be segmented at the position, where the desired library teeth are placed. The teeth may, e.g., be segmented automatically or semi-automatically. The segmentation of the teeth of the current state model may enable a digital tooth extraction. A digital three-dimensional model of a library tooth may be placed and adjusted at the position of the extracted tooth. The library tooth may define a margin in which the preparation of the original tooth of the current state model may take place. The current state model may, e.g., be presented via a user interface in a transparent form, overlaid over the target state model being generated, e.g., by replacing original teeth with library teeth.

For a crown, it may be required that a prepared tooth stump, on which the crown is to placed, does not become too thin and/or pointed. Furthermore, in order to check a minimum thickness of a veneer or a crown, a distance between an outer surface of the veneer or crown opposing a bonding surface of the veneer or crown may be measured. In case the minimum thickness requirement is violated, the veneer or crown may be regenerated with a larger thickness. In this case, it may, e.g., have to be checked again, whether a prepared tooth stump still has a sufficiently large diameter.

The generated dental restorative element, e.g., veneer or crown, may be subtracted from the current state model in order to define a preparation of the current state model required for implementing the respective treatment option.

The treatment proposal may provide the implementation parameters as part of a description describing how to prepare the current state model for applying the proposed treatment option. Guiding instructions may be providing, identifying where tooth tissue has to be removed to which extend in order to prepare the current state of the dentition for applying the proposed treatment option.

For example, one or more of the feasibility requirements depend on the implementation parameters of the measures of the treatment option. The determining whether the dentition of the patient is meeting the feasibility requirements assigned to the treatment option being checked may be further based on the implementation parameters determined for the treatment option being checked.

The implementation parameters determined for the measures of a treatment option may define which modifications of the current state model are required in order to execute the respective treatment option. For example, the implementation parameters may define how much healthy tooth tissue has to be removed in order to provide a sufficient support surface for the veneer. For example, the implementation parameters may define how much healthy tooth tissue has to be removed in order to provide a preparation of a tooth suitable to support a ground. In case of a tooth extraction and replacement of the respective tooth by an implant, the implementation parameters may define the extraction of the respective tooth. It may be checked whether the current state model allows for the required modifications. If the current state model and thus the dentition does not allow for the required modifications, the feasibility requirements may not been meet.

For example, feasibility requirements may depend on implementation parameters, if the implementation parameters define a support for a measure of a respective treatment option, e.g., veneer or ground. The feasibility requirements may comprise requirements to be met by a respective support. Thus, the implementation parameters determined may be checked as well in order to ensure that the respective implementation parameters are not in conflict with feasibility requirements of the respective treatment option.

For example, the receiving of the current state model comprises generating the current state model using the scan data. The current state model may, e.g., be generated using scan data acquired by an intraoral scan of the dentition of the patient. The intraoral scan may for example be an optical scan. Alternatively, the scan data may be acquired by scanning an impression of the dentition of the patient. The impression may for example be scanned using an optical sensor. In addition, scan data may, e.g., be used, which is acquired in the near-infrared range using near-infrared imaging (NIRI). NIRI uses electromagnetic radiation e near-infrared region of the electromagnetic spectrum to scan an internal structure, i.e., enamel and dentine, of patients' teeth. Tooth enamel is transparent to near-infrared wavelengths, while tooth dentin and other interference, e.g., caries, may show up as visual contrast. Thus, by scanning the internal structure using NIRI, interproximal caries detection may be detected.

In addition, scan data may be used, which is acquired using an X-ray of the patient's dentition. For example, the scan data may be acquired using a panoramic radiograph, i.e., a panoramic scanning dental X-ray of the upper and lower jaw. A panoramic radiograph provides a panoramic image showing a two-dimensional view of a half-circle from ear to ear.

In addition, scan data may be used, which is acquired using a CT scan, i.e., a computer tomography scan. A CT scan provides computer-processed combinations of multiple X-ray measurements taken from different angles to produce tomographic, i.e., cross-sectional images. For example, a focal plane tomography may be used with images of multiple planes being taken to generate a composite panoramic image.

For example, scan data acquired using cone-beam computed tomography (CBCT), also referred to as digital volume tomography (DVT), may be used. CBCT consisting of X-ray computed tomography with divergent X-rays forming a cone.

Additional scan data, e.g., acquired using nearfield-infrared imaging, X-ray imaging, and/or CT scanning, may have a beneficial effect of providing additional information about inner structures of the dentition, in particular about the inner structures of the teeth.

Also other types of scan data acquired using further imaging methods of oral and maxillofacial radiology (OMFR), also referred to as dental and maxillofacial radiology (DMFR), may be used providing additional insight in the patient's craniofacial, dental and adjacent structures. The further imaging methods may, e.g., comprise multi-slice CT, magnetic resonance imaging (MRI), positron emission tomography (PET), ultrasound, cephalometric imaging, intraoral imaging, e.g., bitewing, periapical and occlusal radiographs, as well as special methods, like sialography.

For example, the receiving of the current state model comprises acquiring the scan data.

The computer system may for example comprise a scanning device, i.e., scanner for acquiring the respective scan data, or be part of a system comprising the respective scanning device. The scanning device may for example be an optical scanner configured for an intraoral scan of the dentition of the patient. The scanning device may be an optical scanner configured for scanning an impression of the dentition of the patient. The scanning device may for example be a near-infrared scanner configured for near-infrared imaging of the dentition of the patient. The scanning device may for example be an X-ray scanner configured to acquire X-ray images, in particular X-ray panorama images, of the patient's dentition. The scanning device may for example be a CT scanner, in particular a CBCT scanner, configured for acquiring CT data of the patient's dentition and to reconstructing CT images using the acquired CT data.

For example, the providing of the target state model comprises generating the target state model using the current state model. The target state model may be generated using the current state model by modifying the position and/or orientation of one or more teeth of the current state model. The generating of the target state model may comprise modifying the shape and/or dimension of teeth comprised by the current state model. The generating of the target state model may comprise replacing one or more teeth of the current state model by teeth from a tooth library. For modifying the current state model, teeth which are modified or replaced may be segmented. The segmentation of individual teeth may be executed automatically or semi-automatically.

For example, the generating of the target state model comprises replacing one or more three-dimensional digital models of actual teeth or tooth stumps comprised by the current state model with one or more three-dimensional digital models of teeth from a tooth library.

Replacing actual teeth or tooth stumps by three-dimensional digital models of teeth from a tooth library may have the beneficial effect that three-dimensional digital models may be selected from the tooth library, which in view of their shape and/or color match teeth of the dentition of the patient. Furthermore, the respective three-dimensional digital models may already be optimized regarding their aesthetic appearance, like shape, symmetry and/or color. The respective three-dimensional digital models may only have to be adjusted regarding their position, orientation and/or size.

For example, the generating of the target state model comprises modifying one or more features of the following features of one or more three-dimensional digital models of actual teeth or tooth stumps comprised by the current state model: shape, size, position, orientation.

By adjusting the shape, size, position and/or orientation of a tooth comprised by the current state model, the respective tooth may be optimized in order to match a desired target state. For example, the aesthetic appearance of the respective tooth may be improved, e.g., optimized.

For example, the set of treatment options comprises one or more of the following treatment options using dental restorative elements: using one or more dental restorative elements to be arranged on one or more teeth of the dentition as measures of dentition modifications; applying an orthodontic adjustment to one or more teeth of the dentition, on which one or more dental restorative elements are to be arranged as measures of dentition modifications; replacing one or more teeth or tooth stumps of the dentition as measures of dentition modification. The replacing comprises extracting one or more teeth from the dentition and inserting one or more dental implants configured for supporting a dental restorative element, like a crown or a bridge. Furthermore, the respective treatment option may comprise providing and implement the crown or bridge using the one or more dental implants.

For example, the implementation parameters for one or more of the measures of the treatment options comprise determining one or more of the following: the size of the dental restorative elements to be used, the shape of the dental prostheses to be used. Determining the implementation parameters for using a dental restorative element may comprise determining the size and/or the shape of the respective dental restorative element.

For example, one or more of the treatment options further comprise preparing the teeth for the dental prostheses. The preparing comprises removing tooth substance to shape a support surface configured for supporting the dental prosthesis.

For example, one or more teeth may have to be prepared in order to provide a suitable support surface configured for supporting a veneer. The preparing of the respective teeth may comprise generating preparation by removing tooth substance in order to shape the required support surface. For this purpose, a surface of a tooth, e.g., a lingual surface, may be shaped to provide a sufficient support surface for a veneer.

For example, the preparing of the teeth may comprise a preparing for a dental restorative element. In order to provide a support surface suitable for supporting the respective dental prosthesis, e.g., a crown, tooth substance may have to be removed.

For example, the implementation parameters for one or more of the measures of the treatment options comprises determining one or more sections of teeth comprising the tooth substance to be removed.

Determining the implementation parameters may comprise determining one or more section of the teeth to be removed in order to provide a suitable preparation with suitable support surfaces for supporting, e.g., veneers or crowns. Using the current state model, it may be determined, whether a removal of the sections defined by the implementation parameters may result in remaining tooth structures, which are suitable for the treatment option being checked. Thus, the feasibility requirements for the respective treatment option may be checked.

For example, the feasibility requirements comprise one or more of the following requirements: sufficient wall thickness of the dental restorative elements used as measures of the treatment option, sufficient support by the teeth or tooth stumps for the dental restorative elements used as measures of the treatment option, sufficient dimensions of the teeth or tooth stumps for enabling a preparation for the dental restorative elements used as measures of the treatment option, absence of contraindication.

The feasibility requirements may define a necessary minimal wall thickness required for a dental restorative element used as a measure of a treatment option. The respective wall thickness of the walls of the respective dental restorative element, may be necessary in order to ensure a sufficient durability of the respective dental restorative element and/or stability. The feasibility requirements may define a sufficient support by the tooth or a tooth stump for a dental restorative element configured to be placed at or on the respective tooth or tooth stump. A sufficient support may ensure that the respective dental restorative element may be stably bonded to the support surface. Thus, a sufficient retention and resistance by the respective tooth or tooth stump to hold the dental restorative element may be ensured. The feasibility requirements may comprise definitions of sufficient dimensions of the teeth or tooth stumps for the dental restorative element. After the preparation, the remaining tooth or tooth stump has required to have sufficient dimension in order to provide a sufficient support for the respective dental restorative element. For example, a wall thickness of the preparation has to be sufficient in order to ensure a long-term integrity of the respective tooth or tooth stump. Finally, the feasibility requirements may comprise requirements regarding the absence of contraindication for the respective treatment option.

For example, the contraindications comprise one or more of the following: bruxism, tooth damage.

A contraindication may for example comprise bruxism. Bruxism refers to excessive teeth grinding or jaw clenching. Bruxism is an oral parafunctional activity, i.e., unrelated to normal oral function like eating or talking. Symptoms commonly associated with bruxism may, e.g., comprise tooth wear and damage to dental restorations.

Bruxism may for example be contraindication for dental restorative elements in form of veneers, since by grinding the teeth, veneers may be loosened. Furthermore, a contraindication may comprise tooth damage. Tooth damage may, e.g., comprise caries. In case a tooth is damaged, depending on the extent of the damage, it may be required to remove the respective tooth. Removing a tooth may exclude a usage of a dental restorative element, like a veneer, but may require an implant. The implant may be used as a basis for a dental restorative element, like, e.g., a crown or a bridge.

For example, additional scan data is provided for checking the feasibility requirements. For example, additional scan data may be acquired for checking the feasibility requirements. Using the additional scan data, e.g., the presence of contraindications may be checked. The additional scan data may, e.g., comprise NIRI data. The additional scan data may, e.g., comprise X-ray data. For example, the additional scan data may comprise tomography data acquired, e.g., using CBCT. Alternatively or additionally, various other types of imaging methods of oral and maxillofacial radiology may be used to acquire the additional scan data. The additional scan data may provide information about the structure of the teeth, in particular about internal structures of the teeth. Using the additional scan data, e.g., bruxism and/or tooth damages, like caries, may be detected.

For example, the treatment options are ordered according to a ranking order. The provided treatment options are checked subsequently following the ranking order, until the dentition is determined to meet the feasibility requirements assigned to the treatment option being checked. In case the dentition is determined to meet the feasibility requirements assigned to the treatment option being checked, the checking is interrupted.

For example, upon receiving a continuation command via the user, the checking is continued with the next treatment option following the ranking order upon receiving a continuation command. The continuation command may, e.g., be provided in form of a rejecting command rejecting the treatment proposal. In response to such a rejection, the checking may be continued in order to find an alternative treatment option with feasibility requirements met by the dentition.

For example, in case the dentition is determined to meet the feasibility requirements, the checking may be interrupted. For example, the treatment option meeting the feasibility requirement may be provided in form of a treatment proposal as an output. Thus, a user may decide whether the respective treatment option is an acceptable proposal for a treatment. In that case, the user may for example terminate the checking and use the suggestion provided by the computer system. In case the user is not satisfied with the proposal by the computer system, the computer system may receive a continuation command initiating a continuation of the checking with the next treatment option following the ranking order of the treatment options. The checking may be continued by respective continuation commands until a treatment option is found that satisfies the user or no further treatment options are available. In case no further treatment options are available, the checking may be terminated automatically.

For example, the interruption of the checking may cause a terminating of the checking. When a suitable treatment option is found meeting the feasibility requirements, the checking may thus be terminated.

For example, all of the treatment options of the set of treatment options are checked and a set of feasible treatment options is determined. For each of the feasible treatment options the dentition is meeting the feasibility requirements assigned to the respective feasible treatment option. The treatment proposal comprises the set of feasible treatment options and identifies for each of the feasible treatment options of the set of feasible treatment options implementation parameters determined for the measures of the respective feasible treatment option.

For example, all of the treatment options may be checked. Those treatment options, which meet the feasibility requirements, may be provided as a possible treatment proposal. Thus, a plurality of alternative treatment proposals may be provided as an output. The respective alternative treatment proposals may be provided according to the ranking order. For example, one after another may be provided as an output in order to enable a user to select one of the alternative treatment proposals. For example, all the alternative treatment proposals may be provided as an output with an indication of their ranking order. Thus, the user may be enabled to select one of the alternative treatment proposals.

For example, the providing of the set of treatment options comprises providing as an output via a user interface of the computer system a predefined set of selectable treatment options, in response to the providing, receiving via the user interface as an input the set of treatment options comprising treatment options selected from set of selectable treatment options.

For example, the user may select the set of treatment options from a set of selectable treatment options. Thus, the user may decide which of the treatment options are suitable and thus worth considering. These suitable treatment options may be selected by the user and form the set of treatment options. In addition, the user may be enabled to alter the ranking order of the set of treatment options selected from the set of selectable treatment options. In order to enable the user to select treatment options in order to define the set of treatment options, an output of selectable treatment options may be provided. Thus, the user may be enabled to check the output and select those treatment options which are suitable.

For example, the input furthermore comprises a definition of the ranking order of the selected treatment options. By defining the ranking order, preferences of the users may be provided to the computer system.

For example, digital preparations of one or more teeth, i.e., three-dimensional digital models of preparations, may be defined to adjust the respective one or more teeth for receiving one or more dental restorative element to be used as a measure of a treatment option. The preparations may be subtracted from the current state model and/or from the target state model, determining the extent of preparation required to prepare the current dentition for the dental restorative elements.

For the subtraction, e.g., a Boolean subtraction, a deformation and smoothening (iteratively, if necessary) or using boundary curves projecting the current state model, i.e., scan data. In case of using a boundary curve projecting the current state model, a mesh defining the current state model may only be deformed in the vicinity of the boundary curve such that the two meshes of the current state model and the preparation may fit exactly on top of each other in the vicinity of the boundary curve. The current state model may be cut there, i.e., where the meshes fit and replaced with a provisional surface defining a support surface or bottom surface of the dental restorative element.

In another aspect, the invention relates to a computer program product for determining one or more parameters of one or more ortho-restorative measures to be applied to a tooth. The one or more ortho-restorative measures comprise an orthodontic adjustment of a position of the tooth within a dentition. The computer program product comprises a computer readable storage medium having program instructions embodied therewith. The program instructions are executable by a processor of a computer device to cause the computer device to receive a three-dimensional digital tooth model descriptive of a current form and a current position of the tooth within the dentition, receive a three-dimensional digital restorative tooth model defining a target form and a target position of the tooth to be achieved by the one or more ortho-restorative measures, determine a three-dimensional digital reduced restorative tooth model using the three-dimensional digital restorative tooth model, which is reduced by a predefined minimum volume required for receiving a dental restoration element for obtaining the target form of the tooth, determine a core section of the three-dimensional digital tooth model to be excluded from preparation, determine one or more orthodontic parameters descriptive of the orthodontic adjustment of the position of the three-dimensional digital tooth model with at least a part of the core section of the orthodontically adjusted three-dimensional digital tooth model fitting into the three-dimensional digital reduced restorative tooth model, and output the one or more orthodontic parameters.

The program instructions provided by the computer program product may further be executable by the processor of the computer device to cause the computer device to execute any of the aforementioned examples of the method for determining the parameters of the one or more ortho-restorative measures to be applied to the tooth.

In another aspect, the invention relates to a computer program for determining one or more parameters of one or more ortho-restorative measures to be applied to a tooth. The one or more ortho-restorative measures comprise an orthodontic adjustment of a position of the tooth within a dentition. The computer program product comprises program instructions. The program instructions are executable by a processor of a computer device to cause the computer device to receive a three-dimensional digital tooth model descriptive of a current form and a current position of the tooth within the dentition, receive a three-dimensional digital restorative tooth model defining a target form and a target position of the tooth to be achieved by the one or more ortho-restorative measures, determine a three-dimensional digital reduced restorative tooth model using the three-dimensional digital restorative tooth model, which is reduced by a predefined minimum volume required for receiving a dental restoration element for obtaining the target form of the tooth, determine a core section of the three-dimensional digital tooth model to be excluded from preparation, determine one or more orthodontic parameters descriptive of the orthodontic adjustment of the position of the three-dimensional digital tooth model with at least a part of the core section of the orthodontically adjusted three-dimensional digital tooth model fitting into the three-dimensional digital reduced restorative tooth model, and output the one or more orthodontic parameters.

The program instructions provided by the computer program may further be executable by the processor of the computer device to cause the computer device to execute any of the aforementioned examples of the method for determining the parameters of the one or more ortho-restorative measures to be applied to the tooth.

In another aspect, the invention relates to a computer device for determining one or more parameters of one or more ortho-restorative measures to be applied to a tooth. The one or more ortho-restorative measures comprise an orthodontic adjustment of a position of the tooth within a dentition. The computer device comprises a processor and a memory storing program instructions executable by the processor. Execution of the program instructions by the processor causing the computer device to receive a three-dimensional digital tooth model descriptive of a current form and a current position of the tooth within the dentition, receive a three-dimensional digital restorative tooth model defining a target form and a target position of the tooth to be achieved by the one or more ortho-restorative measures, determine a three-dimensional digital reduced restorative tooth model using the three-dimensional digital restorative tooth model, which is reduced by a predefined minimum volume required for receiving a dental restoration element for obtaining the target form of the tooth, determine a core section of the three-dimensional digital tooth model to be excluded from preparation, determine one or more orthodontic parameters descriptive of the orthodontic adjustment of the position of the three-dimensional digital tooth model with at least a part of the core section of the orthodontically adjusted three-dimensional digital tooth model fitting into the three-dimensional digital reduced restorative tooth model, and output the one or more orthodontic parameters.

Execution of the program instructions by the processor of the computer device may further cause the computer device to execute any of the aforementioned examples of the method for determining the parameters of the one or more ortho-restorative measures to be applied to the tooth.

In another aspect, the invention relates to a system comprising the computer device according to any of the aforementioned examples of a computer device. The system further comprises a manufacturing device configured for manufacturing a dental restoration element. Execution of the program instructions by the processor further causing the computer device to determine preparation parameters descriptive of a preparation of the orthodontically adjusted three-dimensional digital tooth model for receiving the dental restoration element, generate a three-dimensional digital dental restoration model defining the dental restoration element. The three-dimensional digital dental restoration model is adjusted to the preparation parameters descriptive of the preparation of the prepared orthodontically adjusted tooth. Execution of the program instructions by the processor further causes the computer device to control the manufacturing device to manufacture the dental restoration element in form of a physical copy of the three-dimensional digital dental restoration model.

Execution of the program instructions by the processor of the computer device may further cause the computer device to execute any of the aforementioned examples of the method for manufacturing any of the aforementioned examples of the dental restoration element.

For example, the manufacturing device comprises at least one of the following: a machining device, a 3D printing device.

The above-described examples and embodiments may be combined freely as long as the combinations are not mutually exclusive.

### BRIEF DESCRIPTION OF THE DRAWINGS

In the following, examples are described in greater detail making reference to the drawings in which:
Fig. 1 shows a cross-sectional view of an exemplary three-dimensional digital tooth model;
Fig. 2 shows a cross-sectional view of an exemplary three-dimensional digital restorative tooth model;
Fig. 3 shows a cross-sectional view of an exemplary three-dimensional digital reduced restorative tooth model;
Fig. 4 shows a cross-sectional view of an exemplary core section of the three-dimensional digital tooth model of Fig. 1;
Fig. 5 shows a cross-sectional view of an exemplary orthodontically adjustment of the three-dimensional digital tooth model of Fig. 1;
Fig. 6 shows a cross-sectional view of an exemplary preparation of the orthodontically adjusted three-dimensional digital tooth model of Fig. 5;
Fig. 7 shows a cross-sectional view of an exemplary three-dimensional digital dental restoration model;
Fig. 8 shows a cross-sectional view of another exemplary orthodontically adjustment of the three-dimensional digital tooth model of Fig. 1;
Fig. 9 shows a cross-sectional view of an exemplary adjusted three-dimensional digital reduced restorative tooth model;
Fig. 10 shows a cross-sectional view of an exemplary preparation of the orthodontically adjusted three-dimensional digital tooth model of Fig. 9;
Fig. 11 shows a cross-sectional view of an exemplary three-dimensional digital dental restoration model;
Fig. 12 shows a cross-sectional view of an exemplary three-dimensional digital dental restoration model;
Fig. 13 shows a cross-sectional view of an exemplary three-dimensional digital dental restoration model;
Fig. 14 shows an exemplary dental restorative element,
Fig. 15 shows a cross-sectional view of a three-dimensional digital restorative tooth model,
Fig. 16 shows an exemplary dental restorative element,
Fig. 17 shows an exemplary computer device for determining a parameter of an ortho-restorative measures;
Fig. 18 shows an exemplary computer device for determining a parameter of an ortho-restorative measures;
Fig. 19 shows an exemplary system for manufacturing a dental restoration element;
Fig. 20 shows a flowchart illustrating an exemplary method for determining one or more parameters of one or more ortho-restorative measures;
Fig. 21 shows a flowchart illustrating an exemplary method for determining one or more parameters of one or more ortho-restorative measures;
Fig. 22 shows a flowchart illustrating an exemplary method for determining one or more parameters of one or more ortho-restorative measures;
Fig. 23 shows a flowchart illustrating an exemplary method for generating a three-dimensional digital dental restoration model;
Fig. 24 shows a flowchart illustrating an exemplary method for manufacturing a dental restoration element;
Fig. 25 shows a flowchart illustrating an exemplary method for determining one or more parameters of one or more ortho-restorative measures;
Fig. 26 shows a flowchart illustrating an exemplary method for providing a treatment proposal;
Fig. 27 shows a flowchart illustrating an exemplary method for providing a treatment proposal; and
Fig. 28 shows a flowchart illustrating an exemplary method for providing a treatment proposal.

### DETAILED DESCRIPTION

In the following, similar elements are denoted by the same reference numerals. Elements which have been discussed previously will not necessarily be discussed in later figures if the function is equivalent.

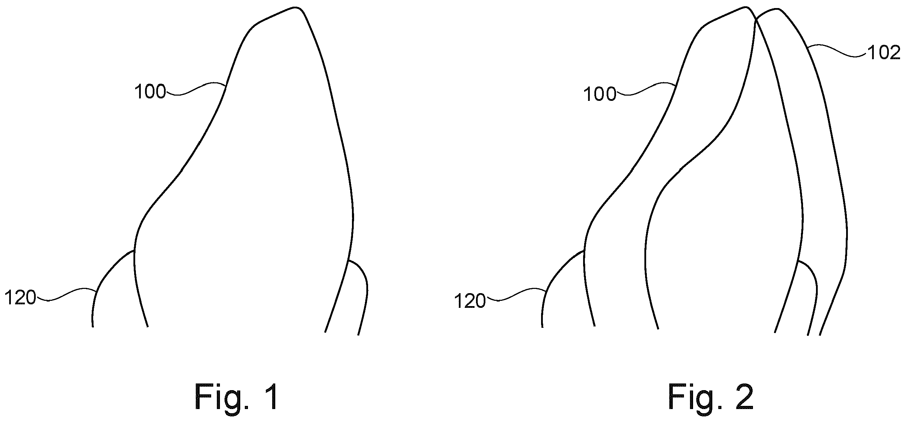

Fig. 1 shows a cross-sectional view of an exemplary three-dimensional digital tooth model 100. The three-dimensional digital tooth model 100 describes a current form and a current position of a tooth within a dentition. The three-dimensional digital tooth model 100 may e.g., be provided using scan data of the respective tooth of the patient acquired using a scanner, e.g., an optical scanner. The scan may be a direct scan of the patient's tooth, e.g., an intraoral scan. Alternatively or additionally, an indirect scan of the patient's tooth may be used to acquire the scan data. For example, a dental impression of the patient's tooth or a dental model of the respective tooth dentition, like a plaster model, may be scanned. For example, the three-dimensional digital tooth model 100 may be provided as part of a three-dimensional digital dentition model, to which a segmentation algorithm may be applied. Furthermore, a cross-sectional view of an exemplary three-dimensional digital gingiva model 120 is shown. The three-dimensional digital gingiva model 120 is descriptive of a current form and a current position of a gingiva around the tooth described by the three-dimensional digital tooth model 100 within the dentition.

Fig. 2 shown the three-dimensional digital tooth model 100 overlaid with a cross-sectional view of an exemplary three-dimensional digital restorative tooth model 102. The three-dimensional digital restorative tooth model 102 defines a target form and a target position to be achieved. This three-dimensional digital restorative tooth model 102 as a target state model of the respective tooth may resemble a state of the patient's tooth to be achieved using ortho-restorative measures. Thus, the three-dimensional digital restorative tooth model 102 may be used as a digital template.

For generating the three-dimensional digital restorative tooth model 102, e.g., a three-dimensional digital library tooth model from a digital tooth library may be used. For example, the three-dimensional digital library tooth model may in addition be adjusted to the dentition of the patient. For example, a three-dimensional digital model of another tooth of the patient's dentition, e.g., an opposite tooth within the same dental arch or an antagonist, may be used for generating the three-dimensional digital restorative tooth model 102. The three-dimensional digital model of the other tooth may be generated using scan data of the respective other tooth. For example, the three-dimensional digital model of the other tooth may in addition be adjusted to the dentition of the patient. For example, the three-dimensional digital tooth model 100 may be used for generating the generating the three-dimensional digital restorative tooth model. For example, the three-dimensional digital tooth model 100 may be adjusted to resemble a target form and a target position of the tooth to be achieved by the one or more ortho-restorative measures. For example, the three-dimensional digital restorative tooth model 102 may be generated from scratch.

For example, a trained machine learning module may be used for generating the three-dimensional digital restorative tooth model 102. For generating the three-dimensional digital restorative tooth model 102, the trained machine learning module may, e.g., use the three-dimensional digital tooth model 100. The three-dimensional digital restorative tooth model 102 may be provided by the trained machine learning module as output in response to providing the three-dimensional digital tooth model 100 as input.

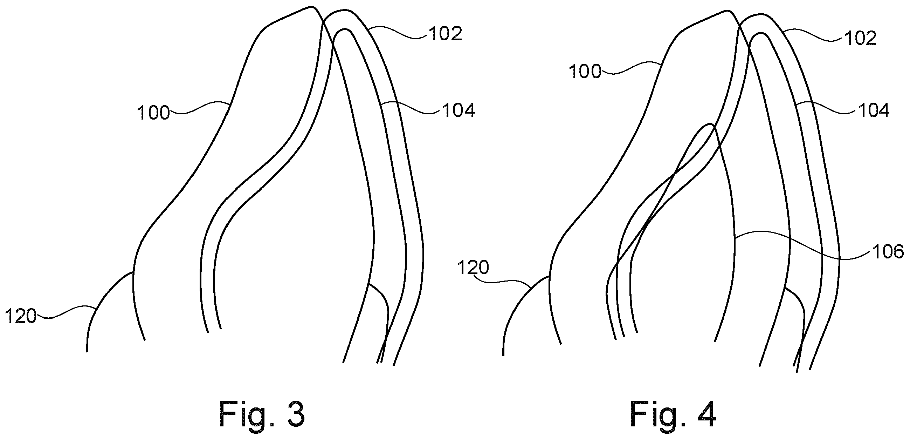

Fig. 3 shows the arrangement of Fig. 2 with a cross-sectional view of an exemplary three-dimensional digital reduced restorative tooth model 104 added. The three-dimensional digital reduced restorative tooth model 104 is determined using the three-dimensional digital restorative tooth model 102, which is reduced by a predefined minimum volume required for receiving a dental restoration element for obtaining the target form of the tooth.

Fig. 3 shows the arrangement of Fig. 2 with a cross-sectional view of an exemplary core section 106 of the three-dimensional digital tooth model 100 to be excluded from preparation added. The core section 106 may, e.g., comprise a pulp chamber of the tooth resembled by three-dimensional digital tooth model 100.

For determining the core section 106, position and form of a pulp chamber of the tooth may be determined within the three-dimensional digital tooth model 100. For example, position and form of the pulp chamber within the tooth may be estimated using the form of the three-dimensional digital tooth model 100. For example, a tooth type specific depth may be used for estimating the form and position of the pulp chamber within the tooth. For example, the three-dimensional digital tooth model 100 may be reduced by predefined tooth type specific depth with the reduced three-dimensional digital tooth model, e.g., being used as the core section of the three-dimensional digital tooth model 100. The tooth type specific depth may, e.g., vary in different tooth directions, i.e., the tooth type specific depth may be a tooth section specific depth.

For example, scan data of an X-ray and/or CBCT scan of the tooth are received. For example, DICOM data of X-ray images and/or CBCT images of the tooth are received. For example, scan data of a near-infrared scan of the tooth are received. The scan data may be indicative of the form and/or position of the pulp chamber within the tooth. The respective scan data may be used to determine the form and/or position of the pulp chamber within the tooth. The respective scan data may be used to determine the core section 106 comprising the pulp chamber within the tooth.

For example, position and form of the pulp chamber within the tooth may be estimated using a library of typical forms of pulp chambers.

For example, a trained machine learning module may be used for determining a three-dimensional digital pulp chamber model. For determining the three-dimensional digital pulp chamber model, the trained machine learning module may, e.g., use the three-dimensional digital tooth model 100. The three-dimensional digital pulp chamber model may be provided by the trained machine learning module as output in response to providing the three-dimensional digital tooth model 100 as input.

For example, the core section 106 of the three-dimensional digital tooth model 100 may further comprise a safety layer of tooth material for protecting the pulp chamber.

For example, a trained machine learning module may be used for determining a three-dimensional digital core section model of a core section 106 of a tooth comprising a pulp chamber of the respective tooth. For determining the three-dimensional digital core section model, the trained machine learning module may, e.g., use the three-dimensional digital tooth model 100. The three-dimensional digital core section model may be provided by the trained machine learning module as output in response to providing the three-dimensional digital tooth model 100 as input. For example, when using a trained machine learning module for determining the core section 106 of the tooth, the machine learning module may be trained for determining the three-dimensional digital core section model of a core section 106 of a tooth comprising in addition to the pulp chamber of the respective tooth a safety layer of tooth material for protecting the pulp chamber.

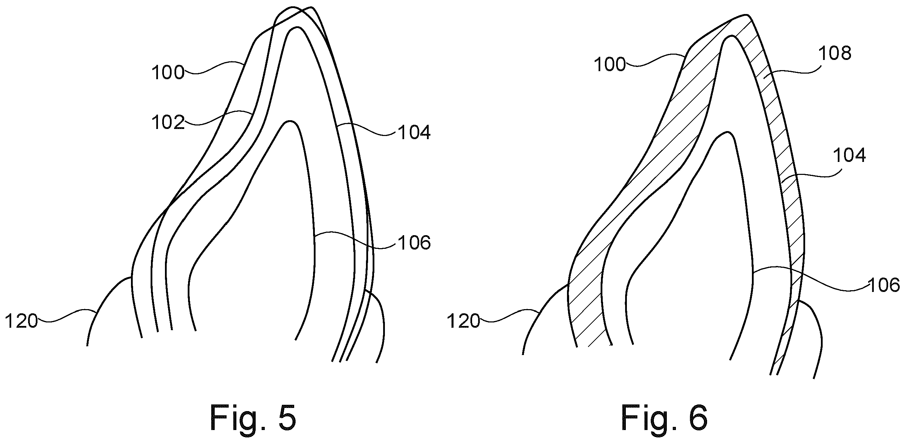

Fig. 5 shows an orthodontic adjustment of the position of the three-dimensional digital tooth model 100 of Fig. 4 such that the core section 106 of the orthodontically adjusted three-dimensional digital tooth model 100 fits into the three-dimensional digital reduced restorative tooth model 104. This orthodontic adjustment is described by one or more orthodontic parameters, which may be determined such that the core section 106 of the orthodontically adjusted three-dimensional digital tooth model 100 fits completely into the three-dimensional digital reduced restorative tooth model 104. The orthodontic adjustment of the three-dimensional digital tooth model 100 may, e.g., also result in an adjustment of the three-dimensional digital gingiva model 120, e.g., regarding form and/or position, which may be relevant for the determining of the preparation parameters.

Fig. 6 shows a cross-sectional view of a preparation 108 of the orthodontically adjusted three-dimensional digital tooth model 100 for receiving the dental restoration element. Preparation 108 is described by the one or more preparation parameters and may, e.g., comprise a removing of one or more sections of the orthodontically adjusted three-dimensional digital tooth model 100 intersecting with a minimum volume determined for the three-dimensional digital restorative tooth model 102, i.e., the difference between the three-dimensional digital restorative tooth model 102 and the three-dimensional digital reduced restorative tooth model 104. The preparation 108 described by the one or more preparation parameters may, e.g., further comprise removing one or more surface layers from one or more surface sections of the orthodontically adjusted three-dimensional digital tooth model 100 for improving the bonding of the dental restoration element. These surface sections, from which the surface layers are removed, do not intersect with the minimum volume. The three-dimensional digital tooth model 100 may, e.g., comprise one or more defects of the tooth to be repaired by the one or more ortho-restorative measures to be applied to the tooth. In this case, the one or more preparation parameters may, e.g., further be adjusted to remove the defects.

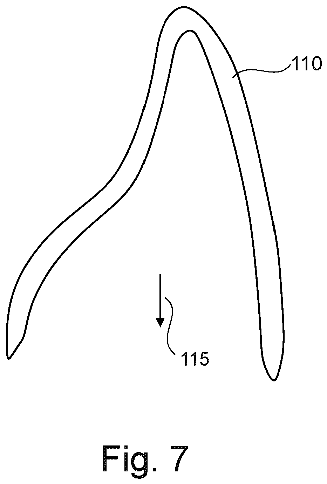

Fig. 7 shows a cross-sectional view of three-dimensional digital dental restoration model 110 defining the dental restoration element to be arranged on the prepared tooth. The generating of the three-dimensional digital dental restoration model 110 may, e.g., comprise a subtracting of the orthodontically adjusted three-dimensional digital tooth model 100 prepared as defined by the preparation 108 from the three-dimensional digital restorative tooth model 102. The generating of the three-dimensional digital dental restoration model 110 may, e.g., further comprise subtracting an additional minimum space for applying a bonding material for bonding the dental restoration element from the three-dimensional digital restorative tooth model 102. The three-dimensional digital restorative tooth model 102 is configured to be arranged on the orthodontically adjusted three-dimensional digital tooth model 100 prepared as defined by the preparation 108 in Fig. 6 along an insertion direction 115. The insertion direction 115 may, e.g., extend perpendicular to an occlusal plane.

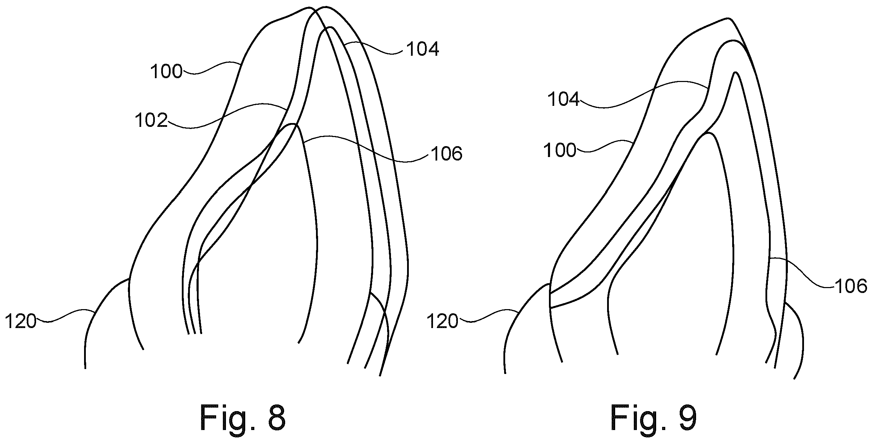

Fig. 8 shows an orthodontic adjustment of the position of the three-dimensional digital tooth model 100 of Fig. 4 for a case, in which the core section 106 of the orthodontically adjusted three-dimensional digital tooth model 100 does not completely fit into the three-dimensional digital reduced restorative tooth model 104. This orthodontic adjustment is described by one or more orthodontic parameters. However, the orthodontic adjustment described by one or more orthodontic parameters may be insufficient to fit the core section 106 of the orthodontically adjusted three-dimensional digital tooth model 100 completely into the three-dimensional digital reduced restorative tooth model 104. The orthodontic adjustment of the three-dimensional digital tooth model 100 may, e.g., also result in an adjustment of the three-dimensional digital gingiva model 120, e.g., regarding form and/or position, which may be relevant for the determining of the preparation parameters.

Fig. 9 shows. Fig. 8, in which the three-dimensional digital reduced restorative tooth model 104 and the three-dimensional digital restorative tooth model 102 have been adjusted and updated such that the core section 106 of the orthodontically adjusted three-dimensional digital tooth model 100 fits completely into the updated three-dimensional digital reduced restorative tooth model 104.

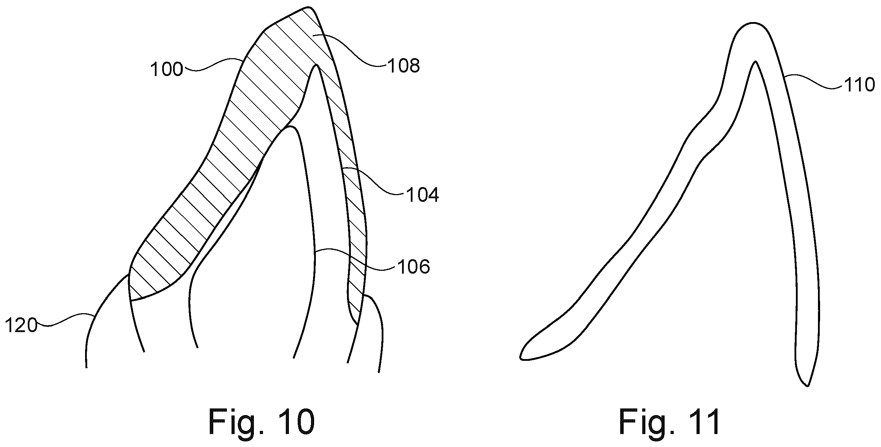

Fig. 10 shows a cross-sectional view of a preparation 108 of the orthodontically adjusted three-dimensional digital tooth model 100 for receiving the dental restoration element. Preparation 108 is described by the one or more preparation parameters and may, e.g., comprise a removing of one or more sections of the orthodontically adjusted three-dimensional digital tooth model 100 intersecting with a minimum volume determined for the updated three-dimensional digital restorative tooth model 102, i.e., the difference between the updated three-dimensional digital restorative tooth model 102 and the updated three-dimensional digital reduced restorative tooth model 104. The preparation 108 described by the one or more preparation parameters may, e.g., further comprise removing one or more surface layers from one or more surface sections of the orthodontically adjusted three-dimensional digital tooth model 100 for improving the bonding of the dental restoration element. These surface sections, from which the surface layers are removed, do not intersect with the minimum volume. The three-dimensional digital tooth model 100 may, e.g., comprise one or more defects of the tooth to be repaired by the one or more ortho-restorative measures to be applied to the tooth. In this case, the one or more preparation parameters may, e.g., further be adjusted to remove the defects.

Fig. 11 shows a cross-sectional view of a three-dimensional digital dental restoration model 110 defining the dental restoration element to be arranged on the prepared tooth. The generating of the three-dimensional digital dental restoration model 110 may, e.g., comprise a subtracting of the orthodontically adjusted three-dimensional digital tooth model 100 prepared as defined by the preparation 108 from the updated three-dimensional digital restorative tooth model 102. The generating of the three-dimensional digital dental restoration model 110 may, e.g., further comprise subtracting an additional minimum space for applying a bonding material for bonding the dental restoration element from the updated three-dimensional digital restorative tooth model 102.

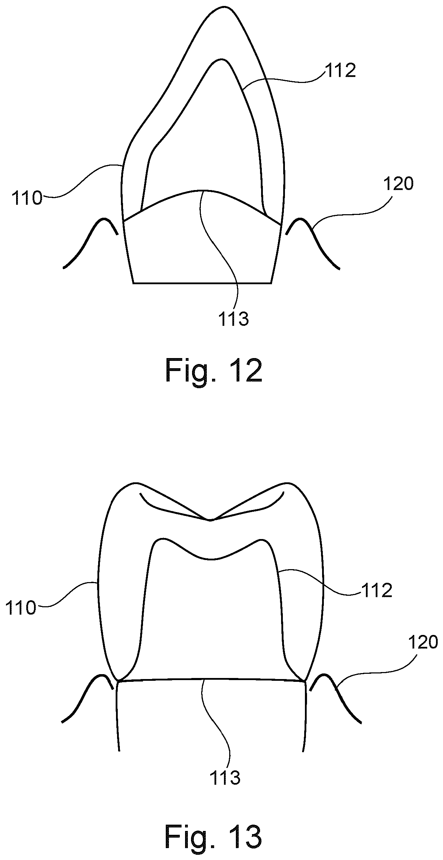

Fig. 12 shows a cross-sectional view of an exemplary three-dimensional digital dental restoration model 110 defining a dental restoration element to be arranged on a prepared incisor tooth. The prepared tooth may be orthodontically adjusted and prepared, such that arranging the three-dimensional digital dental restoration model 110 on the prepared tooth may result in a target form and a target position of the tooth defined by a three-dimensional digital restorative tooth model. The three-dimensional digital dental restoration model 110 is arranged on a prepared three-dimensional digital tooth model 112, i.e., a three-dimensional digital tooth model, which has been digitally prepared according to the preparation parameters determined. A boundary of the preparation of the three-dimensional digital tooth model 112 is defined by a cervical preparation margin 113. The cervical preparation margin 113 may, e.g., depend on an orthodontic adjustment applied to the prepared three-dimensional digital tooth model 112 and/or an adjustment of a three-dimensional digital gingiva model 120 resulting from the orthodontic adjustment applied to the prepared three-dimensional digital tooth model 112. The three-dimensional digital gingiva model 120 is descriptive of a current form and a current position of a gingiva around the tooth described by the three-dimensional digital tooth model 100 within the dentition. The cervical preparation margin 113, also referred to as margin line or finish line, may, e.g., be of one of the following types: feather edge, knife edge, chamfer, bevel, shoulder, beveled shoulder.

Fig. 13 shows a cross-sectional view of an exemplary three-dimensional digital dental restoration model 110 defining a dental restoration element to be arranged on a prepared molar tooth. The prepared tooth may be orthodontically adjusted and prepared, such that arranging the three-dimensional digital dental restoration model 110 on the prepared tooth may result in a target form and a target position of the tooth defined by a three-dimensional digital restorative tooth model. The three-dimensional digital dental restoration model 110 is arranged on a prepared three-dimensional digital tooth model 112, i.e., a three-dimensional digital tooth model, which has been digitally prepared according to the preparation parameters determined. A boundary of the preparation of the three-dimensional digital tooth model 112 is defined by a cervical preparation margin 113. The cervical preparation margin 113 may, e.g., depend on an orthodontic adjustment applied to the prepared three-dimensional digital tooth model 112 and/or an adjustment of a three-dimensional digital gingiva model 120 resulting from the orthodontic adjustment applied to the prepared three-dimensional digital tooth model 112. The three-dimensional digital gingiva model 120 is descriptive of a current form and a current position of a gingiva around the tooth described by the three-dimensional digital tooth model 100 within the dentition. The cervical preparation margin 113, also referred to as margin line or finish line, may, e.g., be of one of the following types: feather edge, knife edge, chamfer, bevel, shoulder, beveled shoulder.

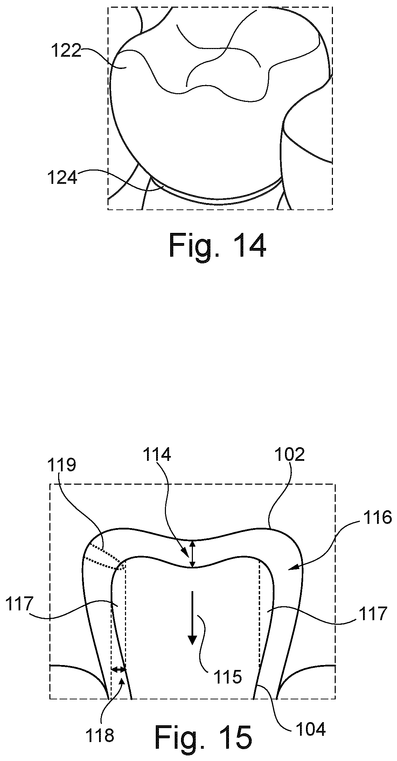

Fig. 14 shows an exemplary dental restoration element 122 in form of a crown for a molar tooth arranged on a prepared molar tooth 124, which has been orthodontically adjusted and prepared. The orthodontic adjustment may be defined by orthodontic parameters and the preparation may be defied by preparation parameters, such that arranging the dental restoration element 122 on the prepared tooth 124 may result in a predefined target form and target position of the respective tooth.

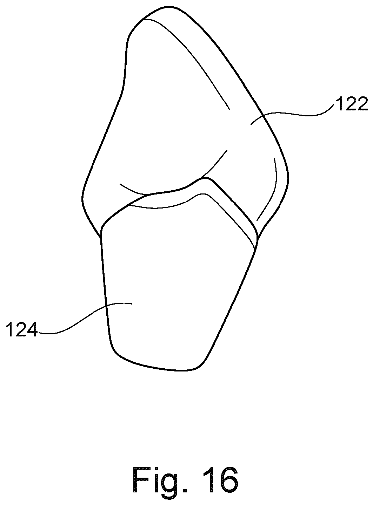

Fig. 16 shows a cross-sectional view of an exemplary of a three-dimensional digital restorative tooth model 102 and a three-dimensional digital reduced restorative tooth model 104. The three-dimensional digital restorative tooth model 102 is reduced by a predefined minimum volume 116 having a thickness 114 comprising a minimum material thickness required by a predefined restoration material of the dental restoration element. The thickness 114 may further comprise a predefined additional minimum space for applying a bonding material for bonding the dental restoration element.

A preparation may further adjust the form defined by the three-dimensional digital restorative tooth model 104 to block out in an insertion direction 115 of the dental restoration element undercuts 118 of the three-dimensional digital restorative tooth model 104, e.g., a prepared orthodontically adjusted three-dimensional digital tooth model. For this purpose, preparation parameters may be determined such that sections 117 of the three-dimensional digital restorative tooth model 104 may be removed by the preparation as well. The insertion direction 115 may, e.g., extend perpendicular to an occlusal plane.

Alternatively or additionally, the tooth to be prepared may comprise one or more defects 119 to be repaired by the one or more ortho-restorative measures to be applied to the tooth. Here a defect 119 is projected into the cross-sectional view of an exemplary of the three-dimensional digital restorative tooth model 102 and the three-dimensional digital reduced restorative tooth model 104. The reduction of the three-dimensional digital reduced restorative tooth model 104 is insufficient to remove defect 119 completely. Thus, the preparation parameters may further be adjusted to also remove any section 117 of the three-dimensional digital restorative tooth model 104, which comprises at least a part of the defect 119, thereby completely removing the defects 119.

Fig. 16 shows an exemplary dental restoration element 122 in form of a crown for an incisor tooth arranged on a prepared molar tooth 124, which has been orthodontically adjusted and prepared. The orthodontic adjustment may be defined by orthodontic parameters and the preparation may be defied by preparation parameters, such that arranging the dental restoration element 122 on the prepared tooth 124 may result in a predefined target form and target position of the respective tooth.

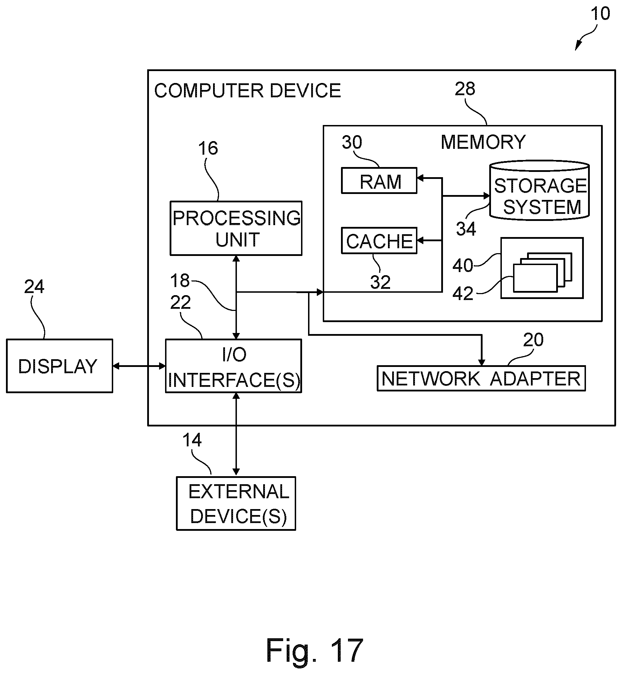

Fig. 17 shows a schematic diagram of an exemplary computer device 10 for determining one or more parameters of one or more ortho-restorative measures to be applied to a tooth. The computer device 10 may be operational with numerous other general-purpose or special-purpose computing system environments or configurations. Computer device 10 may be described in the general context of computer device executable instructions, such as program modules comprising executable program instructions, being executable by the computer device 10. Generally, program modules may include routines, programs, objects, components, logic, data structures, and so on that perform particular tasks or implement particular abstract data types. Computer device 10 may be practiced in distributed computing environments where tasks are performed by remote processing devices that are linked through a communications network. In a distributed computing environment, program modules may be located in both local and remote computer device storage media including memory storage devices.

In Fig. 17, computer device 10 is shown in the form of a general-purpose computing device. The components of computer device 10 may include, but are not limited to, one or more processors or processing units 16, a system memory 28, and a bus 18 that couples various system components including system memory 28 to processor 16. Bus 18 represents one or more of any of several types of bus structures, including a memory bus or memory controller, a peripheral bus, an accelerated graphics port, and a processor or local bus using any of a variety of bus architectures. By way of example, and not limitation, such architectures include Industry Standard Architecture (ISA) bus, Micro Channel Architecture (MCA) bus, Enhanced ISA (EISA) bus, Video Electronics Standards Association (VESA) local bus, and Peripheral Component Interconnect (PCI) bus.

Computer device 10 may comprise a variety of computer device readable storage media. Such media may be any available storage media accessible by computer device 10, and include both volatile and non-volatile storage media, removable and non-removable storage media.

A system memory 28 may include computer device readable storage media in the form of volatile memory, such as random-access memory (RAM) 30 and/or cache memory 32. Computer device 10 may further include other removable/non-removable, volatile/non-volatile computer device storage media. For example, storage system 34 may be provided for reading from and writing to a non-removable, non-volatile magnetic media also referred to as a hard drive. For example, a magnetic disk drive for reading from and writing to a removable, non-volatile magnetic disk, e.g., a floppy disk, and an optical disk drive for reading from or writing to a removable, non-volatile optical disk such as a CD-ROM, DVD-ROM or other optical storage media may be provided. In such instances, each storage medium may be connected to bus 18 by one or more data media interfaces. Memory 28 may, e.g., include a three-dimensional digital tooth model. The three-dimensional digital tooth model is descriptive of a current form and a current position of the tooth within the dentition of a patient. For example, three-dimensional digital tooth model may be comprised by a three-dimensional digital dentition model. The three-dimensional digital dentition model may comprise a plurality of three-dimensional digital tooth models for a plurality of teeth comprised by the dentition. Memory 28 may, e.g., include a three-dimensional digital gingiva model descriptive of a current form and a current position of a gingiva around the tooth within the dentition. The three-dimensional digital gingiva model may, e.g., be comprised by the three-dimensional digital dentition model or may be provided on its own.

Memory 28 may, e.g., include scan data of a patient's mouth from an intraoral scan or from a scan of a classical mold/impression, e.g., providing information about the surface structure of the patient's intraoral tissue comprising teeth and the gingiva. The scan data may comprise scan data of the tooth, to which the one or more ortho-restorative measures are to be applied.

Memory 28 may, e.g., include a three-dimensional digital restorative tooth model. The three-dimensional digital restorative tooth model defines a target form and a target position of the tooth to be achieved by the one or more ortho-restorative measures. Memory 28 may, e.g., include a digital tooth library providing a plurality of three-dimensional digital library tooth models. This digital tooth library may be used for providing the three-dimensional digital restorative tooth model in form of a three-dimensional digital library tooth model selected from the digital tooth library.

Memory 28 may, e.g., include a trained machine learning module configured to provide the three-dimensional digital restorative tooth model as output in response to receiving the three-dimensional digital tooth model as input. The trained machine learning module may, e.g., have been received by the computer device 10. The trained machine learning module may, e.g., have been trained by the computer device 10 using training datasets with training data received and/or generated by the computer device 10. For training the machine learning module, the memory 28 may comprise a machine learning module to be trained as well as training datasets with training data for training the machine learning module to provide a three-dimensional digital restorative tooth model. The machine learning module included in memory 28 for providing the three-dimensional digital restorative tooth model may, e.g., be an untrained machine learning module, a pre-trained machine learning module or a partially trained machine learning module.

Memory 28 may, e.g., include a library of pulp chambers comprising a plurality of three-dimensional digital pulp chamber models.

Memory 28 may, e.g., include trained machine learning module configured to provide a three-dimensional digital pulp chamber model as output in response to receiving the three-dimensional digital tooth model as input. The trained machine learning module may, e.g., have been received by the computer device 10. The trained machine learning module may, e.g., have been trained by the computer device 10 using training datasets with training data received and/or generated by the computer device 10. For training the machine learning module, the memory 28 may comprise a machine learning module to be trained as well as training datasets with training data for training the machine learning module to provide a three-dimensional digital pulp chamber model. The machine learning module included in memory 28 for providing a three-dimensional digital pulp chamber model may, e.g., be an untrained machine learning module, a pre-trained machine learning module or a partially trained machine learning module.

Memory 28 may, e.g., include a library of roots comprising a plurality of typical forms of roots.

Memory 28 may, e.g., include trained machine learning module configured to provide a description of a direction of extension of roots as output in response to receiving the three-dimensional digital tooth model as input. The trained machine learning module may, e.g., have been received by the computer device 10. The trained machine learning module may, e.g., have been trained by the computer device 10 using training datasets with training data received and/or generated by the computer device 10. For training the machine learning module, the memory 28 may comprise a machine learning module to be trained as well as training datasets with training data for training the machine learning module to provide a direction of extension of roots. The machine learning module included in memory 28 for providing a three-dimensional digital pulp chamber model may, e.g., be an untrained machine learning module, a pre-trained machine learning module or a partially trained machine learning module.

Program 40 may have a set of one or more program modules 42 and by way of example be stored in memory 28. The program modules 42 may comprise an operating system, one or more application programs, other program modules, and/or program data. Each of these program modules 42, i.e., the operating system, the one or more application programs, the other program modules, and/or the program data or some combination thereof, may include an implementation of a networking environment. One or more of the program modules 42 may be configured for determining one or more parameters of one or more ortho-restorative measures to be applied to a tooth. One of the program modules 42 may, e.g., further be configured for generating a three-dimensional digital restorative tooth model. One of the program modules 42 may, e.g., further be configured for generating a three-dimensional digital dental restoration model. One of the program modules 42 may, e.g., be configured to train a machine learning module to be trained. The machine learning module to be trained may, e.g., be an untrained machine learning module, a pre-trained machine learning module or a partially trained machine learning module.

Computer device 10 may further communicate with one or more external devices 14 such as a keyboard, a pointing device, like a mouse, and a display 24 enabling a user to interact with computer device 10. Such communication can occur via input/output (I/O) interfaces 22. Computer device 10 may further communicate with one or more networks such as a local area network (LAN), a general wide area network (WAN), and/or a public network, like the Internet, via network adapter 20. Network adapter 20 may communicate with other components of computer device 10 via bus 18. It should be understood that although not shown, other hardware and/or software components could be used in conjunction with computer device 10.

The computer device 10 shown in Fig. 17 may be configured for determining one or more parameters of one or more ortho-restorative measures to be applied to a tooth. The one or more ortho-restorative measures comprising an orthodontic adjustment of a position of the tooth within a dentition. A three-dimensional digital tooth model descriptive of a current form and a current position of the tooth within the dentition is received. Furthermore, a three-dimensional digital restorative tooth model is received defining a target form and a target position of the tooth to be achieved by the one or more ortho-restorative measures. A three-dimensional digital reduced restorative tooth model is determined using the three-dimensional digital restorative tooth model. The three-dimensional digital reduced restorative tooth model is reduced by a predefined minimum volume required for receiving a dental restoration element for obtaining the target form of the tooth. A core section of the three-dimensional digital tooth model to be excluded from preparation is determined. One or more orthodontic parameters descriptive of the orthodontic adjustment of the position of the three-dimensional digital tooth model are determined with at least a part of the core section of the orthodontically adjusted three-dimensional digital tooth model fitting into the three-dimensional digital reduced restorative tooth model, and an outputting of the one or more orthodontic parameters.

For example, the orthodontic adjustment may be determined with another part, i.e., some part, of the core section of the orthodontically adjusted three-dimensional digital tooth model not fitting into the three-dimensional digital reduced restorative tooth model. In this case, the three-dimensional digital reduced restorative tooth model may be updated by an adjusted three-dimensional digital reduced restorative tooth model, which is adjusted to comprise the complete core section of the orthodontically adjusted three-dimensional digital tooth model. Furthermore, the three-dimensional digital restorative tooth model may be updated by an adjusted three-dimensional digital restorative tooth model adjusted using the adjusted three-dimensional digital reduced restorative tooth model.

For example, the orthodontic adjustment may be determined with the complete core section of the orthodontically adjusted three-dimensional digital tooth model fitting into the three-dimensional digital reduced restorative tooth model.

For example, the determining of the one or more orthodontic parameters of the orthodontic adjustment of the position of the three-dimensional digital tooth model further comprises a determining of a final position of the core section of the orthodontically adjusted three-dimensional digital tooth model within the three-dimensional digital reduced restorative tooth model. The determining of a final position of the core section of the orthodontically adjusted three-dimensional digital tooth model within the three-dimensional digital reduced restorative tooth model may comprise a fine adjustment of the final position of the core section within the three-dimensional digital. The preparation of the orthodontically adjusted tooth as described by the preparation parameters may be adjusted to take into account the fine adjustment of the final position of the core section as well.

For example, the determining of the final position comprises further adjusting, e.g., repeatedly further adjusting the position of the three-dimensional digital tooth model and determining updated preparation parameters of the preparation of the further adjusted three-dimensional digital tooth model, until a predefined stop criterion for the further adjusting is satisfied by the updated preparation parameters. Thus, an iterative method may be implemented for determining the final position.

For example, the predefined stop criterion may comprise one or more of the following criteria: a tooth mass loss descriptive of an amount of tooth material being removed by the preparation described by the one or more updated preparation parameters reaching a minimum, the core section of the orthodontically adjusted three-dimensional digital tooth model arranged within the three-dimensional digital reduced restorative tooth model reaching a border of the three-dimensional digital reduced restorative tooth model, a maximum distance between a surface of the orthodontically adjusted three-dimensional digital tooth model and a surface of the three-dimensional digital restorative tooth model reaching a predefined first maximum value, the orthodontic adjustment reaching a predefined second maximum value, a deviation of the insertion direction from a reference direction reaching a second threshold, a deviation of an occlusal direction from a long axis of the tooth reaching a third threshold, a deviation of the occlusal direction from the direction of extension of roots reaching a fourth threshold.

For example, a three-dimensional digital dental restoration model defining the dental restoration element may be generated.

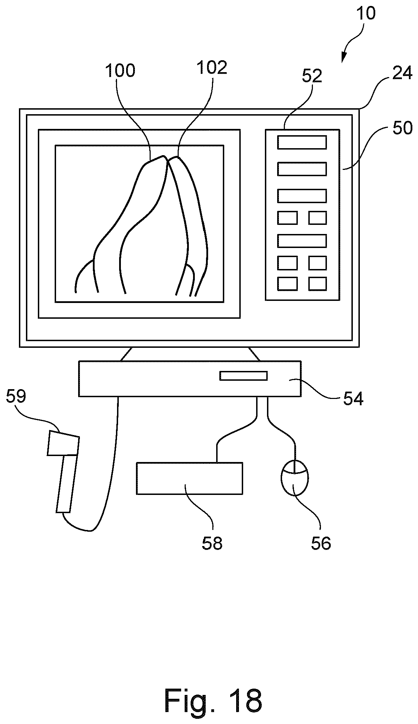

Fig. 18 shows an exemplary computer device 10 for determining one or more parameters of one or more ortho-restorative measures to be applied to a tooth. The computer device 10 may, e.g., be configured as shown in Fig. 17. The computer device 10 may comprise a hardware component 54 comprising one or more processors as well as a memory storing machine-executable program instructions. Execution of the program instructions by the one or more processors may cause the one or more processors to control the computer device 10 to determine one or more parameters of one or more ortho-restorative measures to be applied to a tooth.

The computer device 10 may further comprise one or more input devices, like a keyboard 58 and a mouse 56, enabling a user to interact with the computer device 10. Furthermore, the computer device 10 may comprise one or more output devices, like a display 24 providing a graphical user interface 50 with control elements 52, e.g., GUI elements, enabling the user to control the determining one or more parameters of one or more ortho-restorative measures to be applied to a tooth. The computer device 10 may further comprise an intraoral scanner 59, e.g., configured for scanning a patient's oral cavity, an imprint of a patient's oral cavity and/or a positive of a patient's oral cavity generated using an imprint.

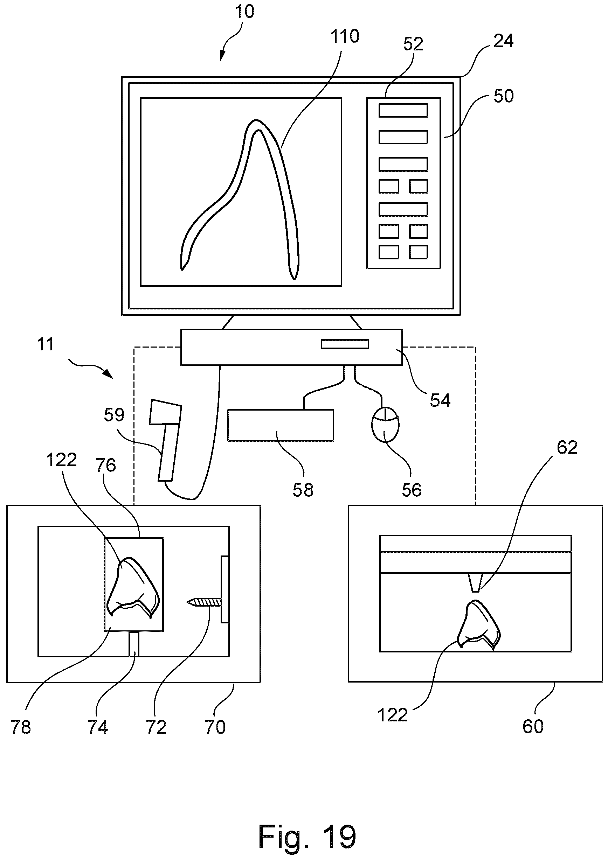

Fig. 19 shows an exemplary manufacturing system 11 for manufacturing a dental restoration element. A three-dimensional digital dental restoration model defining the dental restoration element may be provided. This three-dimensional digital dental restoration model may, e.g., be used as a template for manufacturing the dental restoration element as a physical copy of the template.

The manufacturing system 11 may comprise the computer device 10 of Fig. 18. The computer device 10 may further be configured to control one or more manufacturing devices 60, 70. For example, the manufacturing system 11 may comprise a manufacturing device in form of a machining device 70 controlled by the computer device 10. The machining device 70 may be configured to machining a blank 76 using one or more machining tools 72. The blank 76 of raw material 78, may be provided using a holding device 74 and cut into a desired shape and size of the element to be manufactured, e.g., the dental restoration element. The machining tool 72 may, e.g., be a milling tool.

For example, the manufacturing system 11 may comprise a manufacturing device in form of a 3D printing device 60. The 3D printing device 60 may be controlled by the computer device 10 and configured to print an element to be manufactured, e.g., the dental restoration element. The 3D printing device 60 may comprise a printing element 62 configured to print the respective element, like the dental restoration element, layer by layer. The printing element 62 may, e.g., comprise a nozzle configured for distributing printing material.

In case the element to be manufactured using the 3D printing device 60 is made using metal, the 3D printing device 60 may, e.g., be configured for executing selective laser sintering or melting. Selective laser sintering uses a laser for sintering a powdered material, aiming the laser automatically at points in space defined by a three-dimensional digital model of the element to be printed. The laser energy may result in a local sintering or melting of the powdered material, binding the material together to create a solid structure. For example, the printing element 62 of the 3D printing device 60 may comprise a laser and/or a distributing device for distributing the powdered material.

For example, the three-dimensional digital restoration model may be used as a positive to define a negative of the physical dental restoration element in form of a negative 3D digital restoration model. The negative 3D digital restoration model may be used to manufacture, e.g., using machining device 70 or 3D printing device 60, a casting matrix. The casting matrix may be configured for casting the physical dental restoration element by inserting restoration material into the casting matrix and curing the inserted restoration material.

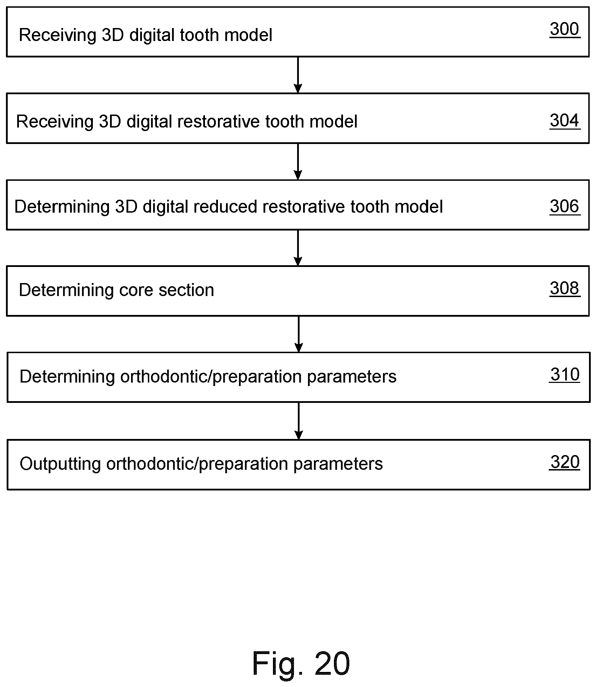

Fig. 20 shows an exemplary method for determining one or more parameters of one or more ortho-restorative measures to be applied to a tooth. The one or more ortho-restorative measures comprising an orthodontic adjustment of a position of the tooth within a dentition.

In block 300, a three-dimensional digital tooth model descriptive of a current form and a current position of the tooth within the dentition is received. The three-dimensional digital tooth model may e.g., be provided using scan data of the respective tooth of the patient acquired using a scanner, e.g., an optical scanner. The scan may be a direct scan of the patient's tooth, e.g., an intraoral scan. Alternatively or additionally, an indirect scan of the patient's tooth may be used to acquire the scan data. For example, a dental impression of the patient's tooth or a dental model of the respective tooth dentition, like a plaster model, may be scanned. The three-dimensional digital tooth model may, e.g., be generated by a computer system executing the method for determining the parameters of the ortho-restorative measures or it may be received from an external source. The external source may, e.g., be a server, like a cloud server, providing the three-dimensional digital tooth model via a network. The external source may, e.g., be a removable storage device providing the three-dimensional digital tooth model via a direct communication connection, e.g., wireless or via a wire.

In block 304, a three-dimensional digital restorative tooth model is received defining a target form and a target position of the tooth to be achieved by the one or more ortho-restorative measures. This three-dimensional digital restorative tooth model as a target state model of the respective tooth may resemble a state of the patient's tooth to be achieved using ortho-restorative measures. Thus, the three-dimensional digital restorative tooth model may be used as a digital template. The three-dimensional digital restorative tooth model may, e.g., be generated by the computer system executing the method for determining the parameters of the ortho-restorative measures or it may be received from an external source. The external source may, e.g., be a server, like a cloud server, providing the three-dimensional digital restorative tooth model via a network. The external source may, e.g., be a removable storage device providing the three-dimensional digital restorative tooth model via a direct communication connection e.g., wireless or via a wire.

For generating the three-dimensional digital restorative tooth model, e.g., a three-dimensional digital library tooth model from a digital tooth library may be used. For example, the three-dimensional digital library tooth model may in addition be adjusted to the dentition of the patient. For example, a three-dimensional digital model of another tooth of the patient's dentition, e.g., an opposite tooth within the same dental arch or an antagonist, may be used for generating the three-dimensional digital restorative tooth model. The three-dimensional digital model of the other tooth may be generated using scan data of the respective other tooth. For example, the three-dimensional digital model of the other tooth may in addition be adjusted to the dentition of the patient. For example, the three-dimensional digital tooth model descriptive of a current form and a current position of the tooth within the dentition may be used for generating the generating the three-dimensional digital restorative tooth model. For example, the three-dimensional digital tooth model may be adjusted to resemble a target form and a target position of the tooth to be achieved by the one or more ortho-restorative measures. For example, the three-dimensional digital restorative tooth model may be generated from scratch.

For example, a trained machine learning module may be used for generating the three-dimensional digital restorative tooth model. The three-dimensional digital restorative tooth model may be received as output from the trained machine learning module in response to providing the three-dimensional digital tooth model as input. For example, the three-dimensional digital tooth model may be provided as part of a three-dimensional digital dentition model as input to the trained machine learning module.

In block 306, a three-dimensional digital reduced restorative tooth model is determined using the three-dimensional digital restorative tooth model. The three-dimensional digital restorative tooth model is reduced by a predefined minimum volume required for receiving a dental restoration element for obtaining the target form of the tooth.

In block 308, a core section of the three-dimensional digital tooth model to be excluded from preparation is determined. The core section may, e.g., comprise a pulp chamber of the tooth.

For determining the core section, the method may, e.g., further comprise determining position and form of a pulp chamber of the tooth within the three-dimensional digital tooth model for determining the core section. For example, position and form of the pulp chamber within the tooth may be estimated using the form of the three-dimensional digital tooth model. For example, a tooth type specific depth may be used for estimating the form and position of the pulp chamber within the tooth. For example, the three-dimensional digital tooth model may be reduced by predefined tooth type specific depth with the reduced three-dimensional digital tooth model, e.g., being used as the core section of the three-dimensional digital tooth model. The tooth type specific depth may, e.g., vary in different tooth direction, i.e., the tooth type specific depth may be a tooth section specific depth.

For a rough estimate of the position and form of the pulp chamber, the three-dimensional digital tooth model may, e.g., be reduced by 2 mm and a resulting reduced three-dimensional digital tooth model may be used as the core section of the three-dimensional digital tooth model.

For example, position and form of the pulp chamber within the tooth may be estimated using a library of typical forms of pulp chambers. For example, machine learning module may be used for estimating position and form of the pulp chamber.

For example, scan data of an X-ray and/or CBCT scan of the tooth are received. For example, DICOM data of X-ray images and/or CBCT images of the tooth are received. For example, scan data of a near-infrared scan of the tooth are received. The scan data may be indicative of the form and/or position of the pulp chamber within the tooth. The respective scan data may be used to determine the form and/or position of the pulp chamber within the tooth. The respective scan data may be used to determine the core section comprising the pulp chamber within the tooth.

For example, a trained machine learning module may be used for determining a three-dimensional digital pulp chamber model. The three-dimensional digital pulp chamber model may be received as output from the trained machine learning module in response to providing the three-dimensional digital tooth model as input. For example, the three-dimensional digital tooth model may be provided as part of a three-dimensional digital dentition model as input to the trained machine learning module. For example, the core section of the three-dimensional digital tooth model may further comprise a safety layer of tooth material for protecting the pulp chamber.

For example, when using a trained machine learning module for determining the core section of the tooth, the machine learning module may be trained for determining a three-dimensional digital core section model of a core section of a tooth comprising in addition to the pulp chamber of the respective tooth a safety layer of tooth material for protecting the pulp chamber.

In block 310, one or more orthodontic parameters are determined. The one or more orthodontic parameters are descriptive of the orthodontic adjustment of the position of the three-dimensional digital tooth model with at least a part of the core section of the orthodontically adjusted three-dimensional digital tooth model fitting into the three-dimensional digital reduced restorative tooth model. Furthermore, the one or more ortho-restorative measures may, e.g., comprise a preparation of the orthodontically adjusted three-dimensional digital tooth model for receiving the dental restoration element. In block 310, the method may further comprise determining one or more preparation parameters descriptive of the preparation of the orthodontically adjusted three-dimensional digital tooth model.

The preparation described by the one or more preparation parameters may, e.g., comprise a removing of one or more sections of the orthodontically adjusted three-dimensional digital tooth model intersecting with the minimum volume determined for the three-dimensional digital restorative tooth model. The preparation described by the one or more preparation parameters may, e.g., further comprise removing one or more surface layers from one or more surface sections of the orthodontically adjusted three-dimensional digital tooth model for improving the bonding of the dental restoration element. These surface sections, from which the surface layers are removed, do not intersect with the minimum volume. The three-dimensional digital tooth model may, e.g., comprise one or more defects of the tooth to be repaired by the one or more ortho-restorative measures to be applied to the tooth. In this case, the one or more preparation parameters may, e.g., further be adjusted to remove the defects.

In block 320, the one or more orthodontic parameters are output. In case the one or more ortho-restorative measures comprise a preparation of the orthodontically adjusted three-dimensional digital tooth model, for which the one or more preparation parameters are determined, the one or more preparation parameters may be output in block 320 as well.

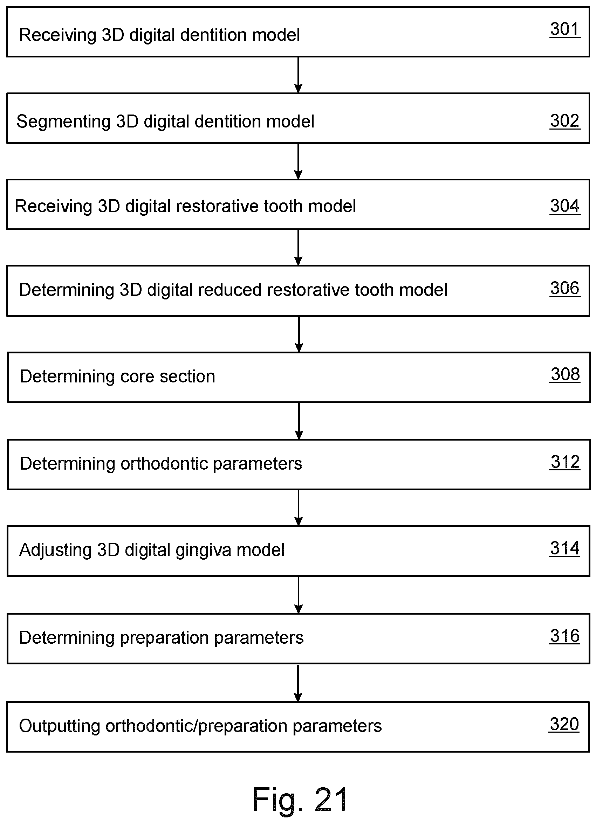

Fig. 21 shows an exemplary method for determining one or more parameters of one or more ortho-restorative measures to be applied to a tooth. The one or more ortho-restorative measures comprising an orthodontic adjustment of a position of the tooth within a dentition.

In block 300, a three-dimensional digital dentition model of the dentition of the patient comprising a plurality of three-dimensional digital tooth models descriptive of current forms and current positions of the teeth within the dentition is received. The three-dimensional digital tooth models may e.g., be provided using scan data of the respective teeth of the patient. For example, the scan data of the teeth may be comprised by scan data of the patient's dentition.

The three-dimensional digital dentition model of the dentition of the patient may be provided using scan data of the patient's dentition. The three-dimensional digital dentition model may, e.g., be generated by a computer system executing the method for determining the parameters of the ortho-restorative measures or it may be received from an external source. The external source may, e.g., be a server, like a cloud server, providing the three-dimensional digital tooth model via a network. The external source may, e.g., be a removable storage device providing the three-dimensional digital tooth model via a direct communication connection, e.g., wireless or via a wire.

The three-dimensional digital dentition model further comprising a three-dimensional digital gingiva model of the gingiva of the patient. The three-dimensional digital gingiva model is descriptive of a current form and a current position of a gingiva around the teeth within the dentition.

In block 302, the three-dimensional digital tooth model of the tooth, for with the one or more ortho-restorative measures are to be determined, is identified within the three-dimensional digital dentition model of the dentition of the patient using segmentation. Furthermore, the three-dimensional digital gingiva model of the gingiva of the patient may be identified using segmentation.

In block 304, a three-dimensional digital restorative tooth model is received defining a target form and a target position of the tooth to be achieved by the one or more ortho-restorative measures. This three-dimensional digital restorative tooth model as a target state model of the respective tooth may resemble a state of the patient's tooth to be achieved using ortho-restorative measures. Thus, the three-dimensional digital restorative tooth model may be used as a digital template. The three-dimensional digital restorative tooth model may, e.g., be generated by the computer system executing the method for determining the parameters of the ortho-restorative measures or it may be received from an external source. The external source may, e.g., be a server, like a cloud server, providing the three-dimensional digital restorative tooth model via a network. The external source may, e.g., be a removable storage device providing the three-dimensional digital restorative tooth model via a direct communication connection e.g., wireless or via a wire.

For generating the three-dimensional digital restorative tooth model, e.g., a three-dimensional digital library tooth model from a digital tooth library may be used. For example, the three-dimensional digital library tooth model may in addition be adjusted to the dentition of the patient. For example, a three-dimensional digital model of another tooth of the patient's dentition, e.g., an opposite tooth within the same dental arch or an antagonist, may be used for generating the three-dimensional digital restorative tooth model. The three-dimensional digital model of the other tooth may be generated using scan data of the respective other tooth. For example, the three-dimensional digital model of the other tooth may in addition be adjusted to the dentition of the patient. For example, the three-dimensional digital tooth model descriptive of a current form and a current position of the tooth within the dentition may be used for generating the generating the three-dimensional digital restorative tooth model. For example, the three-dimensional digital tooth model may be adjusted to resemble a target form and a target position of the tooth to be achieved by the one or more ortho-restorative measures. For example, the three-dimensional digital restorative tooth model may be generated from scratch.

For example, a trained machine learning module may be used for generating the three-dimensional digital restorative tooth model. The three-dimensional digital restorative tooth model may be received as output from the trained machine learning module in response to providing the three-dimensional digital tooth model as input. For example, the three-dimensional digital tooth model may be provided as part of a three-dimensional digital dentition model as input to the trained machine learning module.

In block 308, a core section of the three-dimensional digital tooth model to be excluded from preparation is determined. The core section may, e.g., comprise a pulp chamber of the tooth.

For determining the core section, the method may, e.g., further comprise determining position and form of a pulp chamber of the tooth within the three-dimensional digital tooth model for determining the core section. For example, position and form of the pulp chamber within the tooth may be estimated using the form of the three-dimensional digital tooth model. For example, a tooth type specific depth may be used for estimating the form and position of the pulp chamber within the tooth. For example, the three-dimensional digital tooth model may be reduced by predefined tooth type specific depth with the reduced three-dimensional digital tooth model, e.g., being used as the core section of the three-dimensional digital tooth model. The tooth type specific depth may, e.g., vary in different tooth direction, i.e., the tooth type specific depth may be a tooth section specific depth.

For a rough estimate of the position and form of the pulp chamber, the three-dimensional digital tooth model may, e.g., be reduced by 2 mm and a resulting reduced three-dimensional digital tooth model may be used as the core section of the three-dimensional digital tooth model.

For example, position and form of the pulp chamber within the tooth may be estimated using a library of typical forms of pulp chambers. For example, machine learning module may be used for estimating position and form of the pulp chamber.

For example, scan data of an X-ray and/or CBCT scan of the tooth are received. For example, DICOM data of X-ray images and/or CBCT images of the tooth are received. For example, scan data of a near-infrared scan of the tooth are received. The scan data may be indicative of the form and/or position of the pulp chamber within the tooth. The respective scan data may be used to determine the form and/or position of the pulp chamber within the tooth. The respective scan data may be used to determine the core section comprising the pulp chamber within the tooth.

For example, a trained machine learning module may be used for determining a three-dimensional digital pulp chamber model. The three-dimensional digital pulp chamber model may be received as output from the trained machine learning module in response to providing the three-dimensional digital tooth model as input. For example, the three-dimensional digital tooth model may be provided as part of a three-dimensional digital dentition model as input to the trained machine learning module. For example, the core section of the three-dimensional digital tooth model may further comprise a safety layer of tooth material for protecting the pulp chamber.

For example, when using a trained machine learning module for determining the core section of the tooth, the machine learning module may be trained for determining a three-dimensional digital core section model of a core section of a tooth comprising in addition to the pulp chamber of the respective tooth a safety layer of tooth material for protecting the pulp chamber.

In block 310, one or more orthodontic parameters are determined. The one or more orthodontic parameters are descriptive of the orthodontic adjustment of the position of the three-dimensional digital tooth model with at least a part of the core section of the orthodontically adjusted three-dimensional digital tooth model fitting into the three-dimensional digital reduced restorative tooth model. Furthermore, the one or more ortho-restorative measures may, e.g., comprise a preparation of the orthodontically adjusted three-dimensional digital tooth model for receiving the dental restoration element. In block 310, the method may further comprise determining one or more preparation parameters descriptive of the preparation of the orthodontically adjusted three-dimensional digital tooth model.

The preparation described by the one or more preparation parameters may, e.g., comprise a removing of one or more sections of the orthodontically adjusted three-dimensional digital tooth model intersecting with the minimum volume determined for the three-dimensional digital restorative tooth model. The preparation described by the one or more preparation parameters may, e.g., further comprise removing one or more surface layers from one or more surface sections of the orthodontically adjusted three-dimensional digital tooth model for improving the bonding of the dental restoration element. These surface sections, from which the surface layers are removed, do not intersect with the minimum volume. The three-dimensional digital tooth model may, e.g., comprise one or more defects of the tooth to be repaired by the one or more ortho-restorative measures to be applied to the tooth. In this case, the one or more preparation parameters may, e.g., further be adjusted to remove the defects.

In block 312, one or more orthodontic parameters are determined. The one or more orthodontic parameters are descriptive of the orthodontic adjustment of the position of the three-dimensional digital tooth model with at least a part of the core section of the orthodontically adjusted three-dimensional digital tooth model fitting into the three-dimensional digital reduced restorative tooth model.

In block 314, form and the position of the three-dimensional digital gingiva model may be adjusted to the orthodontic adjustment of the position of the three-dimensional digital tooth model.

By adjusting of the form and the position of the three-dimensional digital gingiva model to the orthodontic adjustment, an adjusted three-dimensional digital gingiva model may be provided. The adjusted three-dimensional digital gingiva model may be descriptive of an adjusted form and an adjusted position of a gingiva around the tooth resulting from the orthodontic adjustment of the position of the three-dimensional digital tooth model.

In block 316, one or more preparation parameters descriptive of the preparation of the orthodontically adjusted three-dimensional digital tooth model. The adjusted form and position of the gingiva around the tooth as described by the adjusted three-dimensional digital gingiva model determined in block 314, may, e.g., be used be used for determining a cervical preparation margin.

The preparation described by the one or more preparation parameters may, e.g., comprise a removing of one or more sections of the orthodontically adjusted three-dimensional digital tooth model intersecting with the minimum volume determined for the three-dimensional digital restorative tooth model. The preparation described by the one or more preparation parameters may, e.g., further comprise removing one or more surface layers from one or more surface sections of the orthodontically adjusted three-dimensional digital tooth model for improving the bonding of the dental restoration element. These surface sections, from which the surface layers are removed, do not intersect with the minimum volume. The three-dimensional digital tooth model may, e.g., comprise one or more defects of the tooth to be repaired by the one or more ortho-restorative measures to be applied to the tooth. In this case, the one or more preparation parameters may, e.g., further be adjusted to remove the defects.

In block 320, the one or more orthodontic parameters are output. In case the one or more ortho-restorative measures comprise a preparation of the orthodontically adjusted three-dimensional digital tooth model, for which the one or more preparation parameters are determined, the one or more preparation parameters may be output in block 320 as well.

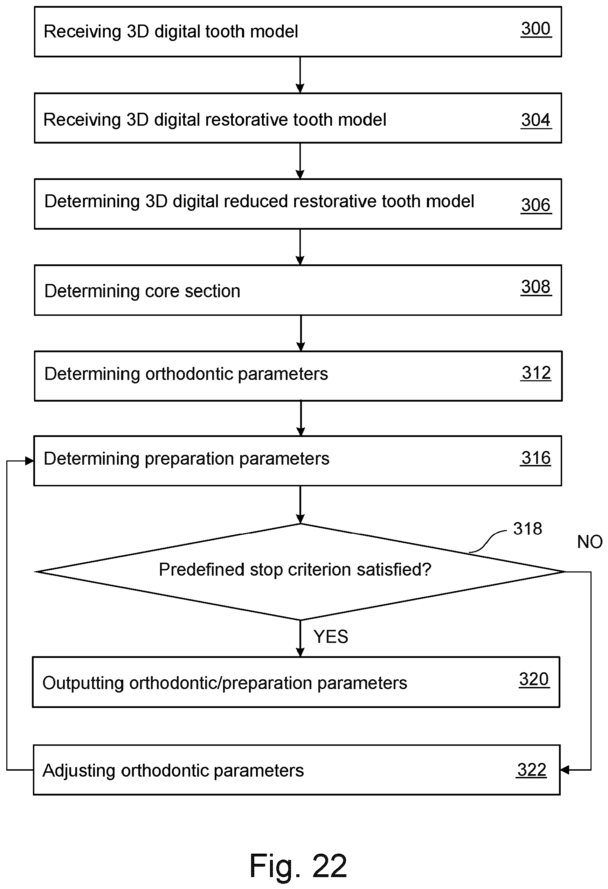

Fig. 22 shows an exemplary method for determining one or more parameters of one or more ortho-restorative measures to be applied to a tooth. The one or more ortho-restorative measures comprising an orthodontic adjustment of a position of the tooth within a dentition.

In block 300, a three-dimensional digital tooth model descriptive of a current form and a current position of the tooth within the dentition is received. The three-dimensional digital tooth model may e.g., be provided using scan data of the respective tooth of the patient acquired using a scanner, e.g., an optical scanner. The scan may be a direct scan of the patient's tooth, e.g., an intraoral scan. Alternatively or additionally, an indirect scan of the patient's tooth may be used to acquire the scan data. For example, a dental impression of the patient's tooth or a dental model of the respective tooth dentition, like a plaster model, may be scanned. The three-dimensional digital tooth model may, e.g., be generated by a computer system executing the method for determining the parameters of the ortho-restorative measures or it may be received from an external source. The external source may, e.g., be a server, like a cloud server, providing the three-dimensional digital tooth model via a network. The external source may, e.g., be a removable storage device providing the three-dimensional digital tooth model via a direct communication connection, e.g., wireless or via a wire.

In block 304, a three-dimensional digital restorative tooth model is received defining a target form and a target position of the tooth to be achieved by the one or more ortho-restorative measures. This three-dimensional digital restorative tooth model as a target state model of the respective tooth may resemble a state of the patient's tooth to be achieved using ortho-restorative measures. Thus, the three-dimensional digital restorative tooth model may be used as a digital template. The three-dimensional digital restorative tooth model may, e.g., be generated by the computer system executing the method for determining the parameters of the ortho-restorative measures or it may be received from an external source. The external source may, e.g., be a server, like a cloud server, providing the three-dimensional digital restorative tooth model via a network. The external source may, e.g., be a removable storage device providing the three-dimensional digital restorative tooth model via a direct communication connection e.g., wireless or via a wire.

For generating the three-dimensional digital restorative tooth model, e.g., a three-dimensional digital library tooth model from a digital tooth library may be used. For example, the three-dimensional digital library tooth model may in addition be adjusted to the dentition of the patient. For example, a three-dimensional digital model of another tooth of the patient's dentition, e.g., an opposite tooth within the same dental arch or an antagonist, may be used for generating the three-dimensional digital restorative tooth model. The three-dimensional digital model of the other tooth may be generated using scan data of the respective other tooth. For example, the three-dimensional digital model of the other tooth may in addition be adjusted to the dentition of the patient. For example, the three-dimensional digital tooth model descriptive of a current form and a current position of the tooth within the dentition may be used for generating the generating the three-dimensional digital restorative tooth model. For example, the three-dimensional digital tooth model may be adjusted to resemble a target form and a target position of the tooth to be achieved by the one or more ortho-restorative measures. For example, the three-dimensional digital restorative tooth model may be generated from scratch.

For example, a trained machine learning module may be used for generating the three-dimensional digital restorative tooth model. The three-dimensional digital restorative tooth model may be received as output from the trained machine learning module in response to providing the three-dimensional digital tooth model as input. For example, the three-dimensional digital tooth model may be provided as part of a three-dimensional digital dentition model as input to the trained machine learning module.

In block 306, a three-dimensional digital reduced restorative tooth model is determined using the three-dimensional digital restorative tooth model. The three-dimensional digital restorative tooth model is reduced by a predefined minimum volume required for receiving a dental restoration element for obtaining the target form of the tooth.

In block 308, a core section of the three-dimensional digital tooth model to be excluded from preparation is determined. The core section may, e.g., comprise a pulp chamber of the tooth.

For determining the core section, the method may, e.g., further comprise determining position and form of a pulp chamber of the tooth within the three-dimensional digital tooth model for determining the core section. For example, position and form of the pulp chamber within the tooth may be estimated using the form of the three-dimensional digital tooth model. For example, a tooth type specific depth may be used for estimating the form and position of the pulp chamber within the tooth. For example, the three-dimensional digital tooth model may be reduced by predefined tooth type specific depth with the reduced three-dimensional digital tooth model, e.g., being used as the core section of the three-dimensional digital tooth model. The tooth type specific depth may, e.g., vary in different tooth direction, i.e., the tooth type specific depth may be a tooth section specific depth.

For a rough estimate of the position and form of the pulp chamber, the three-dimensional digital tooth model may, e.g., be reduced by 2 mm and a resulting reduced three-dimensional digital tooth model may be used as the core section of the three-dimensional digital tooth model.

For example, position and form of the pulp chamber within the tooth may be estimated using a library of typical forms of pulp chambers. For example, machine learning module may be used for estimating position and form of the pulp chamber.

For example, scan data of an X-ray and/or CBCT scan of the tooth are received. For example, DICOM data of X-ray images and/or CBCT images of the tooth are received. For example, scan data of a near-infrared scan of the tooth are received. The scan data may be indicative of the form and/or position of the pulp chamber within the tooth. The respective scan data may be used to determine the form and/or position of the pulp chamber within the tooth. The respective scan data may be used to determine the core section comprising the pulp chamber within the tooth.

For example, a trained machine learning module may be used for determining a three-dimensional digital pulp chamber model. The three-dimensional digital pulp chamber model may be received as output from the trained machine learning module in response to providing the three-dimensional digital tooth model as input. For example, the three-dimensional digital tooth model may be provided as part of a three-dimensional digital dentition model as input to the trained machine learning module. For example, the core section of the three-dimensional digital tooth model may further comprise a safety layer of tooth material for protecting the pulp chamber.

For example, when using a trained machine learning module for determining the core section of the tooth, the machine learning module may be trained for determining a three-dimensional digital core section model of a core section of a tooth comprising in addition to the pulp chamber of the respective tooth a safety layer of tooth material for protecting the pulp chamber.

In block 312, one or more orthodontic parameters are determined. The one or more orthodontic parameters are descriptive of the orthodontic adjustment of the position of the three-dimensional digital tooth model with at least a part of the core section of the orthodontically adjusted three-dimensional digital tooth model fitting into the three-dimensional digital reduced restorative tooth model.

In block 316, one or more preparation parameters descriptive of the preparation of the orthodontically adjusted three-dimensional digital tooth model. The preparation described by the one or more preparation parameters may, e.g., comprise a removing of one or more sections of the orthodontically adjusted three-dimensional digital tooth model intersecting with the minimum volume determined for the three-dimensional digital restorative tooth model. The preparation described by the one or more preparation parameters may, e.g., further comprise removing one or more surface layers from one or more surface sections of the orthodontically adjusted three-dimensional digital tooth model for improving the bonding of the dental restoration element. These surface sections, from which the surface layers are removed, do not intersect with the minimum volume. The three-dimensional digital tooth model may, e.g., comprise one or more defects of the tooth to be repaired by the one or more ortho-restorative measures to be applied to the tooth. In this case, the one or more preparation parameters may, e.g., further be adjusted to remove the defects.

In block 318, it is checked, whether a predefined stop criterion for the further adjusting is satisfied by the current preparation parameters and orthodontic parameters. The predefined stop criterion may, e.g., comprise one or more of the following criteria: a tooth mass loss descriptive of an amount of tooth material being removed by the preparation described by the one or more updated preparation parameters reaching a minimum, the core section of the orthodontically adjusted three-dimensional digital tooth model arranged within the three-dimensional digital reduced restorative tooth model reaching a border of the three-dimensional digital reduced restorative tooth model, a maximum distance between a surface of the orthodontically adjusted three-dimensional digital tooth model and a surface of the three-dimensional digital restorative tooth model reaching a predefined first maximum value, the orthodontic adjustment reaching a predefined second maximum value, a deviation of the insertion direction from a reference direction reaching a second threshold, a deviation of an occlusal direction from a long axis of the tooth reaching a third threshold, a deviation of the occlusal direction from the direction of extension of roots reaching a fourth threshold.

For example, it may be checked, whether a tooth mass loss descriptive of an amount of tooth material being removed by the preparation according to the current preparation parameters has reached a minimum.

For example, it may be checked, whether the core section arranged within the three-dimensional digital reduced restorative tooth model has reached a border of the three-dimensional digital reduced restorative tooth model.

For example, it may be checked, whether a maximum distance between a surface of the orthodontically adjusted three-dimensional digital tooth model and a surface of the three-dimensional digital restorative tooth model has reached a predefined first maximum value, e.g., fell below the predefined first maximum value or increased to the predefined first maximum value.

For example, it may be checked, whether the orthodontic adjustment defined by the current orthodontic parameters has reached a predefined second maximum value.

For example, it may be checked, whether a deviation of the insertion direction from a reference direction has reached a second threshold, i.e., fell below the second threshold or increases to the second threshold.

The reference direction may, e.g., be provided by a long axis of the tooth, the direction of extension of roots, a second insertion direction defined for a second tooth.

For example, it may be checked, whether a deviation of an occlusal direction from a long axis of the tooth reaches a third threshold, i.e., falls below the second threshold or increases to the third threshold.

For example, it may be checked, whether a deviation of the occlusal direction from the direction of extension of roots reaching a fourth threshold, i.e., falls below the fourth threshold or increases to the fourth threshold.

In case, the stop criterion is satisfied in block 318, the current preparation parameters and orthodontic parameters may be accepted as final parameters defining a final orthodontic adjustment of the position and a final preparation of the form of the three-dimensional digital tooth model. The method continues with block 320. In block 320, the current orthodontic parameters as well as the current preparation parameters may be output.

In case, the stop criterion is satisfied in block 318, the orthodontic parameters may be further adjusted in block 322. The further adjusting of the orthodontic parameters may, e.g., comprise a predefined movement by a predefined distance. In block 316, the preparation parameters may be updated using the adjusted orthodontic parameters of block 318, such that they are descriptive of a preparation of the three-dimensional digital tooth model orthodontically adjusted as described by the updated orthodontic parameters.

Thus, an iterative approach for determining the orthodontic parameters and the preparation parameters may be used. Using this iterative approach, a dependence of the position of the tooth resulting from the orthodontic movement as descried by the orthodontic parameters and the preparation of the tooth required to prepare the tooth for receiving the dental restoration element as descried by the preparation parameters may be taken into account.

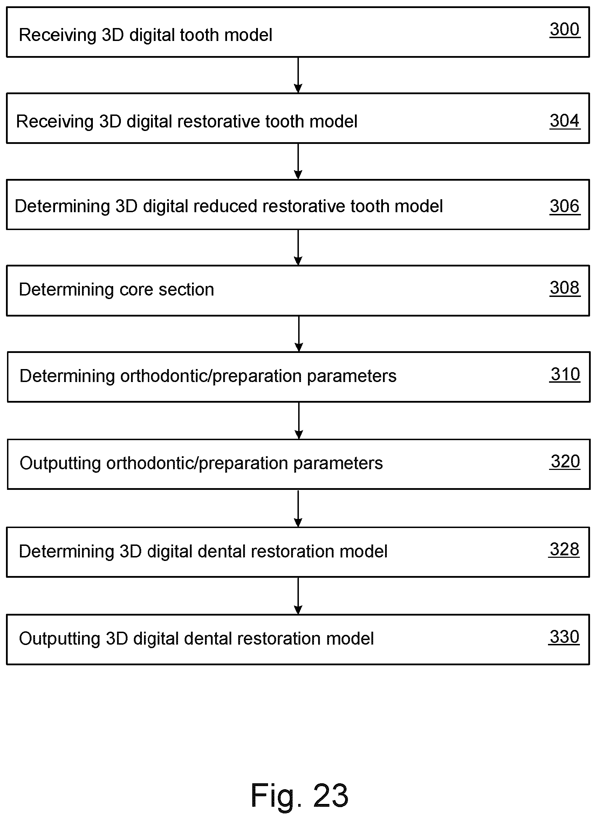

Fig. 23 shows an exemplary method for determining one or more parameters of one or more ortho-restorative measures to be applied to a tooth. The one or more ortho-restorative measures comprising an orthodontic adjustment of a position of the tooth within a dentition.

In block 300, a three-dimensional digital tooth model descriptive of a current form and a current position of the tooth within the dentition is received. The three-dimensional digital tooth model may e.g., be provided using scan data of the respective tooth of the patient acquired using a scanner, e.g., an optical scanner. The scan may be a direct scan of the patient's tooth, e.g., an intraoral scan. Alternatively or additionally, an indirect scan of the patient's tooth may be used to acquire the scan data. For example, a dental impression of the patient's tooth or a dental model of the respective tooth dentition, like a plaster model, may be scanned. The three-dimensional digital tooth model may, e.g., be generated by a computer system executing the method for determining the parameters of the ortho-restorative measures or it may be received from an external source. The external source may, e.g., be a server, like a cloud server, providing the three-dimensional digital tooth model via a network. The external source may, e.g., be a removable storage device providing the three-dimensional digital tooth model via a direct communication connection, e.g., wireless or via a wire.

In block 304, a three-dimensional digital restorative tooth model is received defining a target form and a target position of the tooth to be achieved by the one or more ortho-restorative measures. This three-dimensional digital restorative tooth model as a target state model of the respective tooth may resemble a state of the patient's tooth to be achieved using ortho-restorative measures. Thus, the three-dimensional digital restorative tooth model may be used as a digital template. The three-dimensional digital restorative tooth model may, e.g., be generated by the computer system executing the method for determining the parameters of the ortho-restorative measures or it may be received from an external source. The external source may, e.g., be a server, like a cloud server, providing the three-dimensional digital restorative tooth model via a network. The external source may, e.g., be a removable storage device providing the three-dimensional digital restorative tooth model via a direct communication connection e.g., wireless or via a wire.

For generating the three-dimensional digital restorative tooth model, e.g., a three-dimensional digital library tooth model from a digital tooth library may be used. For example, the three-dimensional digital library tooth model may in addition be adjusted to the dentition of the patient. For example, a three-dimensional digital model of another tooth of the patient's dentition, e.g., an opposite tooth within the same dental arch or an antagonist, may be used for generating the three-dimensional digital restorative tooth model. The three-dimensional digital model of the other tooth may be generated using scan data of the respective other tooth. For example, the three-dimensional digital model of the other tooth may in addition be adjusted to the dentition of the patient. For example, the three-dimensional digital tooth model descriptive of a current form and a current position of the tooth within the dentition may be used for generating the generating the three-dimensional digital restorative tooth model. For example, the three-dimensional digital tooth model may be adjusted to resemble a target form and a target position of the tooth to be achieved by the one or more ortho-restorative measures. For example, the three-dimensional digital restorative tooth model may be generated from scratch.

For example, a trained machine learning module may be used for generating the three-dimensional digital restorative tooth model. The three-dimensional digital restorative tooth model may be received as output from the trained machine learning module in response to providing the three-dimensional digital tooth model as input. For example, the three-dimensional digital tooth model may be provided as part of a three-dimensional digital dentition model as input to the trained machine learning module.

In block 306, a three-dimensional digital reduced restorative tooth model is determined using the three-dimensional digital restorative tooth model. The three-dimensional digital restorative tooth model is reduced by a predefined minimum volume required for receiving a dental restoration element for obtaining the target form of the tooth.

In block 308, a core section of the three-dimensional digital tooth model to be excluded from preparation is determined. The core section may, e.g., comprise a pulp chamber of the tooth.

For determining the core section, the method may, e.g., further comprise determining position and form of a pulp chamber of the tooth within the three-dimensional digital tooth model for determining the core section. For example, position and form of the pulp chamber within the tooth may be estimated using the form of the three-dimensional digital tooth model. For example, a tooth type specific depth may be used for estimating the form and position of the pulp chamber within the tooth. For example, the three-dimensional digital tooth model may be reduced by predefined tooth type specific depth with the reduced three-dimensional digital tooth model, e.g., being used as the core section of the three-dimensional digital tooth model. The tooth type specific depth may, e.g., vary in different tooth direction, i.e., the tooth type specific depth may be a tooth section specific depth.

For a rough estimate of the position and form of the pulp chamber, the three-dimensional digital tooth model may, e.g., be reduced by 2 mm and a resulting reduced three-dimensional digital tooth model may be used as the core section of the three-dimensional digital tooth model.

For example, position and form of the pulp chamber within the tooth may be estimated using a library of typical forms of pulp chambers. For example, machine learning module may be used for estimating position and form of the pulp chamber.

For example, scan data of an X-ray and/or CBCT scan of the tooth are received. For example, DICOM data of X-ray images and/or CBCT images of the tooth are received. For example, scan data of a near-infrared scan of the tooth are received. The scan data may be indicative of the form and/or position of the pulp chamber within the tooth. The respective scan data may be used to determine the form and/or position of the pulp chamber within the tooth. The respective scan data may be used to determine the core section comprising the pulp chamber within the tooth.

For example, a trained machine learning module may be used for determining a three-dimensional digital pulp chamber model. The three-dimensional digital pulp chamber model may be received as output from the trained machine learning module in response to providing the three-dimensional digital tooth model as input. For example, the three-dimensional digital tooth model may be provided as part of a three-dimensional digital dentition model as input to the trained machine learning module. For example, the core section of the three-dimensional digital tooth model may further comprise a safety layer of tooth material for protecting the pulp chamber.

For example, when using a trained machine learning module for determining the core section of the tooth, the machine learning module may be trained for determining a three-dimensional digital core section model of a core section of a tooth comprising in addition to the pulp chamber of the respective tooth a safety layer of tooth material for protecting the pulp chamber.

In block 310, one or more orthodontic parameters are determined. The one or more orthodontic parameters are descriptive of the orthodontic adjustment of the position of the three-dimensional digital tooth model with at least a part of the core section of the orthodontically adjusted three-dimensional digital tooth model fitting into the three-dimensional digital reduced restorative tooth model. Furthermore, the one or more ortho-restorative measures may, e.g., comprise a preparation of the orthodontically adjusted three-dimensional digital tooth model for receiving the dental restoration element. In block 310, the method may further comprise determining one or more preparation parameters descriptive of the preparation of the orthodontically adjusted three-dimensional digital tooth model.

The preparation described by the one or more preparation parameters may, e.g., comprise a removing of one or more sections of the orthodontically adjusted three-dimensional digital tooth model intersecting with the minimum volume determined for the three-dimensional digital restorative tooth model. The preparation described by the one or more preparation parameters may, e.g., further comprise removing one or more surface layers from one or more surface sections of the orthodontically adjusted three-dimensional digital tooth model for improving the bonding of the dental restoration element. These surface sections, from which the surface layers are removed, do not intersect with the minimum volume. The three-dimensional digital tooth model may, e.g., comprise one or more defects of the tooth to be repaired by the one or more ortho-restorative measures to be applied to the tooth. In this case, the one or more preparation parameters may, e.g., further be adjusted to remove the defects.

In block 320, the one or more orthodontic parameters are output. In case the one or more ortho-restorative measures comprise a preparation of the orthodontically adjusted three-dimensional digital tooth model, for which the one or more preparation parameters are determined, the one or more preparation parameters may be output in block 320 as well.

In block 328, a three-dimensional digital dental restoration model defining the dental restoration element is generated. The three-dimensional digital dental restoration model is adjusted to the one or more preparation parameters output in block 320. The generating of the three-dimensional digital dental restoration model may, e.g., comprise a subtracting of the orthodontically adjusted three-dimensional digital tooth model prepared as described by the one or more preparation parameters from the three-dimensional digital restorative tooth model. The generating of the three-dimensional digital dental restoration model may, e.g., further comprise subtracting an additional minimum space for applying a bonding material for bonding the dental restoration element from the three-dimensional digital restorative tooth model.

In block 330, three-dimensional digital dental restoration model generated in block 328 is output. The three-dimensional digital dental restoration model may, e.g., be output in order to be used for manufacturing a dental restoration element.

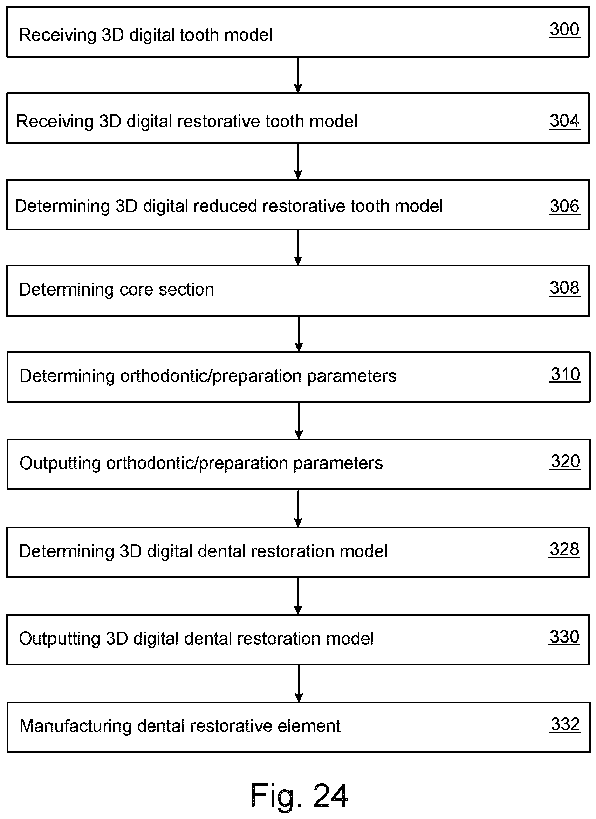

Fig. 24 shows an exemplary method for manufacturing a dental restoration element for a tooth as part of ortho-restorative measures applied to the tooth, in order to achieve a desired restoration result of the tooth. For this purpose, one or more parameters of ortho-restorative measures are determined. The ortho-restorative measures further comprise an orthodontic adjustment of a position of the tooth within a dentition.

In block 300, a three-dimensional digital tooth model descriptive of a current form and a current position of the tooth within the dentition is received. The three-dimensional digital tooth model may e.g., be provided using scan data of the respective tooth of the patient acquired using a scanner, e.g., an optical scanner. The scan may be a direct scan of the patient's tooth, e.g., an intraoral scan. Alternatively or additionally, an indirect scan of the patient's tooth may be used to acquire the scan data. For example, a dental impression of the patient's tooth or a dental model of the respective tooth dentition, like a plaster model, may be scanned. The three-dimensional digital tooth model may, e.g., be generated by a computer system executing the method for determining the parameters of the ortho-restorative measures or it may be received from an external source. The external source may, e.g., be a server, like a cloud server, providing the three-dimensional digital tooth model via a network. The external source may, e.g., be a removable storage device providing the three-dimensional digital tooth model via a direct communication connection, e.g., wireless or via a wire.

In block 304, a three-dimensional digital restorative tooth model is received defining a target form and a target position of the tooth to be achieved by the one or more ortho-restorative measures. This three-dimensional digital restorative tooth model as a target state model of the respective tooth may resemble a state of the patient's tooth to be achieved using ortho-restorative measures. Thus, the three-dimensional digital restorative tooth model may be used as a digital template. The three-dimensional digital restorative tooth model may, e.g., be generated by the computer system executing the method for determining the parameters of the ortho-restorative measures or it may be received from an external source. The external source may, e.g., be a server, like a cloud server, providing the three-dimensional digital restorative tooth model via a network. The external source may, e.g., be a removable storage device providing the three-dimensional digital restorative tooth model via a direct communication connection e.g., wireless or via a wire.

For generating the three-dimensional digital restorative tooth model, e.g., a three-dimensional digital library tooth model from a digital tooth library may be used. For example, the three-dimensional digital library tooth model may in addition be adjusted to the dentition of the patient. For example, a three-dimensional digital model of another tooth of the patient's dentition, e.g., an opposite tooth within the same dental arch or an antagonist, may be used for generating the three-dimensional digital restorative tooth model. The three-dimensional digital model of the other tooth may be generated using scan data of the respective other tooth. For example, the three-dimensional digital model of the other tooth may in addition be adjusted to the dentition of the patient. For example, the three-dimensional digital tooth model descriptive of a current form and a current position of the tooth within the dentition may be used for generating the generating the three-dimensional digital restorative tooth model. For example, the three-dimensional digital tooth model may be adjusted to resemble a target form and a target position of the tooth to be achieved by the one or more ortho-restorative measures. For example, the three-dimensional digital restorative tooth model may be generated from scratch.

For example, a trained machine learning module may be used for generating the three-dimensional digital restorative tooth model. The three-dimensional digital restorative tooth model may be received as output from the trained machine learning module in response to providing the three-dimensional digital tooth model as input. For example, the three-dimensional digital tooth model may be provided as part of a three-dimensional digital dentition model as input to the trained machine learning module.

In block 306, a three-dimensional digital reduced restorative tooth model is determined using the three-dimensional digital restorative tooth model. The three-dimensional digital restorative tooth model is reduced by a predefined minimum volume required for receiving a dental restoration element for obtaining the target form of the tooth.

In block 308, a core section of the three-dimensional digital tooth model to be excluded from preparation is determined. The core section may, e.g., comprise a pulp chamber of the tooth.

For determining the core section, the method may, e.g., further comprise determining position and form of a pulp chamber of the tooth within the three-dimensional digital tooth model for determining the core section. For example, position and form of the pulp chamber within the tooth may be estimated using the form of the three-dimensional digital tooth model. For example, a tooth type specific depth may be used for estimating the form and position of the pulp chamber within the tooth. For example, the three-dimensional digital tooth model may be reduced by predefined tooth type specific depth with the reduced three-dimensional digital tooth model, e.g., being used as the core section of the three-dimensional digital tooth model. The tooth type specific depth may, e.g., vary in different tooth direction, i.e., the tooth type specific depth may be a tooth section specific depth.

For a rough estimate of the position and form of the pulp chamber, the three-dimensional digital tooth model may, e.g., be reduced by 2 mm and a resulting reduced three-dimensional digital tooth model may be used as the core section of the three-dimensional digital tooth model.

For example, position and form of the pulp chamber within the tooth may be estimated using a library of typical forms of pulp chambers. For example, machine learning module may be used for estimating position and form of the pulp chamber.

For example, scan data of an X-ray and/or CBCT scan of the tooth are received. For example, DICOM data of X-ray images and/or CBCT images of the tooth are received. For example, scan data of a near-infrared scan of the tooth are received. The scan data may be indicative of the form and/or position of the pulp chamber within the tooth. The respective scan data may be used to determine the form and/or position of the pulp chamber within the tooth. The respective scan data may be used to determine the core section comprising the pulp chamber within the tooth.

For example, a trained machine learning module may be used for determining a three-dimensional digital pulp chamber model. The three-dimensional digital pulp chamber model may be received as output from the trained machine learning module in response to providing the three-dimensional digital tooth model as input. For example, the three-dimensional digital tooth model may be provided as part of a three-dimensional digital dentition model as input to the trained machine learning module. For example, the core section of the three-dimensional digital tooth model may further comprise a safety layer of tooth material for protecting the pulp chamber.

For example, when using a trained machine learning module for determining the core section of the tooth, the machine learning module may be trained for determining a three-dimensional digital core section model of a core section of a tooth comprising in addition to the pulp chamber of the respective tooth a safety layer of tooth material for protecting the pulp chamber.

In block 310, one or more orthodontic parameters are determined. The one or more orthodontic parameters are descriptive of the orthodontic adjustment of the position of the three-dimensional digital tooth model with at least a part of the core section of the orthodontically adjusted three-dimensional digital tooth model fitting into the three-dimensional digital reduced restorative tooth model. Furthermore, the one or more ortho-restorative measures may, e.g., comprise a preparation of the orthodontically adjusted three-dimensional digital tooth model for receiving the dental restoration element. In block 310, the method may further comprise determining one or more preparation parameters descriptive of the preparation of the orthodontically adjusted three-dimensional digital tooth model.

The preparation described by the one or more preparation parameters may, e.g., comprise a removing of one or more sections of the orthodontically adjusted three-dimensional digital tooth model intersecting with the minimum volume determined for the three-dimensional digital restorative tooth model. The preparation described by the one or more preparation parameters may, e.g., further comprise removing one or more surface layers from one or more surface sections of the orthodontically adjusted three-dimensional digital tooth model for improving the bonding of the dental restoration element. These surface sections, from which the surface layers are removed, do not intersect with the minimum volume. The three-dimensional digital tooth model may, e.g., comprise one or more defects of the tooth to be repaired by the one or more ortho-restorative measures to be applied to the tooth. In this case, the one or more preparation parameters may, e.g., further be adjusted to remove the defects.

In block 320, the one or more orthodontic parameters are output. In case the one or more ortho-restorative measures comprise a preparation of the orthodontically adjusted three-dimensional digital tooth model, for which the one or more preparation parameters are determined, the one or more preparation parameters may be output in block 320 as well.

In block 328, a three-dimensional digital dental restoration model defining the dental restoration element is generated. The three-dimensional digital dental restoration model is adjusted to the one or more preparation parameters output in block 320. The generating of the three-dimensional digital dental restoration model may, e.g., comprise a subtracting of the orthodontically adjusted three-dimensional digital tooth model prepared as described by the one or more preparation parameters from the three-dimensional digital restorative tooth model. The generating of the three-dimensional digital dental restoration model may, e.g., further comprise subtracting an additional minimum space for applying a bonding material for bonding the dental restoration element from the three-dimensional digital restorative tooth model.

In block 330, three-dimensional digital dental restoration model generated in block 328 is output. The three-dimensional digital dental restoration model may, e.g., be output in order to be used for manufacturing the dental restoration element.

In block 332, the dental restoration element may be manufactured using the three-dimensional digital dental restoration model output in block 330. For manufacturing the dental restoration element, one or more manufacturing device for manufacturing the dental restoration element in form of a physical copy of the three-dimensional digital dental restoration model may be controlled. Thus, the three-dimensional digital dental restoration model may be used as a template for manufacturing the dental restoration element as a physical copy of the template.

For example, the dental restoration element may be manufactured using a subtractive method, like machining, and/or an additive method, like 3D printing or casting.

For example, the dental restoration element may be manufactured using a machining device configured to manufacture the dental restoration element by processing a blank of restoration material. For example, the dental restoration element may be manufactured using a 3D printing device, i.e., a printer, configured to print the dental restoration element. For example, the 3D digital restoration model may be used as a positive to define a negative of the physical dental restoration element in form of a negative 3D digital restoration model. The negative 3D digital restoration model may be used to manufacture, e.g., using machining or 3D printing, a casting matrix. The casting matrix may be configured for casting the physical dental restoration element by inserting restoration material into the casting matrix and curing the inserted restoration material.

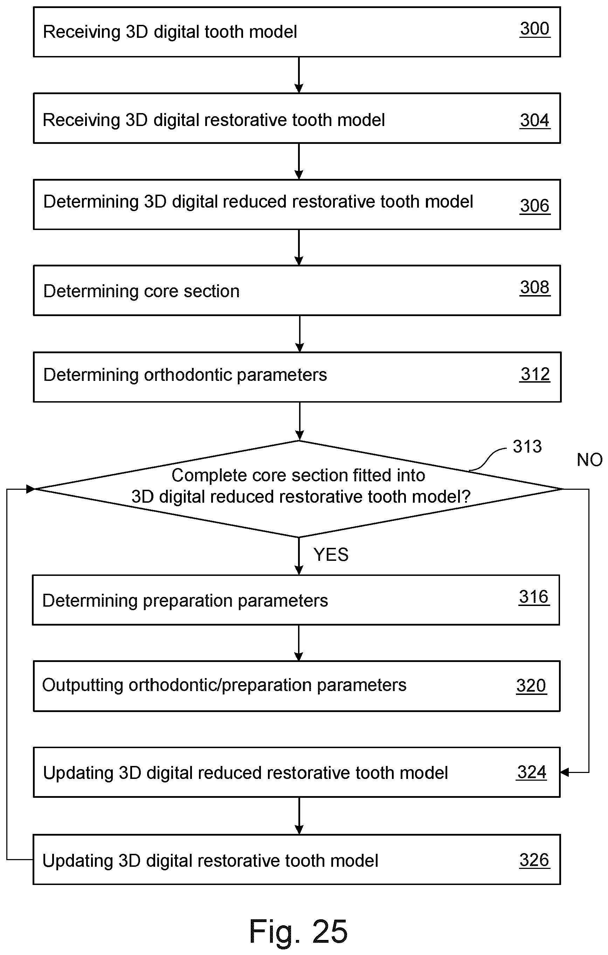

Fig. 25 shows an exemplary method for determining one or more parameters of one or more ortho-restorative measures to be applied to a tooth. The one or more ortho-restorative measures comprising an orthodontic adjustment of a position of the tooth within a dentition.

In block 300, a three-dimensional digital tooth model descriptive of a current form and a current position of the tooth within the dentition is received. The three-dimensional digital tooth model may e.g., be provided using scan data of the respective tooth of the patient acquired using a scanner, e.g., an optical scanner. The scan may be a direct scan of the patient's tooth, e.g., an intraoral scan. Alternatively or additionally, an indirect scan of the patient's tooth may be used to acquire the scan data. For example, a dental impression of the patient's tooth or a dental model of the respective tooth dentition, like a plaster model, may be scanned. The three-dimensional digital tooth model may, e.g., be generated by a computer system executing the method for determining the parameters of the ortho-restorative measures or it may be received from an external source. The external source may, e.g., be a server, like a cloud server, providing the three-dimensional digital tooth model via a network. The external source may, e.g., be a removable storage device providing the three-dimensional digital tooth model via a direct communication connection, e.g., wireless or via a wire.

In block 304, a three-dimensional digital restorative tooth model is received defining a target form and a target position of the tooth to be achieved by the one or more ortho-restorative measures. This three-dimensional digital restorative tooth model as a target state model of the respective tooth may resemble a state of the patient's tooth to be achieved using ortho-restorative measures. Thus, the three-dimensional digital restorative tooth model may be used as a digital template. The three-dimensional digital restorative tooth model may, e.g., be generated by the computer system executing the method for determining the parameters of the ortho-restorative measures or it may be received from an external source. The external source may, e.g., be a server, like a cloud server, providing the three-dimensional digital restorative tooth model via a network. The external source may, e.g., be a removable storage device providing the three-dimensional digital restorative tooth model via a direct communication connection e.g., wireless or via a wire.

For generating the three-dimensional digital restorative tooth model, e.g., a three-dimensional digital library tooth model from a digital tooth library may be used. For example, the three-dimensional digital library tooth model may in addition be adjusted to the dentition of the patient. For example, a three-dimensional digital model of another tooth of the patient's dentition, e.g., an opposite tooth within the same dental arch or an antagonist, may be used for generating the three-dimensional digital restorative tooth model. The three-dimensional digital model of the other tooth may be generated using scan data of the respective other tooth. For example, the three-dimensional digital model of the other tooth may in addition be adjusted to the dentition of the patient. For example, the three-dimensional digital tooth model descriptive of a current form and a current position of the tooth within the dentition may be used for generating the generating the three-dimensional digital restorative tooth model. For example, the three-dimensional digital tooth model may be adjusted to resemble a target form and a target position of the tooth to be achieved by the one or more ortho-restorative measures. For example, the three-dimensional digital restorative tooth model may be generated from scratch.

For example, a trained machine learning module may be used for generating the three-dimensional digital restorative tooth model. The three-dimensional digital restorative tooth model may be received as output from the trained machine learning module in response to providing the three-dimensional digital tooth model as input. For example, the three-dimensional digital tooth model may be provided as part of a three-dimensional digital dentition model as input to the trained machine learning module.

In block 306, a three-dimensional digital reduced restorative tooth model is determined using the three-dimensional digital restorative tooth model. The three-dimensional digital restorative tooth model is reduced by a predefined minimum volume required for receiving a dental restoration element for obtaining the target form of the tooth.

In block 308, a core section of the three-dimensional digital tooth model to be excluded from preparation is determined. The core section may, e.g., comprise a pulp chamber of the tooth.

For determining the core section, the method may, e.g., further comprise determining position and form of a pulp chamber of the tooth within the three-dimensional digital tooth model for determining the core section. For example, position and form of the pulp chamber within the tooth may be estimated using the form of the three-dimensional digital tooth model. For example, a tooth type specific depth may be used for estimating the form and position of the pulp chamber within the tooth. For example, the three-dimensional digital tooth model may be reduced by predefined tooth type specific depth with the reduced three-dimensional digital tooth model, e.g., being used as the core section of the three-dimensional digital tooth model. The tooth type specific depth may, e.g., vary in different tooth direction, i.e., the tooth type specific depth may be a tooth section specific depth.

For a rough estimate of the position and form of the pulp chamber, the three-dimensional digital tooth model may, e.g., be reduced by 2 mm and a resulting reduced three-dimensional digital tooth model may be used as the core section of the three-dimensional digital tooth model.

For example, position and form of the pulp chamber within the tooth may be estimated using a library of typical forms of pulp chambers. For example, machine learning module may be used for estimating position and form of the pulp chamber.

For example, scan data of an X-ray and/or CBCT scan of the tooth are received. For example, DICOM data of X-ray images and/or CBCT images of the tooth are received. For example, scan data of a near-infrared scan of the tooth are received. The scan data may be indicative of the form and/or position of the pulp chamber within the tooth. The respective scan data may be used to determine the form and/or position of the pulp chamber within the tooth. The respective scan data may be used to determine the core section comprising the pulp chamber within the tooth.

For example, a trained machine learning module may be used for determining a three-dimensional digital pulp chamber model. The three-dimensional digital pulp chamber model may be received as output from the trained machine learning module in response to providing the three-dimensional digital tooth model as input. For example, the three-dimensional digital tooth model may be provided as part of a three-dimensional digital dentition model as input to the trained machine learning module. For example, the core section of the three-dimensional digital tooth model may further comprise a safety layer of tooth material for protecting the pulp chamber.

For example, when using a trained machine learning module for determining the core section of the tooth, the machine learning module may be trained for determining a three-dimensional digital core section model of a core section of a tooth comprising in addition to the pulp chamber of the respective tooth a safety layer of tooth material for protecting the pulp chamber.

In block 312, one or more orthodontic parameters are determined. The one or more orthodontic parameters are descriptive of the orthodontic adjustment of the position of the three-dimensional digital tooth model with at least a part of the core section of the orthodontically adjusted three-dimensional digital tooth model fitting into the three-dimensional digital reduced restorative tooth model.

In block 313, it is checked, whether the complete core section is fitted into the three-dimensional digital reduced restorative tooth model as a result of the orthodontic adjustment described by the orthodontic parameters determined in block 312. In case the complete core section is fitted into the three-dimensional digital reduced restorative tooth model, the method is continued in block 316.

In block 316, one or more preparation parameters descriptive of the preparation of the orthodontically adjusted three-dimensional digital tooth model. The preparation described by the one or more preparation parameters may, e.g., comprise a removing of one or more sections of the orthodontically adjusted three-dimensional digital tooth model intersecting with the minimum volume determined for the three-dimensional digital restorative tooth model. The preparation described by the one or more preparation parameters may, e.g., further comprise removing one or more surface layers from one or more surface sections of the orthodontically adjusted three-dimensional digital tooth model for improving the bonding of the dental restoration element. These surface sections, from which the surface layers are removed, do not intersect with the minimum volume. The three-dimensional digital tooth model may, e.g., comprise one or more defects of the tooth to be repaired by the one or more ortho-restorative measures to be applied to the tooth. In this case, the one or more preparation parameters may, e.g., further be adjusted to remove the defects.

In block 320, the one or more orthodontic parameters are output. In case the one or more ortho-restorative measures comprise a preparation of the orthodontically adjusted three-dimensional digital tooth model, for which the one or more preparation parameters are determined, the one or more preparation parameters may be output in block 320 as well.

In case the check in block 313 shows that core section is not fitted completely into the three-dimensional digital reduced restorative tooth model, the method is continued in block 324.

In block 324, three-dimensional digital reduced restorative tooth model is updated to comprise the complete core section of the orthodontically adjusted three-dimensional digital tooth model. For example, form and/or position of the three-dimensional digital reduced restorative tooth model may be adjusted. This adjusted three-dimensional digital reduced restorative tooth model is used to update the current three-dimensional digital reduced restorative tooth model. The updated three-dimensional digital reduced restorative tooth model may be used to adjust and update the three-dimensional digital restorative tooth model.

In block 326, the three-dimensional digital restorative tooth model is updated. For updating the three-dimensional digital restorative tooth model, target form and/or the target position of the respective tooth as defined by the three-dimensional digital restorative tooth may be adjusted using the updated three-dimensional digital reduced restorative tooth model. The resulting adjusted three-dimensional digital restorative tooth model is used to update the current three-dimensional digital restorative tooth model. The method may be continued in block 313, checking for the updated three-dimensional digital reduced restorative tooth model, whether the complete core section is fitted into the three-dimensional digital reduced restorative tooth model.

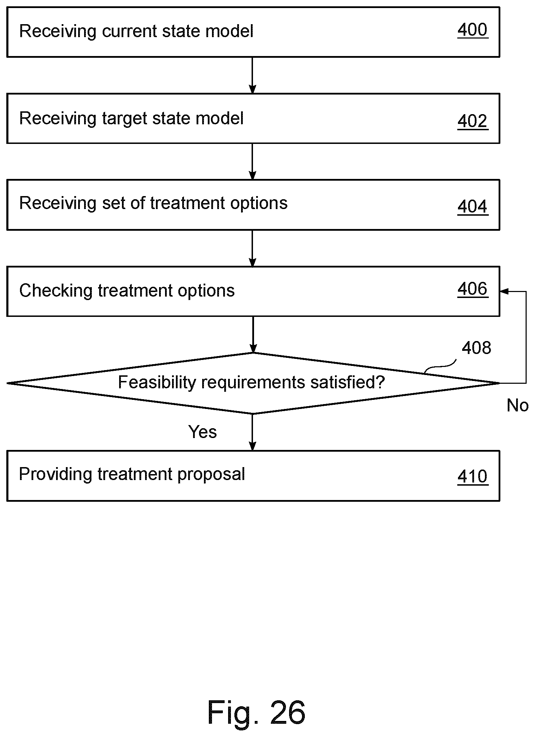

Fig. 26 shows an exemplary computer-implemented method for providing a treatment proposal for a dentition of a patient. In block 400, a three-dimensional digital model of a current state of the dentition is received as a current state model. The three-dimensional digital model of the current state of the dentition comprises the three-dimensional digital tooth model descriptive of a current form and a current position of the tooth within the dentition. For providing the current state model, scan data of the dentition may be used. This scan data may be acquired using an intraoral optical scan of the surface of the teeth and the gingiva of the patient. For example, an impression of the dentition or a physical model, like a plaster cast, may be scanned using an optical scanner to acquire the scan data. The scan data may further comprise NIRI data. The scan data may further comprise X-ray data. For example, the scan data may further comprise tomography data acquired, e.g., using CBCT. Alternatively or additionally, various other types of scan data may be acquired using imaging methods of oral and maxillofacial radiology.

In block 402, a three-dimensional digital model of a target state of the dentition to be achieved is received as a target state model. The three-dimensional digital model of the target state of the dentition to be achieved comprises the three-dimensional digital restorative tooth model defining the target form and the target position of the tooth. The target state model is generated using the current state model. For example, the individual teeth of the current state model may be modified regarding their position, orientation, size and/or shape. For example, individual teeth of the current state model may be replaced with three-dimensional digital models of teeth from a tooth library. The respective library teeth may be adjusted rearing position and/or orientation to the state defined by the current state model. Furthermore, size and/or shape of the library teeth may be modified.

In block 404, a set of treatment options for treating the dentition is received. The treatment option may, e.g., comprise using dental restorative elements to be arranged on prepared teeth, using dental restorative elements to be anchored using implants, and/or orthodontic measures. The set of treatment options may comprise a treatment option being assigned with the one or more parameters of one or more ortho-restorative measures determined according to any of the methods of Fig. 20 to 25 as implementation parameters. The determined one or more parameters of one or more ortho-restorative measures may, e.g., comprise one or more orthodontic parameters descriptive of the orthodontic measures to be applied for orthodontically adjusting the tooth, one or more preparation parameters descriptive of a preparation to be applied to the tooth, e.g., to the orthodontically adjusted tooth as defined by the respective orthodontic parameters, and/or a three-dimensional digital dental restoration model defining the dental restoration element to be arranged on the tooth, e.g., to the orthodontically adjusted tooth as defined by the respective orthodontic parameters.

For example, the set of treatment options may comprise a plurality of treatment options with each of the treatment options of the plurality of treatment options being assigned with parameters of different ortho-restorative measures as implementation parameters determined for different types of dental restorative elements according to any of the methods of Fig. 20 to 25.

The treatment options may, e.g., be ordered according to a ranking order. For example, the ranking order may be based on the extend of preparation required for the respective treatment options. A veneer may require non or only minimal preparation. Using a crown may require a preparation of a tooth stump, i.e., significant removal of healthy tooth tissue. Using an implant may require to completely remove a tooth. Furthermore, the ranking may take into account the achievable effects. For example, orthodontic measures may be defined as a fallback treatment option, if the other treatment options are not feasible. Furthermore, other ranking criteria may be taken into account. Even individual preferences of the patient and/or the costs of the different treatment options may be taken into account.

Each of the treatment options defines one or more pre-defined measures of dentition modifications, e.g., using dental restorative elements, implants in combination with dental restorative elements, or orthodontic appliances. Each of the treatment options is assigned with a set of one or more feasibility requirements to be met by the dentition for the treatment option to be feasible. For example, the teeth have to be suited for a suitable preparation for the respective treatment option. For example, the teeth may have to provide a suitable support surface. For example, the teeth may have to provide a sufficient support for the respective treatment option. For example, the current state may have to provide sufficient space for implementing the respective treatment option. Providing sufficient space may be required for designing, e.g., dental restorative elements, with a sufficient thickness. Furthermore, an absence of contraindications may be required. A contraindication for veneers may, e.g., be bruxism and/or tooth damage, like caries. A contraindication for crowns without an implant may, e.g., be extensive tooth damage.

For determining the presence of possible contraindications additional scan data, like NIRI data, panoramic radiographic data and/or CBCT data. NIRI data, panoramic radiographic data and/or CBCT data may, e.g., be used to determine the inner structure of a tooth. For example, it may be determined how much tooth tissue, like enamel and dentin, is present around the pulp of the tooth. Depending on this determination, it may be assessed, how much tooth tissue can be removed without endangering the pulp and thus the life of the tooth. For example, scan data may be used to determine current filling of the teeth. These fillings may be digitally removed from the current state model, in order to determine how much natural tooth tissue remains for a preparation. For example, it may be assessed, whether sufficient residual tooth tissue is available to prepare a sufficient support for a crown. If there is not sufficient residual tooth tissue available, the tooth may have to be removed completely and, e.g., an implant may have to be used to support the crown. Furthermore, bruxism may be determined using the scan data. Bruxism may, e.g., be determined based on the wear of the teeth. In case of bruxism, e.g., no usage of veneers may be possible due to the risk of a chipping of the veneers.

In block 406, one or more of the received treatment options are checked, e.g., subsequently following the ranking order. The checking for a given treatment option comprises determining, whether the dentition of the patient is meeting the feasibility requirements assigned to the treatment option being checked using the current state model. In block 408, it is decided based on the result of the checking, how the method continues. In case the dentition is determined to meet the feasibility requirements assigned to the treatment option being checked, the method continues with block 410.

In block 410, a treatment proposal is provided identifying the respective treatment option, for which the feasibility check in block 408 was positive, as well as implementation parameters determined for the measures of the identified treatment option. The implementation parameters are determined for the measures of the identified treatment option to modify the current state model such that one or more discrepancies of the current state model relative to the target state model are compensated. For example, the implementation parameters are determined such that the current state model applying the implementation parameters is modified such that it matches the target state model. For the determining in block 406, e.g., the implementation parameters may be determined and taken into account.

In case the feasibility check in block 408 is negative, the method may continue with checking the next treatment option according to the ranking order. This may be continued, until a treatment option is found satisfying the feasibility requirements. In case no treatment options are left, the method may terminate with an error message. For example, the method may be terminated, when block 410 is reached. For example, the method may be continued with block 406, in case a rejection command rejecting the treatment proposal is received, e.g., via an input device of the computer system used for executing the method. For example, the method may be terminated with block 410, in case an acceptance command accepting the treatment proposal is received, e.g., via an input device of the computer system used for executing the method.

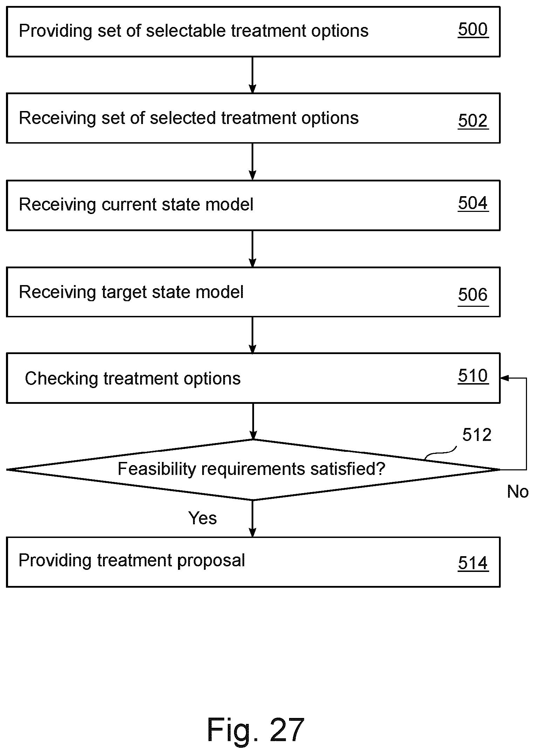

Fig. 27 shows a further exemplary computer-implemented method for providing a treatment proposal for a dentition of a patient. Blocks 504, 506 and 510 to 514 of Fig. 27 are identical to blocks 400, 402 and 406 to 410 of Fig. 26. In addition to blocks 504, 506 and 510 to 514, Fig. 27 further comprises in block 500 providing a predefined set of selectable treatment options, e.g., using an output device of the computer system used for executing the method. For example, the predefined set of selectable treatment options may be provided on a graphical user interface displayed on a display of the computer system. A user may thus be enabled to select the treatment options to be comprised by the set of treatment options provided in block 508. In response to the output of the predefined set of selectable treatment options, an input may be received in block 502 with the set of treatment options comprising treatment options selected from set of selectable treatment options. The input may, e.g., be via an input device of the computer system used for executing the method. For example, the input may furthermore comprise a definition of the ranking order of the selected treatment options. For example, the output in block 500 may comprise a proposed ranking order, which may be accepted or altered by the input received in block 502. According to alternative examples, block 500 and 502 may also be implemented after block 504 and/or after block 506.

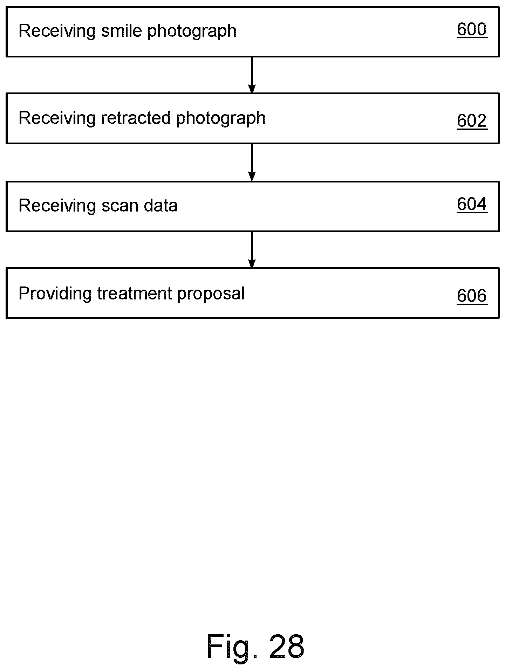

Fig. 28 shows a further exemplary computer-implemented method for providing a treatment proposal for a dentition of a patient. The method of Fig. 28 may, e.g., be used for providing a treatment proposal for improving the aesthetic appearance of a smile of the patient. In block 600, a smile photograph of a patient may be received. The smile photograph may, e.g., be taken using a digital camera. The smile photograph may show a smile of the patient, i.e., depicting the smiling patient. In block 602, a retracted photograph may be received. The retracted photograph may, e.g., be taken using a digital camera. In the retracted photograph, the patient's lips may be retracted or pushed back with the help of a plastic mouthpiece, e.g., a transparent mouthpiece, to reveal the teeth of the patient as much as possible. The smile photograph and the retracted photograph may, e.g., both be 2D photographs. In block 604, the three-dimensional scan data required for generating the three-dimensional current state model and/or for checking the feasibility requirements may be received. The three-dimensional scan data may, e.g., be acquired using a suitable scanner. In block 606, a treatment proposal may be provided. Providing the treatment proposal may comprise executing the method of Fig. 26, i.e., blocks 400 to 410, or executing the method of Fig. 27, i.e., blocks 500 to 514.

The photographs received in blocks 600 and 602 may be registered with the three-dimensional current state model provided using the scan data of block 604. The registration may for example use a point registration or an automatic registration using machine learning may be implemented. For example, the retracted photograph of block 602 depicting more of the patient's teeth than the smile photograph of block 600 may be used to register the three-dimensional current state model of the dentition with the 2D teeth of the photographs of the teeth. The retracted photograph of block 602 and the smile photograph of block 600 may be registered with each other, e.g., using the parts of the teeth shown on both photographs. The smile photograph of block 600 may be placed lingual in front of the current state model with the smile being cut out along the lip lines such that in the mouth of the patient the teeth of the three-dimensional model may be visible instead of the teeth depicted in the smile photograph. For placing the smile photograph of block 600, the registration of the smile photograph with the retracted photograph of block 602 may be used. Alternatively, only the smile photograph may be used and registered with the current state model before cutting out the teeth, in case the teeth sections shown in the smile photograph are sufficient for a registration.

This placement of the smile photograph of block 600 in front of the current state model may allow to see the current state model through the cut-out of the smile photograph. The current state model may be modified, providing the target state model. By replacing the current state with the target state model, the effect of the modifications may be visualized in context of the 2D smile photograph. Thus, a realistic impression of the aesthetic appears of possible three-dimensional modifications of the patient dentition may be provided in the 2D photograph. In particular, the effects of such modifications on the aesthetic appearance of the patient's smile may be illustrated.

After generating a satisfying target state model and, e.g., checking the aesthetic effect of the respective target state model on the smile of the patient, a treatment proposal for the dentition of the patient in order to achieve the target model may be provided in block 606.

While the invention has been illustrated and described in detail in the drawings and foregoing description, such illustration and description are to be considered illustrative or exemplary and not restrictive; the invention is not limited to the disclosed embodiments.

Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. The mere fact that certain measures are recited in mutually different dependent claims does not indicate that a combination of these measured cannot be used to advantage. Any reference signs in the claims should not be construed as limiting the scope.

A single processor or other unit may fulfill the functions of several items recited in the claims. A computer program may be stored/distributed on a suitable medium, such as an optical storage medium or a solid-state medium supplied together with or as part of other hardware, but may also be distributed in other forms, such as via the Internet or other wired or wireless telecommunication systems.

As will be appreciated by one skilled in the art, aspects of the present invention may be embodied as an apparatus, method, computer program or computer program product. Accordingly, aspects of the present invention may take the form of an entirely hardware embodiment, an entirely software embodiment (including firmware, resident software, microcode, etc.) or an embodiment combining software and hardware aspects that may all generally be referred to herein as a "circuit," "module" or "system." Furthermore, aspects of the present invention may take the form of a computer program product embodied in one or more computer readable medium(s) having computer executable code embodied thereon. A computer program comprises the computer executable code or "program instructions".

Any combination of one or more computer readable medium(s) may be utilized. The computer readable medium may be a computer readable signal medium or a computer readable storage medium. A "computer-readable storage medium" as used herein encompasses any tangible storage medium which may store instructions which are executable by a processor of a computing device. The computer-readable storage medium may be referred to as a computer-readable non-transitory storage medium. The computer-readable storage medium may also be referred to as a tangible computer readable medium. For example, a computer-readable storage medium may also be able to store data which is able to be accessed by the processor of the computing device. Examples of computer-readable storage media include, but are not limited to: a floppy disk, a magnetic hard disk drive, a solid-state hard disk, flash memory, a USB thumb drive, Random Access Memory (RAM), Read Only Memory (ROM), an optical disk, a magnetooptical disk, and the register file of the processor. Examples of optical disks include Compact Disks (CD) and Digital Versatile Disks (DVD), for example CD-ROM, CD-RW, CD-R, DVD-ROM, DVD-RW, or DVD-R disks. A further example of an optical disk may be a Blu-ray disk. The term computer readable-storage medium also refers to various types of recording media capable of being accessed by the computer device via a network or communication link. For example, a data may be retrieved over a modem, over the internet, or over a local area network. Computer executable code embodied on a computer readable medium may be transmitted using any appropriate medium, including but not limited to wireless, wireline, optical fiber cable, RF, etc., or any suitable combination of the foregoing.

A computer readable signal medium may include a propagated data signal with computer executable code embodied therein, for example, in baseband or as part of a carrier wave. Such a propagated signal may take any of a variety of forms, including, but not limited to, electromagnetic, optical, or any suitable combination thereof. A computer readable signal medium may be any computer readable medium that is not a computer readable storage medium and that can communicate, propagate, or transport a program for use by or in connection with an instruction execution system, apparatus, or device.

"Computer memory" or "memory" is an example of a computer-readable storage medium. Computer memory is any memory which is directly accessible to a processor. "Computer storage" or "storage" is a further example of a computer-readable storage medium. Computer storage is any non-volatile computer-readable storage medium. For example, computer storage may also be computer memory or vice versa.

A "processor" as used herein encompasses an electronic component which is able to execute a program or machine executable instruction or computer executable code. References to the computing device comprising "a processor" should be interpreted as possibly containing more than one processor or processing core. The processor may for instance be a multi-core processor. A processor may also refer to a collection of processors within a single computer device or distributed amongst multiple computer devices. The term computing device should also be interpreted to possibly refer to a collection or network of computing devices each comprising a processor or processors. The computer executable code may be executed by multiple processors that may be within the same computing device or which may even be distributed across multiple computing devices.

Computer executable code may comprise machine executable instructions or a program which causes a processor to perform an aspect of the present invention. Computer executable code for carrying out operations for aspects of the present invention may be written in any combination of one or more programming languages, including an object-oriented programming language such as Java, Smalltalk, C++ or the like and conventional procedural programming languages, such as the "C" programming language or similar programming languages and compiled into machine executable instructions. In some instances, the computer executable code may be in the form of a high-level language or in a pre-compiled form and be used in conjunction with an interpreter which generates the machine executable instructions on the fly.

The computer executable code may execute entirely on the user's computer, partly on the user's computer, as a stand-alone software package, partly on the user's computer and partly on a remote computer or entirely on the remote computer or server. In the latter scenario, the remote computer may be connected to the user's computer through any type of network, including a local area network (LAN) or a wide area network (WAN), or the connection may be made to an external computer (for example, through the Internet using an Internet Service Provider).

Generally, the program instructions can be executed on one processor or on several processors. In the case of multiple processors, they can be distributed over several different entities like clients, servers etc. Each processor could execute a portion of the instructions intended for that entity. Thus, when referring to a system or process involving multiple entities, the computer program or program instructions are understood to be adapted to be executed by a processor associated or related to the respective entity.

A "user interface" as used herein is an interface which allows a user or operator to interact with a computer or computer device. A 'user interface' may also be referred to as a 'human interface device." A user interface may provide information or data to the operator and/or receive information or data from the operator. A user interface may enable input from an operator to be received by the computer and may provide output to the user from the computer. In other words, the user interface may allow an operator to control or manipulate a computer and the interface may allow the computer to indicate the effects of the operator's control or manipulation. The display of data or information on a display or a graphical user interface is an example of providing information to an operator. The receiving of data through a keyboard, mouse, trackball, touchpad, pointing stick, graphics tablet, joystick, gamepad, webcam, headset, gear sticks, steering wheel, pedals, wired glove, dance pad, remote control, one or more switches, one or more buttons, and accelerometer are all examples of user interface components which enable the receiving of information or data from an operator.

A GUI element is a data object some of which's attributes specify the shape, layout and/or behavior of an area displayed on a graphical user interface, e.g., a screen. A GUI element can be a standard GUI element such as a button, a text box, a tab, an icon, a text field, a pane, a check-box item or item group or the like. A GUI element can likewise be an image, an alphanumeric character or any combination thereof. At least some of the properties of the displayed GUI elements depend on the data value aggregated on the group of data object said GUI element represents.

Aspects of the present invention are described with reference to flowchart illustrations and/or block diagrams of methods, apparatus (systems) and computer program products. It will be understood that each block or a portion of the blocks of the flowchart, illustrations, and/or block diagrams, can be implemented by computer program instructions in form of computer executable code when applicable. It is further understood that, when not mutually exclusive, combinations of blocks in different flowcharts, illustrations, and/or block diagrams may be combined. These computer program instructions may be provided to a processor of a generalpurpose computer, special-purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

These computer program instructions may also be stored in a computer readable medium that can direct a computer, other programmable data processing apparatus, or other devices to function in a particular manner, such that the instructions stored in the computer readable medium produce an article of manufacture including instructions which implement the function/act specified in the flowchart and/or block diagram block or blocks.

The computer program instructions may also be loaded onto a computer, other programmable data processing apparatus, or other devices to cause a series of operational steps to be performed on the computer, other programmable apparatus or other devices to produce a computer-implemented process such that the instructions which execute on the computer or other programmable apparatus provide processes for implementing the functions/acts specified in the flowchart and/or block diagram block or blocks.

### REFERENCE SIGNS LIST

- 10: computer device
- 11: manufacturing system
- 14: external device
- 16: processing unit
- 18: bus
- 20: network adapter
- 22: I/O interface
- 24: display
- 28: memory
- 30: RAM
- 32: cache
- 34: storage system
- 40: program
- 42: program module
- 50: user interface
- 52: control elements
- 54: hardware device
- 56: keyboard
- 58: mouse
- 59: scanner
- 60: 3D printing device
- 62: printing element
- 70: machining device
- 72: machining tool
- 74: holding device
- 76: blank
- 78: raw material
- 100: 3D digital tooth model
- 102: 3D digital restorative tooth model
- 104: 3D digital reduced restorative tooth model
- 106: core section
- 108: preparation
- 110: 3D digital restoration model
- 112: prepared 3D digital tooth model
- 113: cervical preparation margin
- 114: thickness of predefined minimum volume
- 115: insertion direction
- 116: predefined minimum volume
- 117: section of 3D digital reduced restorative tooth model
- 118: undercut
- 119: defect
- 120: 3D digital gingiva model
- 122: dental restorative element
- 124: prepared tooth

## Claims

1. A computer-implemented method for determining one or more parameters of one or more ortho-restorative measures to be applied to a tooth, the one or more ortho-restorative measures comprising an orthodontic adjustment of a position of the tooth within a dentition,
the method comprising:
receiving a three-dimensional digital tooth model (100), the three-dimensional digital tooth model (100) being descriptive of a current form and a current position of the tooth within the dentition,
receiving a three-dimensional digital restorative tooth model (102), the three-dimensional digital restorative tooth model (102) defining a target form and a target position of the tooth to be achieved by the one or more ortho-restorative measures,
determining a three-dimensional digital reduced restorative tooth model (104) using the three-dimensional digital restorative tooth model (102), which is reduced by a predefined minimum volume (116) required for receiving a dental restoration element (122) for obtaining the target form of the tooth,
determining a core section (106) of the three-dimensional digital tooth model (100) to be excluded from preparation (108),
determining one or more orthodontic parameters descriptive of the orthodontic adjustment of the position of the three-dimensional digital tooth model (100) with at least a part of the core section (106) of the orthodontically adjusted three-dimensional digital tooth model (100) fitting into the three-dimensional digital reduced restorative tooth model (104),
outputting the one or more orthodontic parameters.

2. The method of claim 1, the orthodontic adjustment being determined with the complete core section (106) of the orthodontically adjusted three-dimensional digital tooth model (100) fitting into the three-dimensional digital reduced restorative tooth model (104), or
the orthodontic adjustment being determined with another part of the core section (106) of the orthodontically adjusted three-dimensional digital tooth model (100) not fitting into the three-dimensional digital reduced restorative tooth model (104), the method further comprising updating the three-dimensional digital reduced restorative tooth model (104) by an adjusted three-dimensional digital reduced restorative tooth model (104) being adjusted to comprise the complete core section (106) of the orthodontically adjusted three-dimensional digital tooth model (100), updating the three-dimensional digital restorative tooth model (102) by an adjusted three-dimensional digital restorative tooth model (102) adjusted using the adjusted three-dimensional digital reduced restorative tooth model (104).

3. The method of any of the previous claims, the predefined minimum volume (116) having a thickness (114) comprising a minimum material thickness required by a predefined restoration material of the dental restoration element (122).

4. The method of any of the previous claims, further comprising determining position and form of a pulp chamber of the tooth within the three-dimensional digital tooth model (100), the pulp chamber being comprised by the core section (106) of the three-dimensional digital tooth model (100).

5. The method of claim 4, the core section (106) of the three-dimensional digital tooth model (100) further comprising a safety layer of tooth material for protecting the pulp chamber.

6. The method of any of the previous claims, the one or more ortho-restorative measures comprising a preparation (108) of the orthodontically adjusted three-dimensional digital tooth model (100) for receiving the dental restoration element (122), the method further comprising determining one or more preparation parameters descriptive of the preparation (108) of the orthodontically adjusted three-dimensional digital tooth model (100),
outputting the one or more preparation parameters.

7. The method of claim 6, the preparation (108) described by the one or more preparation parameters comprising removing one or more sections of the orthodontically adjusted three-dimensional digital tooth model (100) extending beyond the three-dimensional digital reduced restorative tooth model (104).

8. The method of claim 7, the preparation (108) described by the one or more preparation parameters further comprising removing a surface layer from a surface section of the orthodontically adjusted three-dimensional digital tooth model (100) arranged within the three-dimensional digital reduced restorative tooth model (104) for improving the bonding of the dental restoration element (122) to the surface section, and/or
the three-dimensional digital tooth model (100) comprising one or more defects (119) of the tooth to be repaired by the one or more ortho-restorative measures to be applied to the tooth, the one or more preparation parameters being further adjusted to remove the defects (119), and/or
the determining of the one or more preparation parameters further comprising taking into account an insertion direction (115) of the dental restoration element (122) onto the orthodontically adjusted three-dimensional digital tooth model (100).

9. The method of any of claims 6 to 8, further comprising receiving a three-dimensional digital gingiva model (120), the three-dimensional digital gingiva model (120) being descriptive of a current form and a current position of a gingiva around the tooth within the dentition,
adjusting the form and the position of the three-dimensional digital gingiva model (120) to the orthodontic adjustment of the position of the three-dimensional digital tooth model (100), and/or
further comprising generating a three-dimensional digital dental restoration model (110) defining the dental restoration element (122), the three-dimensional digital dental restoration model (110) being adjusted to the one or more preparation parameters descriptive of the preparation (108) of the prepared orthodontically adjusted tooth (124),
outputting the three-dimensional digital dental restoration model.

10. The method of any of claims 6 to 9, the determining of the one or more orthodontic parameters of the orthodontic adjustment of the position of the three-dimensional digital tooth model (100) further comprising determining a final position of the core section (106) of the orthodontically adjusted three-dimensional digital tooth model (100) within the three-dimensional digital reduced restorative tooth model (104).

11. The method of claim 10, the determining of the final position comprising
repeatedly further adjusting the position of the three-dimensional digital tooth model (100) and determining one or more updated preparation parameters of the preparation (108) of the further adjusted three-dimensional digital tooth model (100), until a predefined stop criterion for the further adjusting is satisfied by the updated preparation parameters.

12. A computer program product for determining one or more parameters of one or more ortho-restorative measures to be applied to a tooth, the one or more ortho-restorative measures comprising an orthodontic adjustment of a position of the tooth within a dentition,
the computer program product comprising a computer readable storage medium having program instructions embodied therewith, the program instructions being executable by a processor (16) of a computer device (10) to cause the computer device (10) to:
receive a three-dimensional digital tooth model (100), the three-dimensional digital tooth model (100) being descriptive of a current form and a current position of the tooth within the dentition,
receive a three-dimensional digital restorative tooth model (102), the three-dimensional digital restorative tooth model (102) defining a target form and a target position of the tooth to be achieved by the one or more ortho-restorative measures,
determine a three-dimensional digital reduced restorative tooth model (104) using the three-dimensional digital restorative tooth model (102), which is reduced by a predefined minimum volume (116) required for receiving a dental restoration element (122) for obtaining the target form of the tooth,
determine a core section (106) of the three-dimensional digital tooth model (100) to be excluded from preparation (108),
determine one or more orthodontic parameters descriptive of the orthodontic adjustment of the position of the three-dimensional digital tooth model (100) with at least a part of the core section (106) of the orthodontically adjusted three-dimensional digital tooth model (100) fitting into the three-dimensional digital reduced restorative tooth model (104),
output the one or more orthodontic parameters.

13. A computer program (42) for determining one or more parameters of one or more ortho-restorative measures to be applied to a tooth, the one or more ortho-restorative measures comprising an orthodontic adjustment of a position of the tooth within a dentition,
the computer program (42) comprising program instructions, the program instructions being executable by a processor (16) of a computer device (10) to cause the computer device (10) to:
receive a three-dimensional digital tooth model (100), the three-dimensional digital tooth model (100) being descriptive of a current form and a current position of the tooth within the dentition,
receive a three-dimensional digital restorative tooth model (102), the three-dimensional digital restorative tooth model (102) defining a target form and a target position of the tooth to be achieved by the one or more ortho-restorative measures,
determine a three-dimensional digital reduced restorative tooth model (104) using the three-dimensional digital restorative tooth model (102), which is reduced by a predefined minimum volume (116) required for receiving a dental restoration element (122) for obtaining the target form of the tooth,
determine a core section (106) of the three-dimensional digital tooth model (100) to be excluded from preparation (108),
determine one or more orthodontic parameters descriptive of the orthodontic adjustment of the position of the three-dimensional digital tooth model (100) with at least a part of the core section (106) of the orthodontically adjusted three-dimensional digital tooth model (100) fitting into the three-dimensional digital reduced restorative tooth model (104),
output the one or more orthodontic parameters.

14. A computer device (10) for determining one or more parameters of one or more ortho-restorative measures to be applied to a tooth, the one or more ortho-restorative measures comprising an orthodontic adjustment of a position of the tooth within a dentition,
the computer device (10) comprising a processor (16) and a memory (28) storing program instructions executable by the processor (16), execution of the program instructions by the processor (16) causing the computer device (10) to:
receive a three-dimensional digital tooth model (100), the three-dimensional digital tooth model (100) being descriptive of a current form and a current position of the tooth within the dentition,
receive a three-dimensional digital restorative tooth model (102), the three-dimensional digital restorative tooth model (102) defining a target form and a target position of the tooth to be achieved by the one or more ortho-restorative measures,
determine a three-dimensional digital reduced restorative tooth model (104) using the three-dimensional digital restorative tooth model (102), which is reduced by a predefined minimum volume (116) required for receiving a dental restoration element (122) for obtaining the target form of the tooth,
determine a core section (106) of the three-dimensional digital tooth model (100) to be excluded from preparation (108),
determine one or more orthodontic parameters descriptive of the orthodontic adjustment of the position of the three-dimensional digital tooth model (100) with at least a part of the core section (106) of the orthodontically adjusted three-dimensional digital tooth model (100) fitting into the three-dimensional digital reduced restorative tooth model (104),
output the one or more orthodontic parameters.

15. A system (11) comprising the computer device (10) of claim 14, the system (11) further comprising a manufacturing device (60, 70) configured for manufacturing a dental restoration element (122),
execution of the program instructions by the processor (16) further causing the computer device (10) to:
determine preparation parameters descriptive of a preparation (108) of the orthodontically adjusted three-dimensional digital tooth model (100) for receiving the dental restoration element (122),
generate a three-dimensional digital dental restoration model (110) defining the dental restoration element (122), the three-dimensional digital dental restoration model (110) being adjusted to the preparation parameters descriptive of the preparation (108) of the prepared orthodontically adjusted tooth (124),
execution of the program instructions by the processor (16) further causing the computer device (10) to control the manufacturing device (60, 70) to manufacture the dental restoration element (122) in form of a physical copy of the three-dimensional digital dental restoration model.

## Patentansprüche

1. Computerimplementiertes Verfahren zum Bestimmen eines oder mehrerer Parameter einer oder mehrerer auf einen Zahn anzuwendender ortho-restaurativer Maßnahmen, wobei die eine oder die mehreren ortho-restaurativen Maßnahmen eine kieferorthopädische Anpassung einer Position des Zahns innerhalb eines Gebisses umfassen,
wobei das Verfahren umfasst:
Empfangen eines dreidimensionalen digitalen Zahnmodells (100), wobei das dreidimensionale digitale Zahnmodell (100) eine aktuelle Form und eine aktuelle Position des Zahns innerhalb des Gebisses beschreibt,
Empfangen eines dreidimensionalen digitalen restaurativen Zahnmodells (102), wobei das dreidimensionale digitale restaurative Zahnmodell (102) eine Zielform und eine Zielposition des Zahns definiert, die durch die eine oder die mehreren ortho-restaurativen Maßnahmen zu erreichen sind,
Bestimmen eines dreidimensionalen digitalen reduzierten restaurativen Zahnmodells (104) unter Verwendung des dreidimensionalen digitalen restaurativen Zahnmodells (102), wobei das dreidimensionale digitale reduzierte restaurative Zahnmodell (104) um ein vordefiniertes Mindestvolumen (116) reduziert ist, das zur Aufnahme eines dentalen Restaurationselements (122) zum Erhalten der Zielform des Zahns erforderlich ist,
Bestimmen eines Kernabschnitts (106) des dreidimensionalen digitalen Zahnmodells (100), der von einer Präparation (108) auszuschließen ist,
Bestimmen eines oder mehrerer kieferorthopädischer Parameter, die die kieferorthopädische Anpassung der Position des dreidimensionalen digitalen Zahnmodells (100) beschreiben, wobei mindestens ein Teil des Kernabschnitts (106) des kieferorthopädisch angepassten dreidimensionalen digitalen Zahnmodells (100) in das dreidimensionale digitale reduzierte restaurative Zahnmodell (104) hineinpasst,
Ausgeben des einen oder der mehreren kieferorthopädischen Parameter.

2. Verfahren nach Anspruch 1, wobei die kieferorthopädische Anpassung derart bestimmt wird, dass der vollständige Kernabschnitt (106) des kieferorthopädisch angepassten dreidimensionalen digitalen Zahnmodells (100) in das dreidimensionale digitale reduzierte restaurative Zahnmodell (104) hineinpasst, oder
wobei die kieferorthopädische Anpassung derart bestimmt wird, dass ein weiterer Teil des Kernabschnitts (106) des kieferorthopädisch angepassten dreidimensionalen digitalen Zahnmodells (100) nicht in das dreidimensionale digitale reduzierte restaurative Zahnmodell (104) hineinpasst, wobei das Verfahren ferner ein Aktualisieren des dreidimensionalen digitalen reduzierten restaurativen Zahnmodells (104) durch ein angepasstes dreidimensionales digitales reduziertes restauratives Zahnmodell (104), das so angepasst ist, dass es den vollständigen Kernabschnitt (106) des kieferorthopädisch angepassten dreidimensionalen digitalen Zahnmodells (100) umfasst, sowie ein Aktualisieren des dreidimensionalen digitalen restaurativen Zahnmodells (102) durch ein angepasstes dreidimensionales digitales restauratives Zahnmodell (102), das unter Verwendung des angepassten dreidimensionalen digitalen reduzierten restaurativen Zahnmodells (104) angepasst ist, umfasst.

3. Verfahren nach einem der vorhergehenden Ansprüche, wobei das vordefinierte Mindestvolumen (116) eine Dicke (114) aufweist, die eine durch ein vordefiniertes Restaurationsmaterial des dentalen Restaurationselements (122) erforderliche Mindestmaterialstärke umfasst.

4. Verfahren nach einem der vorhergehenden Ansprüche, ferner umfassend das Bestimmen von Position und Form einer Pulpakammer des Zahns innerhalb des dreidimensionalen digitalen Zahnmodells (100), wobei die Pulpakammer in dem Kernabschnitt (106) des dreidimensionalen digitalen Zahnmodells (100) enthalten ist.

5. Verfahren nach Anspruch 4, wobei der Kernabschnitt (106) des dreidimensionalen digitalen Zahnmodells (100) ferner eine Sicherheitsschicht aus Zahnmaterial zum Schutz der Pulpakammer umfasst.

6. Verfahren nach einem der vorhergehenden Ansprüche, wobei die eine oder die mehreren ortho-restaurativen Maßnahmen eine Präparation (108) des kieferorthopädisch angepassten dreidimensionalen digitalen Zahnmodells (100) zur Aufnahme des dentalen Restaurationselements (122) umfassen, wobei das Verfahren ferner ein Bestimmen eines oder mehrerer Präparationsparameter, die die Präparation (108) des kieferorthopädisch angepassten dreidimensionalen digitalen Zahnmodells (100) beschreiben, und
ein Ausgeben des einen oder der mehreren Präparationsparameter umfasst.

7. Verfahren nach Anspruch 6, wobei die durch den einen oder die mehreren Präparationsparameter beschriebene Präparation (108) ein Entfernen eines oder mehrerer Abschnitte des kieferorthopädisch angepassten dreidimensionalen digitalen Zahnmodells (100) umfasst, die sich über das dreidimensionale digitale reduzierte restaurative Zahnmodell (104) hinauserstrecken.

8. Verfahren nach Anspruch 7, wobei die durch den einen oder die mehreren Präparationsparameter beschriebene Präparation (108) ferner ein Entfernen einer Oberflächenschicht von einem Oberflächenabschnitt des kieferorthopädisch angepassten dreidimensionalen digitalen Zahnmodells (100), der innerhalb des dreidimensionalen digitalen reduzierten restaurativen Zahnmodells (104) angeordnet ist, zum Verbessern der Haftung des dentalen Restaurationselements (122) an dem Oberflächenabschnitt umfasst, und/oder
wobei das dreidimensionale digitale Zahnmodell (100) einen oder mehrere Defekte (119) des Zahns umfasst, der durch die eine oder die mehreren auf den Zahn anzuwendenden ortho-restaurativen Maßnahmen zu reparieren ist, wobei der eine oder die mehreren Präparationsparameter ferner angepasst sind, um die Defekte (119) zu entfernen, und/oder
wobei das Bestimmen des einen oder der mehreren Präparationsparameter ferner ein Berücksichtigen einer Einschubrichtung (115) des dentalen Restaurationselements (122) auf das kieferorthopädisch angepasste dreidimensionale digitale Zahnmodell (100) umfasst.

9. Verfahren nach einem der Ansprüche 6 bis 8, ferner umfassend ein Empfangen eines dreidimensionalen digitalen Gingivamodells (120), wobei das dreidimensionale digitale Gingivamodell (120) eine aktuelle Form und eine aktuelle Position einer Gingiva um den Zahn innerhalb des Gebisses beschreibt, und
ein Anpassen der Form und der Position des dreidimensionalen digitalen Gingivamodells (120) an die kieferorthopädische Anpassung der Position des dreidimensionalen digitalen Zahnmodells (100), und/oder
ferner umfassend ein Erzeugen eines dreidimensionalen digitalen dentalen Restaurationsmodells (110), das das dentale Restaurationselement (122) definiert, wobei das dreidimensionale digitale dentale Restaurationsmodell (110) an den einen oder die mehreren Präparationsparameter angepasst ist, die die Präparation (108) des präparierten kieferorthopädisch angepassten Zahns (124) beschreiben, und
ein Ausgeben des dreidimensionalen digitalen dentalen Restaurationsmodells.

10. Verfahren nach einem der Ansprüche 6 bis 9, wobei das Bestimmen des einen oder der mehreren kieferorthopädischen Parameter der kieferorthopädischen Anpassung der Position des dreidimensionalen digitalen Zahnmodells (100) ferner ein Bestimmen einer Endposition des Kernabschnitts (106) des kieferorthopädisch angepassten dreidimensionalen digitalen Zahnmodells (100) innerhalb des dreidimensionalen digitalen reduzierten restaurativen Zahnmodells (104) umfasst.

11. Verfahren nach Anspruch 10, wobei das Bestimmen der Endposition umfasst:
wiederholtes weiteres Anpassen der Position des dreidimensionalen digitalen Zahnmodells (100) und Bestimmen eines oder mehrerer aktualisierter Präparationsparameter der Präparation (108) des weiter angepassten dreidimensionalen digitalen Zahnmodells (100), bis ein vordefiniertes Stoppkriterium für das weitere Anpassen durch die aktualisierten Präparationsparameter erfüllt wird.

12. Computerprogrammprodukt zum Bestimmen eines oder mehrerer Parameter einer oder mehrerer auf einen Zahn anzuwendender ortho-restaurativer Maßnahmen, wobei die eine oder die mehreren ortho-restaurativen Maßnahmen eine kieferorthopädische Anpassung einer Position des Zahns innerhalb eines Gebisses umfassen,
wobei das Computerprogrammprodukt ein computerlesbares Speichermedium mit darauf verkörperten Programmanweisungen umfasst, wobei die Programmanweisungen durch einen Prozessor (16) einer Computervorrichtung (10) ausführbar sind, um die Computervorrichtung (10) zu Folgendem zu veranlassen:
Empfangen eines dreidimensionalen digitalen Zahnmodells (100), wobei das dreidimensionale digitale Zahnmodell (100) eine aktuelle Form und eine aktuelle Position des Zahns innerhalb des Gebisses beschreibt,
Empfangen eines dreidimensionalen digitalen restaurativen Zahnmodells (102), wobei das dreidimensionale digitale restaurative Zahnmodell (102) eine Zielform und eine Zielposition des Zahns definiert, die durch die eine oder die mehreren ortho-restaurativen Maßnahmen zu erreichen sind,
Bestimmen eines dreidimensionalen digitalen reduzierten restaurativen Zahnmodells (104) unter Verwendung des dreidimensionalen digitalen restaurativen Zahnmodells (102), wobei das dreidimensionale digitale reduzierte restaurative Zahnmodell (104) um ein vordefiniertes Mindestvolumen (116) reduziert ist, das zur Aufnahme eines dentalen Restaurationselements (122) zum Erhalten der Zielform des Zahns erforderlich ist,
Bestimmen eines Kernabschnitts (106) des dreidimensionalen digitalen Zahnmodells (100), der von einer Präparation (108) auszuschließen ist,
Bestimmen eines oder mehrerer kieferorthopädischer Parameter, die die kieferorthopädische Anpassung der Position des dreidimensionalen digitalen Zahnmodells (100) beschreiben, wobei mindestens ein Teil des Kernabschnitts (106) des kieferorthopädisch angepassten dreidimensionalen digitalen Zahnmodells (100) in das dreidimensionale digitale reduzierte restaurative Zahnmodell (104) hineinpasst,
Ausgeben des einen oder der mehreren kieferorthopädischen Parameter.

13. Computerprogramm (42) zum Bestimmen eines oder mehrerer Parameter einer oder mehrerer auf einen Zahn anzuwendender ortho-restaurativer Maßnahmen, wobei die eine oder die mehreren ortho-restaurativen Maßnahmen eine kieferorthopädische Anpassung einer Position des Zahns innerhalb eines Gebisses umfassen,
wobei das Computerprogramm (42) Programmanweisungen umfasst, wobei die Programmanweisungen durch einen Prozessor (16) einer Computervorrichtung (10) ausführbar sind, um die Computervorrichtung (10) zu Folgendem zu veranlassen:
Empfangen eines dreidimensionalen digitalen Zahnmodells (100), wobei das dreidimensionale digitale Zahnmodell (100) eine aktuelle Form und eine aktuelle Position des Zahns innerhalb des Gebisses beschreibt,
Empfangen eines dreidimensionalen digitalen restaurativen Zahnmodells (102), wobei das dreidimensionale digitale restaurative Zahnmodell (102) eine Zielform und eine Zielposition des Zahns definiert, die durch die eine oder die mehreren ortho-restaurativen Maßnahmen zu erreichen sind,
Bestimmen eines dreidimensionalen digitalen reduzierten restaurativen Zahnmodells (104) unter Verwendung des dreidimensionalen digitalen restaurativen Zahnmodells (102), wobei das dreidimensionale digitale reduzierte restaurative Zahnmodell (104) um ein vordefiniertes Mindestvolumen (116) reduziert ist, das zur Aufnahme eines dentalen Restaurationselements (122) zum Erhalten der Zielform des Zahns erforderlich ist,
Bestimmen eines Kernabschnitts (106) des dreidimensionalen digitalen Zahnmodells (100), der von einer Präparation (108) auszuschließen ist,
Bestimmen eines oder mehrerer kieferorthopädischer Parameter, die die kieferorthopädische Anpassung der Position des dreidimensionalen digitalen Zahnmodells (100) beschreiben, wobei mindestens ein Teil des Kernabschnitts (106) des kieferorthopädisch angepassten dreidimensionalen digitalen Zahnmodells (100) in das dreidimensionale digitale reduzierte restaurative Zahnmodell (104) hineinpasst,
Ausgeben des einen oder der mehreren kieferorthopädischen Parameter.

14. Computervorrichtung (10) zum Bestimmen eines oder mehrerer Parameter einer oder mehrerer auf einen Zahn anzuwendender ortho-restaurativer Maßnahmen, wobei die eine oder die mehreren ortho-restaurativen Maßnahmen eine kieferorthopädische Anpassung einer Position des Zahns innerhalb eines Gebisses umfassen,
wobei die Computervorrichtung (10) einen Prozessor (16) und einen Speicher (28) umfasst, der durch den Prozessor (16) ausführbare Programmanweisungen speichert, wobei die Ausführung der Programmanweisungen durch den Prozessor (16) die Computervorrichtung (10) zu Folgendem veranlasst:
Empfangen eines dreidimensionalen digitalen Zahnmodells (100), wobei das dreidimensionale digitale Zahnmodell (100) eine aktuelle Form und eine aktuelle Position des Zahns innerhalb des Gebisses beschreibt,
Empfangen eines dreidimensionalen digitalen restaurativen Zahnmodells (102), wobei das dreidimensionale digitale restaurative Zahnmodell (102) eine Zielform und eine Zielposition des Zahns definiert, die durch die eine oder die mehreren ortho-restaurativen Maßnahmen zu erreichen sind,
Bestimmen eines dreidimensionalen digitalen reduzierten restaurativen Zahnmodells (104) unter Verwendung des dreidimensionalen digitalen restaurativen Zahnmodells (102), wobei das dreidimensionale digitale reduzierte restaurative Zahnmodell (104) um ein vordefiniertes Mindestvolumen (116) reduziert ist, das zur Aufnahme eines dentalen Restaurationselements (122) zum Erhalten der Zielform des Zahns erforderlich ist,
Bestimmen eines Kernabschnitts (106) des dreidimensionalen digitalen Zahnmodells (100), der von einer Präparation (108) auszuschließen ist,
Bestimmen eines oder mehrerer kieferorthopädischer Parameter, die die kieferorthopädische Anpassung der Position des dreidimensionalen digitalen Zahnmodells (100) beschreiben, wobei mindestens ein Teil des Kernabschnitts (106) des kieferorthopädisch angepassten dreidimensionalen digitalen Zahnmodells (100) in das dreidimensionale digitale reduzierte restaurative Zahnmodell (104) hineinpasst,
Ausgeben des einen oder der mehreren kieferorthopädischen Parameter.

15. System (11), umfassend die Computervorrichtung (10) nach Anspruch 14, wobei das System (11) ferner eine Herstellungsvorrichtung (60, 70) umfasst, die zur Herstellung eines dentalen Restaurationselements (122) konfiguriert ist,
wobei die Ausführung der Programmanweisungen durch den Prozessor (16) die Computervorrichtung (10) ferner zu Folgendem veranlasst:
Bestimmen von Präparationsparametern, die eine Präparation (108) des kieferorthopädisch angepassten dreidimensionalen digitalen Zahnmodells (100) zur Aufnahme des dentalen Restaurationselements (122) beschreiben,
Erzeugen eines dreidimensionalen digitalen dentalen Restaurationsmodells (110), das das dentale Restaurationselement (122) definiert, wobei das dreidimensionale digitale dentale Restaurationsmodell (110) an die Präparationsparameter angepasst ist, die die Präparation (108) des präparierten kieferorthopädisch angepassten Zahns (124) beschreiben,
wobei die Ausführung der Programmanweisungen durch den Prozessor (16) die Computervorrichtung (10) ferner dazu veranlasst, die Herstellungsvorrichtung (60, 70) zu steuern, um das dentale Restaurationselement (122) in Form einer physischen Kopie des dreidimensionalen digitalen dentalen Restaurationsmodells herzustellen.

## Revendications

1. Procédé mis en œuvre par ordinateur pour déterminer un ou plusieurs paramètres d'une ou plusieurs mesures orthorestauratives à appliquer à une dent, les une ou plusieurs mesures orthorestauratives comprenant un ajustement orthodontique d'une position de la dent dans une dentition,
le procédé comprenant :
la réception d'un modèle de dent numérique tridimensionnel (100), le modèle de dent numérique tridimensionnel (100) étant descriptif d'une forme actuelle et d'une position actuelle de la dent dans la dentition,
la réception d'un modèle de dent numérique restauratif tridimensionnel (102), le modèle de dent numérique restauratif tridimensionnel (102) définissant une forme cible et une position cible de la dent à atteindre par les une ou plusieurs mesures orthorestauratives,
la détermination d'un modèle de dent numérique restauratif réduit tridimensionnel (104) à l'aide du modèle de dent numérique restauratif tridimensionnel (102), qui est réduit d'un volume minimum prédéfini (116) requis pour recevoir un élément de restauration dentaire (122) pour obtenir la forme cible de la dent,
la détermination d'une section de noyau (106) du modèle de dent numérique tridimensionnel (100) à exclure de la préparation (108),
la détermination d'un ou plusieurs paramètres orthodontiques descriptifs de l'ajustement orthodontique de la position du modèle de dent numérique tridimensionnel (100) avec au moins une partie de la section de noyau (106) du modèle de dent numérique tridimensionnel ajusté orthodontiquement (100) s'insérant dans le modèle de dent numérique restauratif réduit tridimensionnel (104),
la sortie des un ou plusieurs paramètres orthodontiques.

2. Procédé selon la revendication 1, l'ajustement orthodontique étant déterminé avec la section de noyau complète (106) du modèle de dent numérique tridimensionnel ajusté orthodontiquement (100) s'insérant dans le modèle de dent numérique restauratif réduit tridimensionnel (104), ou
l'ajustement orthodontique étant déterminé avec une autre partie de la section de noyau (106) du modèle de dent numérique tridimensionnel ajusté orthodontiquement (100) ne s'insérant pas dans le modèle de dent numérique restauratif réduit tridimensionnel (104), le procédé comprenant en outre la mise à jour du modèle de dent numérique restauratif réduit tridimensionnel (104) par un modèle de dent numérique restauratif réduit tridimensionnel ajusté (104) qui est ajusté pour comprendre la section de noyau complète (106) du modèle de dent numérique tridimensionnel ajusté orthodontiquement (100), la mise à jour du modèle de dent numérique restauratif tridimensionnel (102) par un modèle de dent numérique restauratif tridimensionnel ajusté (102) ajusté à l'aide du modèle de dent numérique restauratif réduit tridimensionnel ajusté (104).

3. Procédé selon l'une quelconque des revendications précédentes, le volume minimum prédéfini (116) ayant une épaisseur (114) comprenant une épaisseur de matériau minimum requise par un matériau de restauration prédéfini de l'élément de restauration dentaire (122).

4. Procédé selon l'une quelconque des revendications précédentes, comprenant en outre la détermination de la position et de la forme d'une chambre de pulpe de la dent dans le modèle de dent numérique tridimensionnel (100), la chambre de pulpe étant comprise dans la section de noyau (106) du modèle de dent numérique tridimensionnel (100).

5. Procédé selon la revendication 4, la section de noyau (106) du modèle de dent numérique tridimensionnel (100) comprenant en outre une couche de sécurité de matériau de dent pour protéger la chambre de pulpe.

6. Procédé selon l'une quelconque des revendications précédentes, les une ou plusieurs mesures orthorestauratives comprenant une préparation (108) du modèle de dent numérique tridimensionnel ajusté orthodontiquement (100) pour recevoir l'élément de restauration dentaire (122), le procédé comprenant en outre la détermination d'un ou plusieurs paramètres de préparation descriptifs de la préparation (108) du modèle de dent numérique tridimensionnel ajusté orthodontiquement (100),
la sortie des un ou plusieurs paramètres de préparation.

7. Procédé selon la revendication 6, la préparation (108) décrite par les un ou plusieurs paramètres de préparation comprenant le retrait d'une ou plusieurs sections du modèle de dent numérique tridimensionnel ajusté orthodontiquement (100) s'étendant au-delà du modèle de dent numérique restauratif réduit tridimensionnel (104).

8. Procédé selon la revendication 7, la préparation (108) décrite par les un ou plusieurs paramètres de préparation comprenant en outre le retrait d'une couche de surface d'une section de surface du modèle de dent numérique tridimensionnel ajusté orthodontiquement (100) agencée dans le modèle de dent numérique restauratif réduit tridimensionnel (104) pour améliorer la liaison de l'élément de restauration dentaire (122) à la section de surface, et/ou
le modèle de dent numérique tridimensionnel (100) comprenant un ou plusieurs défauts (119) de la dent à réparer par les une ou plusieurs mesures orthorestauratives à appliquer à la dent, les un ou plusieurs paramètres de préparation étant en outre ajustés pour retirer les défauts (119), et/ou
la détermination des un ou plusieurs paramètres de préparation comprenant en outre la prise en compte d'une direction d'insertion (115) de l'élément de restauration dentaire (122) sur le modèle de dent numérique tridimensionnel ajusté orthodontiquement (100).

9. Procédé selon l'une quelconque des revendications 6 à 8, comprenant en outre la réception d'un modèle de gencive numérique tridimensionnel (120), le modèle de gencive numérique tridimensionnel (120) étant descriptif d'une forme actuelle et d'une position actuelle d'une gencive autour de la dent dans la dentition,
l'ajustement de la forme et de la position du modèle de gencive numérique tridimensionnel (120) à l'ajustement orthodontique de la position du modèle de dent numérique tridimensionnel (100), et/ou
comprenant en outre la génération d'un modèle de restauration dentaire numérique tridimensionnel (110) définissant l'élément de restauration dentaire (122), le modèle de restauration dentaire numérique tridimensionnel (110) étant ajusté aux un ou plusieurs paramètres de préparation descriptifs de la préparation (108) de la dent orthodontiquement ajustée préparée (124),
la sortie du modèle de restauration dentaire numérique tridimensionnel.

10. Procédé selon l'une quelconque des revendications 6 à 9, la détermination des un ou plusieurs paramètres orthodontiques de l'ajustement orthodontique de la position du modèle de dent numérique tridimensionnel (100) comprenant en outre la détermination d'une position finale de la section de noyau (106) du modèle de dent numérique tridimensionnel ajusté orthodontiquement (100) dans le modèle de dent numérique restauratif réduit tridimensionnel (104).

11. Procédé selon la revendication 10, la détermination de la position finale comprenant
l'ajustement supplémentaire répété de la position du modèle de dent numérique tridimensionnel (100) et la détermination d'un ou plusieurs paramètres de préparation mis à jour de la préparation (108) du modèle de dent numérique tridimensionnel ajusté supplémentaire (100), jusqu'à ce qu'un critère d'arrêt prédéfini pour l'ajustement supplémentaire soit satisfait par les paramètres de préparation mis à jour.

12. Produit de programme informatique pour déterminer un ou plusieurs paramètres d'une ou plusieurs mesures orthorestauratives à appliquer à une dent, les une ou plusieurs mesures orthorestauratives comprenant un ajustement orthodontique d'une position de la dent dans une dentition,
le produit de programme informatique comprenant un support de stockage lisible par ordinateur ayant des instructions de programme intégrées à celui-ci, les instructions de programme étant exécutables par un processeur (16) d'un dispositif informatique (10) pour amener le dispositif informatique (10) à :
recevoir un modèle de dent numérique tridimensionnel (100), le modèle de dent numérique tridimensionnel (100) étant descriptif d'une forme actuelle et d'une position actuelle de la dent dans la dentition,
recevoir un modèle de dent numérique restauratif tridimensionnel (102), le modèle de dent numérique restauratif tridimensionnel (102) définissant une forme cible et une position cible de la dent à atteindre par les une ou plusieurs mesures orthorestauratives,
déterminer un modèle de dent numérique restauratif réduit tridimensionnel (104) à l'aide du modèle de dent numérique restauratif tridimensionnel (102), qui est réduit d'un volume minimum prédéfini (116) requis pour recevoir un élément de restauration dentaire (122) pour obtenir la forme cible de la dent,
déterminer une section de noyau (106) du modèle de dent numérique tridimensionnel (100) à exclure de la préparation (108),
déterminer un ou plusieurs paramètres orthodontiques descriptifs de l'ajustement orthodontique de la position du modèle de dent numérique tridimensionnel (100) avec au moins une partie de la section de noyau (106) du modèle de dent numérique tridimensionnel ajusté orthodontiquement (100) s'insérant dans le modèle de dent numérique restauratif réduit tridimensionnel (104),
sortir les un ou plusieurs paramètres orthodontiques.

13. Programme informatique (42) pour déterminer un ou plusieurs paramètres d'une ou plusieurs mesures orthorestauratives à appliquer à une dent, les une ou plusieurs mesures orthorestauratives comprenant un ajustement orthodontique d'une position de la dent dans une dentition,
le programme informatique (42) comprenant des instructions de programme, les instructions de programme étant exécutables par un processeur (16) d'un dispositif informatique (10) pour amener le dispositif informatique (10) à :
recevoir un modèle de dent numérique tridimensionnel (100), le modèle de dent numérique tridimensionnel (100) étant descriptif d'une forme actuelle et d'une position actuelle de la dent dans la dentition,
recevoir un modèle de dent numérique restauratif tridimensionnel (102), le modèle de dent numérique restauratif tridimensionnel (102) définissant une forme cible et une position cible de la dent à atteindre par les une ou plusieurs mesures orthorestauratives,
déterminer un modèle de dent numérique restauratif réduit tridimensionnel (104) à l'aide du modèle de dent numérique restauratif tridimensionnel (102), qui est réduit d'un volume minimum prédéfini (116) requis pour recevoir un élément de restauration dentaire (122) pour obtenir la forme cible de la dent,
déterminer une section de noyau (106) du modèle de dent numérique tridimensionnel (100) à exclure de la préparation (108),
déterminer un ou plusieurs paramètres orthodontiques descriptifs de l'ajustement orthodontique de la position du modèle de dent numérique tridimensionnel (100) avec au moins une partie de la section de noyau (106) du modèle de dent numérique tridimensionnel ajusté orthodontiquement (100) s'insérant dans le modèle de dent numérique restauratif réduit tridimensionnel (104),
sortir les un ou plusieurs paramètres orthodontiques.

14. Dispositif informatique (10) pour déterminer un ou plusieurs paramètres d'une ou plusieurs mesures orthorestauratives à appliquer à une dent, les une ou plusieurs mesures orthorestauratives comprenant un ajustement orthodontique d'une position de la dent dans une dentition,
le dispositif informatique (10) comprenant un processeur (16) et une mémoire (28) stockant des instructions de programme exécutables par le processeur (16), l'exécution des instructions de programme par le processeur (16) amenant le dispositif informatique (10) à :
recevoir un modèle de dent numérique tridimensionnel (100), le modèle de dent numérique tridimensionnel (100) étant descriptif d'une forme actuelle et d'une position actuelle de la dent dans la dentition,
recevoir un modèle de dent numérique restauratif tridimensionnel (102), le modèle de dent numérique restauratif tridimensionnel (102) définissant une forme cible et une position cible de la dent à atteindre par les une ou plusieurs mesures orthorestauratives,
déterminer un modèle de dent numérique restauratif réduit tridimensionnel (104) à l'aide du modèle de dent numérique restauratif tridimensionnel (102), qui est réduit d'un volume minimum prédéfini (116) requis pour recevoir un élément de restauration dentaire (122) pour obtenir la forme cible de la dent,
déterminer une section de noyau (106) du modèle de dent numérique tridimensionnel (100) à exclure de la préparation (108),
déterminer un ou plusieurs paramètres orthodontiques descriptifs de l'ajustement orthodontique de la position du modèle de dent numérique tridimensionnel (100) avec au moins une partie de la section de noyau (106) du modèle de dent numérique tridimensionnel ajusté orthodontiquement (100) s'insérant dans le modèle de dent numérique restauratif réduit tridimensionnel (104),
sortir les un ou plusieurs paramètres orthodontiques.

15. Système (11) comprenant le dispositif informatique (10) selon la revendication 14, le système (11) comprenant en outre un dispositif de fabrication (60, 70) configuré pour fabriquer un élément de restauration dentaire (122),
l'exécution des instructions de programme par le processeur (16) amenant en outre le dispositif informatique (10) à :
déterminer des paramètres de préparation descriptifs d'une préparation (108) du modèle de dent numérique tridimensionnel ajusté orthodontiquement (100) pour recevoir l'élément de restauration dentaire (122),
générer un modèle de restauration dentaire numérique tridimensionnel (110) définissant l'élément de restauration dentaire (122), le modèle de restauration dentaire numérique tridimensionnel (110) étant ajusté aux paramètres de préparation descriptifs de la préparation (108) de la dent orthodontiquement ajustée préparée (124),
l'exécution des instructions de programme par le processeur (16) amenant en outre le dispositif informatique (10) à commander le dispositif de fabrication (60, 70) pour fabriquer l'élément de restauration dentaire (122) sous la forme d'une copie physique du modèle de restauration dentaire numérique tridimensionnel.
